# EUROPEAN PATENT APPLICATION

(11) **EP 2 105 276 A2**
(43) Date of publication of application: **30.09.2009**
(21) Application number: 09003824.1
(22) Date of filing: 17.03.2009
(51) Int. Cl.: B29C 45/30, B29C 45/00

(54) **Resin molding method, resing molded product, and mold**

(30) Priority: 25.03.2008 JP 2008077589
(71) Applicant: TOKAI RUBBER INDUSTRIES, LTD., Komaki-shi, Aichi-ken,485-8550 (JP)
(72) Inventor: Suzuki, Junichiro, Komaki-shi Aichi-ken 485-8550 (JP); Murayama, Masaru, Komaki-shi Aichi-ken 485-8550 (JP)
(74) Representative: Kuhnen & Wacker

(57) **Abstract**

A resin molding method includes: a mold clamping process that clamps a mold, forms a resin flow path, and arranges baffle members in the resin flow path; an injection process that injects a molten resin containing a base material and an anisotropic filler dispersed in the base material from a nozzle into the resin flow path to correct a variation in flow rate of the molten resin on the upstream side of the baffle members and to form a weld on the downstream side of the baffle members by using the baffle members obstructing a flow of the molten resin so that orientation of the filler in the direction in which the weld extends is improved; and a mold opening process that opens the mold so as to take out a resin molded product.

## Description

### BACKGROUND OF THE INVENTION

### 1. Field of the Invention

The present invention relates to a resin molding method, a resin molded product, and a mold that use, as a raw material, molten resin composed of a base material compounded with a filler.

### 2. Description of the Related Art

A resin molding method in which a weld is intentionally generated is disclosed in Japanese Patent Application Publication No. JP-A-8-142218. According to the resin molding method disclosed in the above-mentioned document, a baffle member is arranged in a resin flow path. In addition, a molten resin that is injected into the resin flow path contains fibers. In the resin flow path, a flow of the molten resin collides against the baffle member and branches. The fronts of the once branched flows meet each other again to form a weld. Here, the fibers in the molten resin are oriented along the direction in which the weld extends. As a result, according to the resin molding method disclosed in the above-mentioned document, a resin molded product can be improved in tensile strength and bending strength with respect to the direction in which the weld extends. Japanese Patent Application Publications No. JP-A-2003-231156 and No. JP-A-10-34762 disclose resin molding methods for orienting fibers in a molten resin by generating a weld in a similar manner to the method disclosed in the Japanese Patent Application Publication No. JP-A-8-142218.

However, the resin molding methods disclosed in the Japanese Patent Application Publications No. JP-A-8-142218, No. JP-A-2003-231156, and No. JP-A-10-34762 have provided insufficient orientation of fibers. In other words, a flow rate of the molten resin is not necessarily constant. The flow rate of the molten resin tends to change due to, for example, variations in flow path cross-sectional area and flow path cross-sectional shape of the resin flow path.

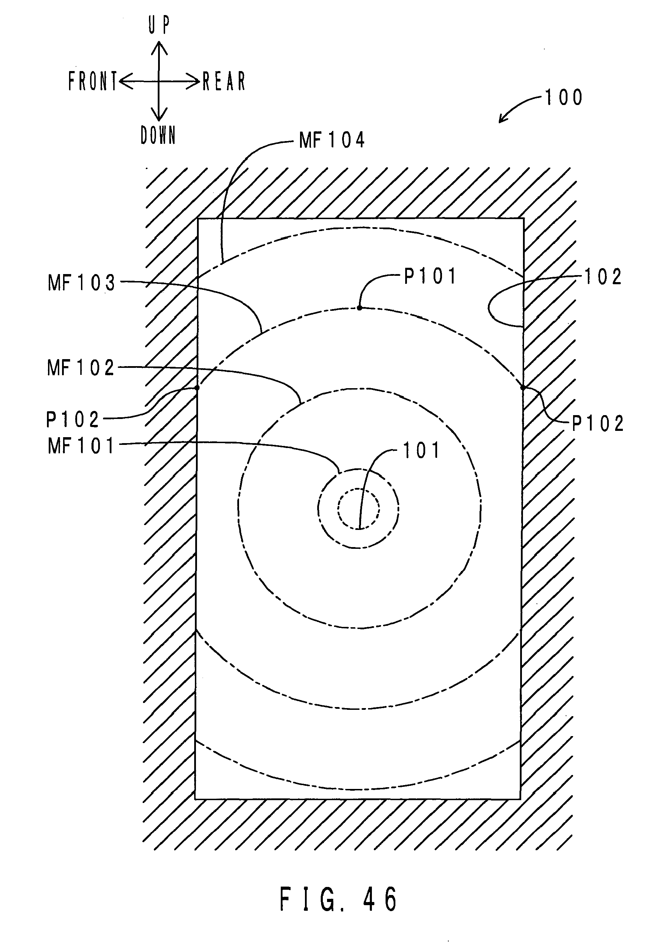

FIG. 46 shows a cross-sectional view taken in the up-down direction of a mold used in a related art resin molding method. As shown in FIG. 46, a mold 100 has a gate 101 and a cavity 102. The gate 101 is arranged in a fixed die (not shown) of the mold 100. The gate 101 is arranged substantially in the center in the up-down direction of the cavity 102. The cross section of the gate 101 has substantially a perfect circle shape. As a result, the flow front of the molten resin flowing from the gate 101 into the cavity 102 spreads substantially concentrically around the gate 101 serving substantially as a center, from flow front MF101 to flow front MF 102, to flow front MF 103, and then to flow front MF104.

However, if the fibers are intended to be oriented in the longitudinal direction of the cavity 102 (in the up-down direction of the figure), the direction in which the molten resin spreads in the cavity 102 does not coincide with the desired direction of the fiber orientation. Consequently, when viewed with reference to the desired direction of the fiber orientation, the flow rate of the molten resin is fastest at a center P101 in the front-rear direction, which is nearest to the gate 101, and slowest at both ends P102 in the front-rear direction, which are farthest from the gate 101.

In this case, the variation in the flow rate of the molten resin cannot be corrected even by arranging the baffle members at random in the cavity 102. What is even worse, the variation in the flow rate of the molten resin can be made even greater.

If the variation in the flow rate of the molten resin is large, on the downstream side of the baffle members, the flow fronts of the branched molten resin do not form a line in the direction (front-rear direction in the figure) substantially perpendicular to the desired direction (up-down direction in the figure) of the fiber orientation. As a result, when the flow fronts meet each other, the orientation of the fibers can be disturbed by the difference in the flow rate.

### SUMMARY OF THE INVENTION

A resin molding method, a resin molded product, and a mold according to the present invention have been completed in view of the problem described above. Thus, it is an object of the present invention to provide a resin molding method, a resin molded product, and a mold that are capable of improving the orientation of a filler such as fibers.

(1) In order to solve the problem described above, according to a first aspect of the present invention, a resin molding method includes: a mold clamping process that clamps a mold so as to form a resin flow path having a gate arranged on the downstream side of a nozzle of a molding machine and having a cavity arranged on the downstream side of the gate and to arrange a baffle member in the resin flow path; an injection process that injects, from the nozzle into the resin flow path, a molten resin containing a base material and an anisotropic filler dispersed in the base material to correct a variation in flow rate of the molten resin on the upstream side of the baffle member and to form a weld on the downstream side of the baffle member by using the baffle member obstructing a flow of the molten resin so that orientation of the filler in the direction in which the weld extends is improved; and a mold opening process that opens the mold so as to take out a resin molded product formed by solidifying the molten resin.

In the injection process, the baffle member can correct the variation in the flow rate of the molten resin on the upstream side of the baffle member. In addition, the once branched flows (not necessarily completely separated flows) of the molten resin meet each other again so that a weld on the downstream side of the baffle member can be formed. According to the resin molding method of the present aspect, the flow rate differences among the plurality of branched flow fronts are reduced. As a result, the orientation of the filler in the injection process can be improved. Consequently, the resin molded product can be reinforced in the direction of the orientation of the filler.

Besides, the orientation of the filler has heretofore tended to be high in the vicinity of the mold surface of the cavity (that is, in the vicinity of the surface of the resin molded product) and low inside the cavity (that is, inside the resin molded product). In this regard, according to the resin molding method of the present aspect, the orientation of the filler can be made high not only in the vicinity of the mold surface of the cavity but also in the vicinity of the weld. As a result, the orientation of the filler can also be made high inside the cavity (that is, inside the resin molded product). Consequently, the resin molding method of the present aspect is suitable for molding a resin molded product of a large wall thickness. The resin molding method of the present aspect is also suitable for molding a resin molded product of which a high strength (for example, tensile strength or bending strength) is required.

(2) According to a second aspect of the present invention, the resin molding method based on the configuration of (1) described above preferably has a configuration in which: a plurality of the baffle members are juxtaposed in a direction intersecting with the flow path direction of the resin flow path; on the upstream side of the baffle members, the flow of the molten resin includes a fastest portion in which the flow rate in the flow path direction is the largest and a slowest portion in which the flow rate in the flow path direction is the smallest; and clearances between at least parts of pairs of the adjacent baffle members are set such that a clearance at a portion nearest to the fastest portion is smaller than that at a portion nearest to the slowest portion.

In the flow of the molten resin, the largest flow rate difference occurs between the fastest portion and the slowest portion. Corresponding to this, the clearances between at least parts of pairs of the adjacent baffle members among the plurality of baffle members are set such that the clearance at the portion nearest to the fastest portion is smaller than that at the portion nearest to the slowest portion.

With this configuration, when the flow of the molten resin passes through the portion of the resin flow path, in which the baffle members is arranged, the fastest portion receives a larger flow resistance than the slowest portion from the baffle members. Therefore, the flow front of the fastest portion and the flow front of the slowest portion that have the largest flow rate difference therebetween can be easily aligned in a row on the downstream side of the baffle members. Consequently, the orientation of the filler in the injection process can be further improved. Moreover, the resin molded product can be further reinforced in the direction of orientation of the filler.

(2-1) Preferably, in the configuration of (2) described above, the clearances between at least parts of pairs of the adjacent baffle members are set such that the clearance at the portion nearest to the fastest portion is the smallest and the clearance at the portion nearest to the slowest portion is the largest.

With this configuration, when the flow of the molten resin passes through the portion of the resin flow path, in which the baffle members are arranged, the fastest portion and the slowest portion receive the largest flow resistance and the smallest flow resistance, respectively, from the baffle members. Therefore, the variation in the flow rate of the molten resin can be further corrected. Consequently, the orientation of the filler in the injection process can be further improved. Moreover, the resin molded product can be further reinforced in the direction of orientation of the filler.

(2-2) Preferably, in the configuration of (2) described above, at least parts of the baffle members are at least the upstream ends of the baffle members. With this configuration, the clearances between at least the upstream ends of pairs of the adjacent baffle members are set such that the clearance at the portion nearest to the fastest portion is smaller than that at the portion nearest to the slowest portion. The upstream ends are the points first reached by the flow of the molten resin when the flow of the molten resin approaches the portion of the resin flow path in which the baffle members are arranged. Therefore, if the clearances between the upstream ends of pairs of the adjacent baffle members are set such that the clearance at the portion nearest to the fastest portion is smaller than that at the portion nearest to the slowest portion, the flow enters between the baffle members less easily at the fastest portion than at the slowest portion. Consequently, the variation in the flow rate of the molten resin can be further corrected. In addition, because the flow rate difference can be corrected at the upstream ends, the length in the flow path direction of the baffle members can be reduced.

(3) According to a third aspect of the present invention, the resin molding method based on the configuration of (2) described above preferably has a configuration in which the portion of the resin flow path where the plurality of baffle members are arranged has a length of 20 mm or more in the direction of juxtaposition of the plurality of baffle members. That is, in this configuration, the length of the portion of the resin flow path in which the plurality of baffle members are arranged is set to 20 mm or more in the direction in which the baffle members are juxtaposed (that is, in a direction intersecting with the flow path direction).

Here, the reason why the length of the portion of the resin flow path in which the plurality of baffle members are juxtaposed is set to 20 mm or more in the direction of juxtaposition of the baffle members is that, if the length is less than 20 mm, a flow rate difference correction effect produced by adjusting clearances between at least parts of pairs of the adjacent baffle members is difficult to be exerted because the flow rate difference between the fastest portion and the slowest portion is comparatively small on the upstream side of the portion arranged with the baffle members.

(3-1) Preferably, in the configuration of (3) described above, the portion of the resin flow path in which the plurality of baffle members are arranged has a length of 25 mm or more in the direction of juxtaposition of the plurality of baffle members. In this case, the flow rate difference between the fastest portion and the slowest portion on the upstream side of the portion in which the baffle members are arranged still tends to be large. Consequently, the flow rate difference correction effect can be even easier to exerted.

(4) According to a fourth aspect of the present invention, the resin molding method based on the configuration of (1) described above preferably has a configuration in which: a plurality of the baffle members are juxtaposed in a direction intersecting with the flow path direction of the resin flow path and clearances between at least parts of pairs of the adjacent baffle members are set so as to be substantially equal to each other; and on the upstream side of the plurality of baffle members in the resin flow path, at least an upstream end of an orifice member that extends in the direction of juxtaposition of the plurality of baffle members and that corrects the variation in flow rate of the molten resin prior to the baffle members is arranged.

With this configuration, the variation in the flow rate of the molten resin can be corrected at the upstream end of the orifice member and at the baffle members in this order from the upstream side to the downstream side. Therefore, the variation in the flow rate of the molten resin can be reduced even if the clearances between at least parts of pairs of the adjacent baffle members are set so as to be substantially equal to each other. Consequently, the orientation of the filler in the injection process can be improved. Moreover, the resin molded product can be reinforced in the direction of the orientation of the filler.

(4-1) Preferably, in the configuration of (4) described above, at least parts of the baffle members are at least the upstream ends of the baffle members. With this configuration, the clearances between at least the upstream ends of pairs of the adjacent baffle members are set so as to be substantially equal to each other. The upstream ends are the points first reached by the flow of the molten resin when the flow of the molten resin approaches the portion of the resin flow path in which the baffle members are arranged. Therefore, if the clearances between the upstream ends of pairs of the adjacent baffle members are set so as to be substantially equal to each other, the length in the flow path direction of the baffle members can be reduced.

(5) According to a fifth aspect of the present invention, the resin molding method based on the configuration of (1) described above preferably has a configuration in which: a plurality of the baffle members are juxtaposed in a direction intersecting with the flow path direction of the resin flow path and clearances between at least parts of pairs of the adjacent baffle members are set so as to be substantially equal to each other; and the portion of the resin flow path in which the plurality of baffle members are arranged has a length of less than 20 mm in the direction of juxtaposition of the plurality of baffle members.

If the length of the portion of the resin flow path in which the plurality of baffle members are arranged is less than 20 mm in the direction of juxtaposition of the baffle members, the variation in the flow rate of the molten resin is comparatively small on the upstream side of the portion in which the baffle members are arranged. Therefore, the variation in the flow rate of the molten resin can be reduced even if the clearances between at least parts of pairs of the adjacent baffle members are set so as to be substantially equal to each other. Consequently, the orientation of the filler in the injection process can be improved. Moreover, the resin molded product can be reinforced in the direction of the orientation of the filler.

Here, the reason why the length of the portion in the resin flow path in which the plurality of baffle members are arranged is set to less than 20 mm in the direction of juxtaposition of the baffle members is that, if the length is 20 mm or more, the variation in the flow rate is difficult to be corrected in the case in which the clearances between at least parts of pairs of the adjacent baffle members are set so as to be substantially equal to each other, because the variation in the flow rate of the molten resin is comparatively large on the upstream side of the portion in which the baffle members are arranged.

(5-1) Preferably, in the configuration of (5) described above, the portion of the resin flow path in which the plurality of baffle members are arranged has a length of less than 15 mm in the direction of juxtaposition of the plurality of baffle members. In this case, the variation in the flow rate of the molten resin on the upstream side of the portion in which the baffle members are arranged is further reduced. Therefore, the variation in the flow rate of the molten resin can be made sufficiently small even if the clearances between at least parts of pairs of the adjacent baffle members are set so as to be substantially equal to each other.

(5-2) Preferably, in the configuration of (5) described above, at least parts of the baffle members are at least the upstream ends of the baffle members. With this configuration, the clearances between at least the upstream ends of pairs of the adjacent baffle members are set so as to be substantially equal to each other. The upstream ends are the points first reached by the flow of the molten resin when the flow of the molten resin approaches the portion of the resin flow path in which the baffle members are arranged. Therefore, if the clearances between the upstream ends of the pairs of the adjacent baffle members are set so as to be substantially equal to each other, the length in the flow path direction of the baffle members can be reduced.

(6) According to a sixth aspect of the present invention, the resin molding method based on the configuration of any one of (1) to (5) described above preferably has a configuration in which: the resin flow path has an expanding portion with a flow path cross-sectional area that increases from the upstream side to the downstream side; and the baffle member is arranged on the downstream side of the expanding portion.

The flow of the molten resin spreads when it passes through the expanding portion (for example, in FIG. 46, the molten resin spreads when it passes through the gate 101).
As a result, on the downstream side of the expanding portion, the flow rate distribution of the molten resin tends to vary in the direction substantially perpendicular to the flow path direction.

In this regard, the baffle member is arranged on the downstream side (however, not necessarily immediately downstream) of the expanding portion, with the configuration. Therefore, the variation in the flow rate of the molten resin generated by the flow passing through the expanding portion can be corrected by the baffle member.

(6-1) Preferably, in the configuration of (6) described above, the baffle member is arranged immediately downstream of the expanding portion in the flow path direction. With this configuration, the variation in the flow rate of the molten resin generated by the flow passing through the expanding portion can be corrected quickly by the baffle member.

(7) According to a seventh aspect of the present invention, the resin molding method based on the configuration of (6) described above preferably has a configuration in which the expanding portion and the baffle member are arranged on the upstream side of the gate. With this configuration, the expanding portion and the baffle member are arranged on the upstream side of the gate. Therefore, compared with the case in which the expanding portion and the baffle member are arranged on the downstream side of the gate, the shapes of the expanding portion and the baffle member are difficult to appear on the resin molded product after molding. Consequently, the resin molded product has a high degree of freedom in defining the shape thereof. In addition, with this configuration, the orientation of the filler can be improved over the entire resin molded product. As a result, the entire resin molded product can be reinforced.

(8) According to an eighth aspect of the present invention, the resin molding method based on the configuration of (7) described above preferably has a configuration in which an orifice member is arranged between the expanding portion and the baffle members, the orifice member extending in the direction of juxtaposition of the plurality of baffle members and correcting, prior to the baffle members, the variation in flow rate caused by spread of the flow of the molten resin while passing through the expanding portion.

With this configuration, the flow of the molten resin can be sufficiently spread over the plurality of baffle members. In addition, the variation in the flow rate of the molten resin can be corrected prior to the baffle members. As a result, the variation in the flow rate of the molten resin can be further corrected.

(9) According to a ninth aspect of the present invention, the resin molding method based on the configuration of (7) or (8) described above preferably has a configuration in which: the gate is connected to the cavity in a direction intersecting with the direction in which a communicating portion of the gate extends in the cavity; and the flow of the molten resin branches into a plurality of flows when the molten resin flows from the gate into the cavity.

With this configuration, the gate can be arranged at a desired position relative to the cavity. Therefore, in the resin molded product, a gate cut trace can be arranged in a portion in which stress concentration hardly occurs. That is, the orientation of the filler can be improved over the entire resin molded product, as well as the gate cut trace can be arranged in a portion avoiding stress concentration areas.

(9-1) Preferably, in the configuration of (9) described above, the gate is connected to the cavity substantially perpendicularly to the direction in which the communicating portion of the gate extends in the cavity.

With this configuration, the flow of the molten resin that has flowed into the cavity can be made collide with the mold surface of the cavity (specifically, the mold surface which faces to the mold surface where the gate is connected), with the surface of another member for insert arranged in the cavity or the like, in a substantially perpendicular direction. Therefore, the flow of the molten resin can be easily branched into two flows.

(10) According to a tenth aspect of the present invention, the resin molding method based on the configuration of any one of (1) to (6) described above preferably has a configuration in which: the resin molded product includes a reinforced portion having a desired strength; the cavity includes a molding portion for reinforced portion that molds the reinforced portion; and the baffle member is arranged on the upstream side of the molding portion for reinforced portion provided in the cavity. With this configuration, the orientation of the filler in the molding portion for reinforced portion can be further improved. Therefore, the reinforced portion of the resin molded product can easily be further reinforced.

(11) According to an eleventh aspect of the present invention, the resin molding method based on the configuration of any one of (1) to (10) described above preferably has a configuration in which: the resin flow path has, on the downstream side of the baffle member, a changing portion in which a flow path cross-sectional area changes; and a flow regulating member that corrects a disturbance in the flow of the molten resin caused by passing through the changing portion is arranged on the downstream side of the changing portion.

In the changing portion, the flow path cross-sectional area changes. As a result, the flow of the molten resin may be disturbed when it passes through the changing portion. If the flow of the molten resin is disturbed, the flow rate of the molten resin may vary even on the downstream side of the baffle member. Consequently, the orientation of the filler is made difficult to be improved.

In this regard, the disturbance in the flow of the molten resin can be corrected by the flow regulating member, with the configuration. Therefore, the orientation of the filler can be improved regardless of the shape of the resin flow path. As a result, the resin molded product can be reinforced regardless of the shape thereof.

(12) In order to solve the problem described above, according to a twelfth aspect of the present invention, a resin molded product is molded by the resin molding method of any one of (1) to (11) described above, and includes a plurality of the welds.

The resin molded product according to the present aspect includes the plurality of welds. At least a part of the filler is oriented along the direction in which the welds extend. As a result, the strengths such as tensile strength and bending strength can be increased with respect to the direction in which the welds extend.

(13) In order to solve the problem described above, according to a thirteenth aspect of the present invention, a mold is used for the resin molding method of any one of (1) to (11) described above, and includes the resin flow path and the baffle member.

By arranging the baffle member in the mold, the variation in the flow rate of the molten resin on the upstream side of the baffle member can be corrected. In addition, the once branched flows (not necessarily completely separated flows) of the molten resin meet each other again so that the weld can be formed on the downstream side of the baffle member. With the mold of the present aspect, the flow rate differences among the plurality of branched flow fronts are reduced. As a result, the orientation of the filler can be improved. Consequently, the resin molded product can be reinforced in the direction of the orientation of the filler.

(14) According to a fourteenth aspect of the present invention, it is preferable that the mold based on the configuration of (13) described above further includes a slide core for baffle member that has the baffle member. With this configuration, the baffle member can hardly be undercut during the mold opening process. Consequently, the resin molded product can be taken out easily.

(14-1) Preferably, in the configuration of (14) described above, a single piece of the slide core for baffle member has a plurality of the baffle members. By this, the mold has a simple structure. In addition, the mold clamping process and the mold opening process can be performed more quickly.

According to some aspects of the present invention, a resin molding method, a resin molded product, and a mold can be provided that are capable of improving the orientation of a filler.

### BRIEF DESCRIPTION OF THE DRAWINGS

FIG. 1 is a perspective view of a mold in the mold open state according to a first embodiment of the present invention;
FIG. 2 is a perspective view of the same mold in the mold clamped state;
FIG. 3 is a cross-sectional view in the direction of arrows III-III of FIG. 2;
FIG. 4 is a cross-sectional view in the direction of arrows IV-IV of FIG. 2;
FIG. 5 is an enlarged view in frame V of FIG. 4;
FIG. 6 is a right view of a movable die of the same mold in the mold clamped state;
FIG. 7 is an enlarged view in circle VII of FIG. 6;
FIG. 8 is a perspective view of an intermediate molded product formed in the movable die in the mold open state;
FIG. 9 is a perspective view of a resin molded product according to the first embodiment;
FIG. 10 is a cross-sectional view in the direction of arrows X-X of FIG. 9;
FIG. 11 is a cross-sectional view taken in the front-rear direction in the vicinity of baffle members of a mold in the mold clamped state according to a second embodiment of the present invention;
FIG. 12 is a perspective view of a mold in the mold open state according to a third embodiment of the present invention;
FIG. 13 is a perspective view of the same mold in the mold clamped state;
FIG. 14 is a right view of a movable die of the same mold in the mold clamped state;
FIG. 15 is an enlarged view in frame XV of FIG. 14;
FIG. 16 is a perspective view of a resin molded product according to the third embodiment;
FIG. 17 is a cross-sectional view taken in the up-down direction of a mold in the mold clamped state according to a fourth embodiment of the present invention;
FIG. 18 is a perspective view of a resin molded product according to the fourth embodiment;
FIG. 19 is a perspective view of a movable die of a mold according to a fifth embodiment of the present invention;
FIG. 20 is a cross-sectional view in the direction of arrows XX-XX of FIG. 19;
FIG. 21 is a perspective view of a mold in the mold open state according to a sixth embodiment of the present invention;
FIG. 22 is a perspective view of the same mold in the mold clamped state;
FIG. 23 is a right view of a movable die of the same mold in the mold clamped state;
FIG. 24 is a perspective view of a resin molded product according to the sixth embodiment;
FIG. 25 is a perspective view of a mold in the mold open state according to a seventh embodiment of the present invention;
FIG. 26 is a perspective view of the same mold in the mold clamped state;
FIG. 27 is a right view of a movable die of the same mold in the mold clamped state;
FIG. 28 is a perspective view of a resin molded product according to the seventh embodiment;
FIG. 29 is a perspective view of a mold in the mold open state according to an eighth embodiment of the present invention;
FIG. 30 is a perspective view of the same mold in the mold clamped state;
FIG. 31 is a cross-sectional view in the direction of arrows XXXI-XXXI of FIG. 30;
FIG. 32 is an enlarged view in frame XXXII of FIG. 31;
FIG. 33 is a perspective view of a resin molded product according to the eighth embodiment;
FIG. 34 is a perspective view of a mold in the mold open state according to a ninth embodiment of the present invention;
FIG. 35 is a perspective view of a movable die of the same mold in the mold clamped state;
FIG. 36 is a right view of the same movable die in the mold clamped state;
FIG. 37 is a perspective view of an engine mount according to the ninth embodiment;
FIG. 38 is a perspective view of a mold in the mold open state according to a tenth embodiment of the present invention;
FIG. 39 is a perspective view of the same mold in the mold clamped state;
FIG. 40 is a cross-sectional view in the direction of arrows XL-XL of FIG. 39;
FIG. 41 is a perspective view of a resin molded product according to the tenth embodiment;
FIG. 42 is a perspective view of a resin molded product in the case in which the third embodiment and the eighth embodiment are combined;
FIG. 43A is a perspective view of a fiber type filler;
FIG. 43B is a perspective view of a thin-plate type filler;
FIG. 43C is a perspective view of an ellipsoid type filler;
FIG. 44A is a perspective view of a baffle member with substantially a perfect circle cross section;
FIG. 44B is a perspective view of a baffle member with a long circular cross section;
FIG. 44C is a perspective view of a baffle member with a waterdrop-shaped cross section;
FIG. 45 is a perspective view of a sample of a third example; and
FIG. 46 is a cross-sectional view taken in the up-down direction of a mold used in a related art resin molding method.

### DETAILED DESCRIPTION OF THE PREFERRED EMBODIMENTS

Embodiments of a resin molding method, a resin molded product, and a mold according to the present invention will be described below.

### First Embodiment

### Mold

First, the mold according to a first embodiment of the present invention will be described.

### Configuration of Mold

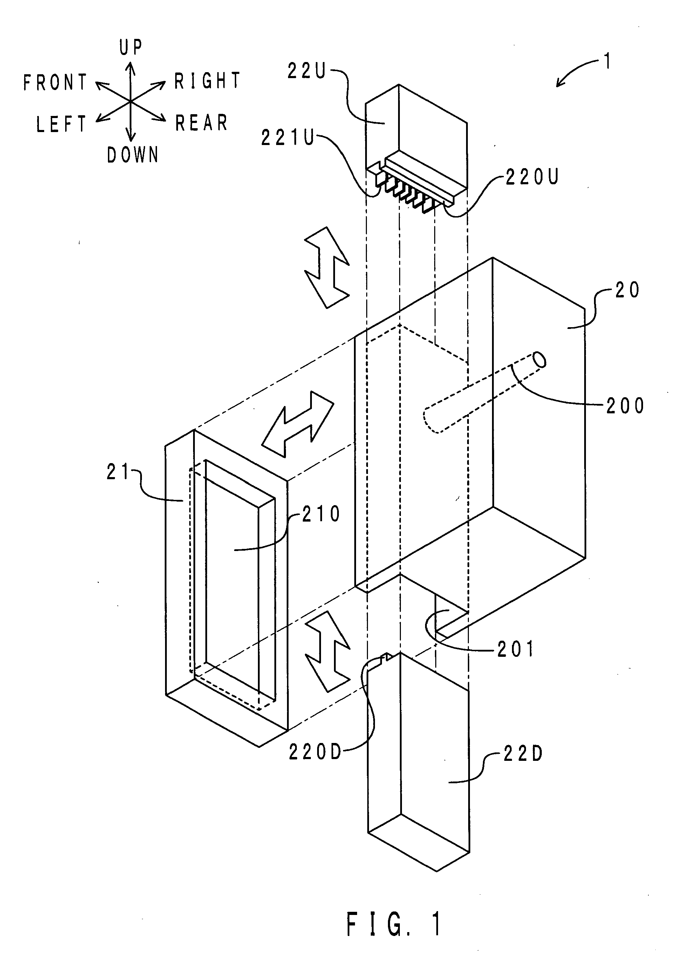

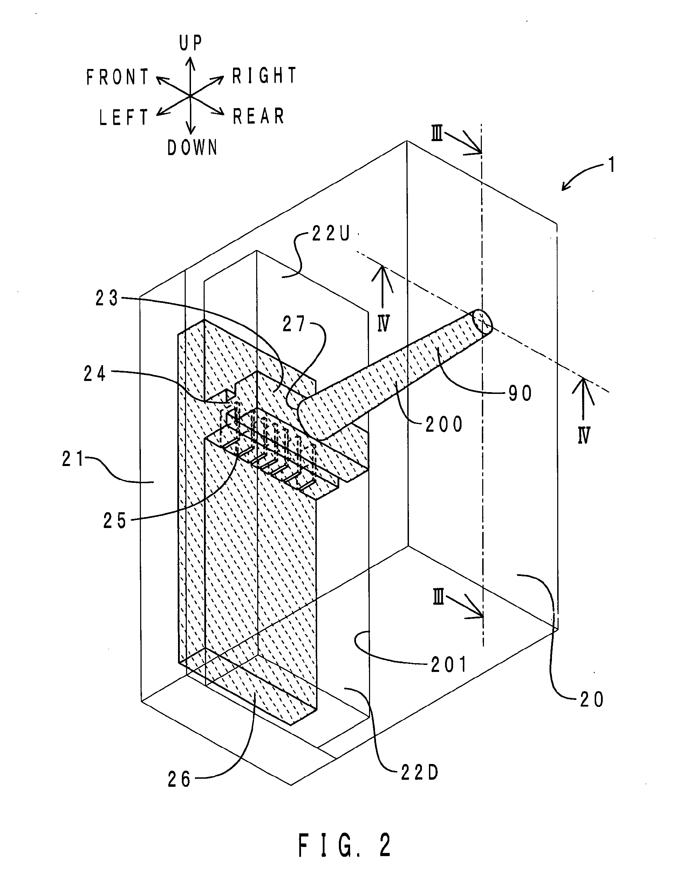

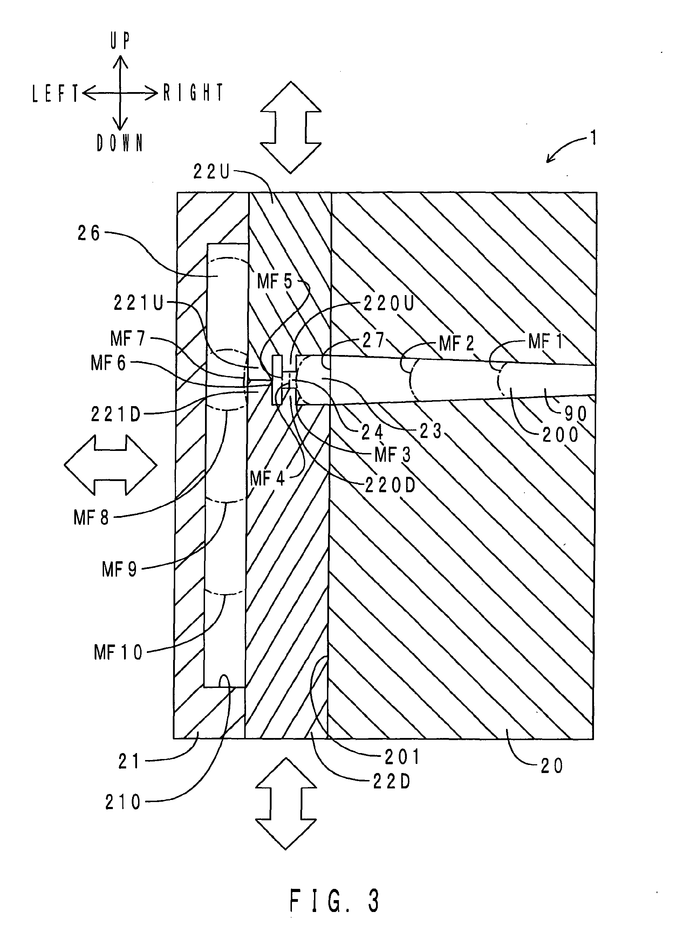

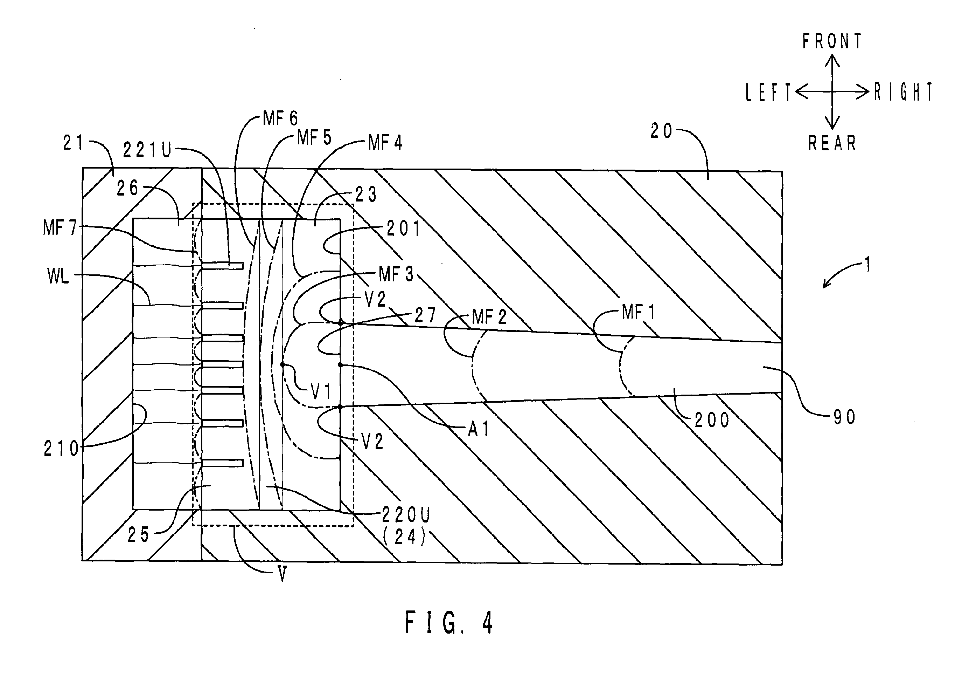

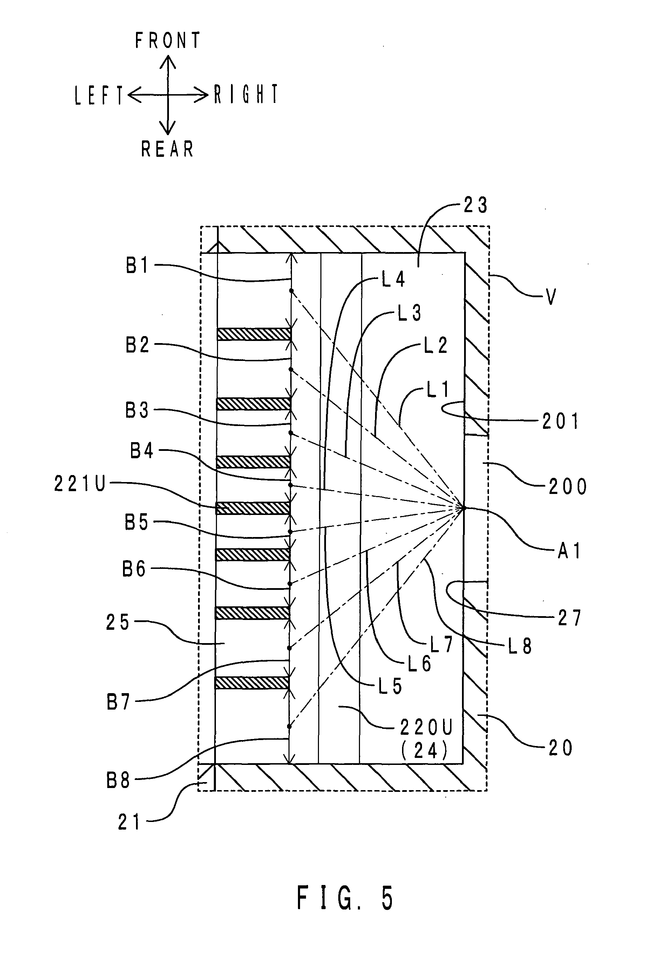

First, a configuration of the mold will be described. FIG. 1 shows a perspective view of a mold of the present embodiment in a mold open state. FIG. 2 shows a perspective view of the same mold in a mold clamped state. FIG. 3 shows a cross-sectional view in the direction of arrows III-III of FIG. 2. FIG. 4 shows a cross-sectional view in the direction of arrows IV-IV of FIG. 2. FIG. 5 shows an enlarged view in frame V of FIG. 4. As shown in FIGS. 1 to 5, a mold 1 has a fixed die 20, a movable die 21, and slide cores 22U and 22D for baffle members.

The fixed die 20 is made of chromium molybdenum steel, and has a rectangular parallelepiped block shape. The fixed die 20 is formed with a sprue 200 and a recessed portion 201 for slide core. The recessed portion 201 for slide core is provided on the left surface of the fixed die 20. The recessed portion 201 for slide core extends in the up-down direction. The cross section of the recessed portion 201 for slide core has a rectangular shape.

The sprue 200 is formed at a portion of the right surface of the fixed die 20 higher than the center thereof. The sprue 200 extends from the right surface of the fixed die 20 to the right bottom surface of the recessed portion 201 for slide core. That is, the sprue 200 and the recessed portion 201 for slide core are communicated with each other. An expanding portion 27 is arranged at the left end of the sprue 200, that is, at the boundary between the sprue 200 and the recessed portion 201 for slide core. The cross section of the sprue 200 has substantially a perfect circle shape. The sprue 200 has a tapered hole shape that gently tapers from left to right. The right end of the sprue 200 is communicated with a nozzle of a molding machine (not shown).

The movable die 21 is made of chromium molybdenum steel, and has a rectangular plate shape. The movable die 21 is arranged on the left of the fixed die 20. The movable die 21 is capable of contacting or separating from the fixed die 20 in the left-right direction. A recessed portion 210 for cavity is provided on the right surface of the movable die 21. The recessed portion 210 for cavity has a shallow bottom, and has a rectangular shape.

The slide core 22U for baffle members is made of chromium molybdenum steel, and has a rectangular parallelepiped block shape. The slide core 22U for baffle members is capable of approaching from and receding to the above, relative to the recessed portion 201 for slide core of the fixed die 20. The lower surface of the slide core 22U for baffle members is integrally formed with orifice member 220U and baffle members 221U.

The orifice member 220U is provided so as to protrude downward from the lower surface of the slide core 22U for baffle members. The orifice member 220U extends in the front-rear direction. The cross section of the orifice member 220U has a rectangular shape.

The baffle members 221 U are provided so as to protrude downward from the lower surface of the slide core 22U for baffle members. The baffle members 221U are arranged on the left of the orifice member 220U. The baffle members 221U have a rectangular plate shape. The baffle members 221 U extend in the left-right direction. A total of seven baffle members 221U are juxtaposed in the front-rear direction.

The slide core 22D for baffle members is made of the same material and has the same configuration as the above-described slide core 22U for baffle members. The slide core 22D for baffle members is arranged symmetrically in the up-down direction to the slide core 22U for baffle members with respect to the sprue 200. In other words, the slide core 22D for baffle members is capable of approaching from and receding below, relative to the recessed portion 201 for slide core of the fixed die 20. The upper surface of the slide core 22D for baffle members is integrally formed with orifice member 220D and seven baffle members 221D. The orifice member 220D faces the above-described orifice member 220U in the up-down direction, and the seven baffle members 221 D face the above-described seven baffle members 221 U in the up-down direction.

In the mold open state, as shown in FIG. 1, the movable die 21, the slide core 22U for baffle members, and the slide core 22D for baffle members are spaced leftward, upward, and downward, respectively, apart from the fixed die 20.

In the mold clamped state, as shown in FIG. 2, the left surface of the fixed die 20 and the right surface of the movable die 21 are in contact with each other. In addition, the slide core 22U for baffle members and the slide core 22D for baffle members enter from above and below, respectively, into the recessed portion 201 for slide core of the fixed die 20. As shown in FIG. 3, the orifice member 220U and the orifice member 220D are arranged apart from each other in the up-down direction at a predetermined distance. The lower end surface of each of the seven baffle members 221U and the upper end surface of each of the seven baffle members 221D are in contact with each other.

### Clearances Between Baffle Members

Next, clearances between the seven baffle members 221U will be described. As shown in FIG. 5, clearances B2 to B7 between pairs of the adjacent baffle members 221U (hatched for convenience of description), a clearance B1 between the front surface of the recessed portion 201 for slide core and the baffle member 221U, and a clearance B8 between the rear surface of the recessed portion 201 for slide core and the baffle member 221U are set so as to be unequal to each other. Specifically, the clearances B1 to B8 are set so that (B1 = B8) > (B2 = B7) > (B3 = B6) > (B4 = B5). Note that the clearances B1 to B8 correspond to gate widths of eight gates 25, which are described later.

Similarly, center-to-center distances L1 to L8 from a center A1 of the expanding portion 27 to centers of the clearances B1 to B8 are also unequal to each other. Specifically, the center-to-center distances L1 to L8 are related so that (L1 = L8) > (L2 = L7) > (L3 = L6) > (L4 = L5). More specifically, the clearances B1 to B8 are set such that the clearance whose corresponding center-to-center distance is longer, that is, whose distance from the expanding portion 27 is longer, has a wider width. Note that clearances between the seven baffle members 221D are set in the same way as the clearances between the seven baffle members 221 U.

### Configuration of Resin Flow Path

Next, a configuration of a resin flow path that is formed in the mold 1 will be described. A resin flow path 90 is formed inside the mold 1 in the mold clamped state, as shown by hatching in FIG. 2. The resin flow path 90 has the sprue 200, a runner 23, a neck portion 24, eight gates 25, and a cavity 26.

The runner 23 is formed in the recessed portion 201 for slide core, on the right of the orifice members 220U and 220D that face each other in the up-down direction, as shown in FIG. 3. The runner 23 extends in the front-rear direction. The runner 23 is arranged on the left of the sprue 200. At the expanding portion 27 forming a boundary between the runner 23 and the sprue 200, the flow path cross-sectional area of the resin flow path 90 (cross-sectional area in the up-down direction (specifically, in the direction of the plane expanded in the up-down and front-rear directions) because molten resin flows in the right-left direction in this portion) sharply increases.

The neck portion 24 is formed in the recessed portion 201 for slide core, between the orifice members 220U and 220D that face each other in the up-down direction. The neck portion 24 extends in the front-rear direction. The neck portion 24 is arranged on the left of the runner 23. At the neck portion 24, the flow path cross-sectional area (cross-sectional area in the up-down direction) sharply decreases with respect to the flow path cross-sectional area (cross-sectional area in the up-down direction) of the runner 23.

The eight gates 25 are arranged on the left of the neck portion 24 in the recessed portion 201 for slide core. On the left of the neck portion 24 in the recessed portion 201 for slide core (that is, on the left of the orifice members 220U and 220D), there are arranged the seven baffle members 221 U and the seven baffle members 221 D that are in contact with each other. The eight gates 25 are formed by dividing a space on the left of the neck portion 24 in the recessed portion 201 for slide core by the seven baffle members 221U and the seven baffle members 221D.

The cavity 26 is formed by the left surfaces of the slide cores 22U and 22D for baffle members, and by the recessed portion 210 for cavity of the movable die 21. The cavity 26 is arranged on the left of the eight gates 25.

As described above, formed inside the mold 1 in the mold clamped state is the resin flow path 90 that communicates the sprue 200, the runner 23, the neck portion 24, the eight gates 25, and the cavity 26 in this order from the upstream side to the downstream side. The flow path direction of the resin flow path 90 from the sprue 200 to the gates 25 is a right-left direction. The flow path direction of the resin flow path 90 in the cavity 26, that is, a desired filler orientation, is the longitudinal direction of the cavity 26, that is, in the up-down direction.

### Resin Molding Method

Next, a resin molding method of the present embodiment will be described. The resin molding method of the present embodiment has a mold clamping process, an injection process, and a mold opening process.

### Mold Clamping Process

First, the mold clamping process will be described. In the mold clamping process, the mold 1 is switched from the mold open state as shown in FIG. 1 to the mold clamped state as shown in FIGS. 2 to 5. Specifically, the movable die 21 is brought into contact from left with the fixed die 20. In addition, the slide core 22U for baffle members and the slide core 22D for baffle members are entered from above and below, respectively, into the recessed portion 201 for slide core of the fixed die 20.

By mold clamping, defined inside the mold 1 is the resin flow path 90 that communicates the sprue 200, the runner 23, the neck portion 24, the eight gates 25, and the cavity 26 in this order, as shown by hatching in FIG. 2.

### Injection Process

Next, the injection process will be described. In the injection process, the molten resin is injected from the nozzle of the molding machine into the resin flow path 90. The molten resin contains Nylon 66 and glass fibers. Nylon 66 is contained in a base material according to the present invention. The glass fibers are contained in a filler according to the present invention. The glass fibers are dispersed in Nylon 66 in the molten state.
The cylinder temperature of the molding machine is approximately 290 C. The temperature of the mold 1 is approximately 80 C.

Flow fronts MF1 to MF 10 of the molten resin flow inside the resin flow path 90, as schematically shown by dashed-dotted lines in FIGS. 3 and 4. That is, the molten resin flows inside the sprue 200 from right to left, as shown by the transition from the flow front MF1 to the flow front MF2. The flow path cross-sectional area of the resin flow path 90 sharply expands in the front-rear direction in the expanding portion 27 at the left end of the sprue 200. Thus, as shown by the flow front MF3, the molten resin flows into the runner 23 while spreading after passing through the expanding portion 27.

Here, the flow front MF3 has a curved surface shape around the expanding portion 27 serving substantially as a center. For this reason, the flow rate in the flow path direction (left-right direction) of the flow front MF3 includes a variation. That is, arranged immediately near the center A1 of the expanding portion 27 is a fastest portion V1 at which the flow rate in the flow path direction is the largest in the flow front MF3. In addition, arranged at an opening edge of the expanding portion 27 is a slowest portion V2 at which the flow rate in the flow path direction is the smallest in the flow front MF3.

In the flow front MF3, the fastest portion V1 reaches the neck portion 24 most quickly, and the slowest portion V2 reaches it most slowly. However, at the neck portion 24, the flow path cross-sectional area is narrowed in the up-down direction. As a result, a part of the molten resin in the vicinity of the fastest portion V1 (substantially in the center in the front-rear direction) that has reached most quickly is stopped at the neck portion 24 as shown by the flow front MF4, and flows toward the slowest portion V2, that is, in the front-rear direction. Therefore, on the downstream side of the neck portion 24, the flow rate difference between the fastest portion V1 and the slowest portion V2 is corrected compared with that on the upstream side of the neck portion 24, as shown by the flow front MF5.

The molten resin that has passed through the neck portion 24 flows into the eight gates 25 that are divided by the seven baffle members 221 U and the seven baffle members 221D, as shown by the flow front MF6. That is, the flow of the molten resin branches into eight flows.

Here, the gate widths B1 to B8 of the eight gates 25 are set such that (B1 = B8) > (B2 = B7) > (B3 = B6) > (B4 = B5), as shown in FIG. 5. That is, the gate widths B1 to B8 are set such that the gate that is positioned farther from the center A1 of the expanding portion 27 has a wider width. As a result, when the flow of the molten resin flows into the eight gates 25, the vicinity of the fastest portion V1 receives a larger flow resistance than the vicinity of the slowest portion V2 from the baffle members 221U and 221D. Therefore, the molten resin that has passed through the eight gates 25 has substantially a uniform flow rate, as shown by the flow front MF7.

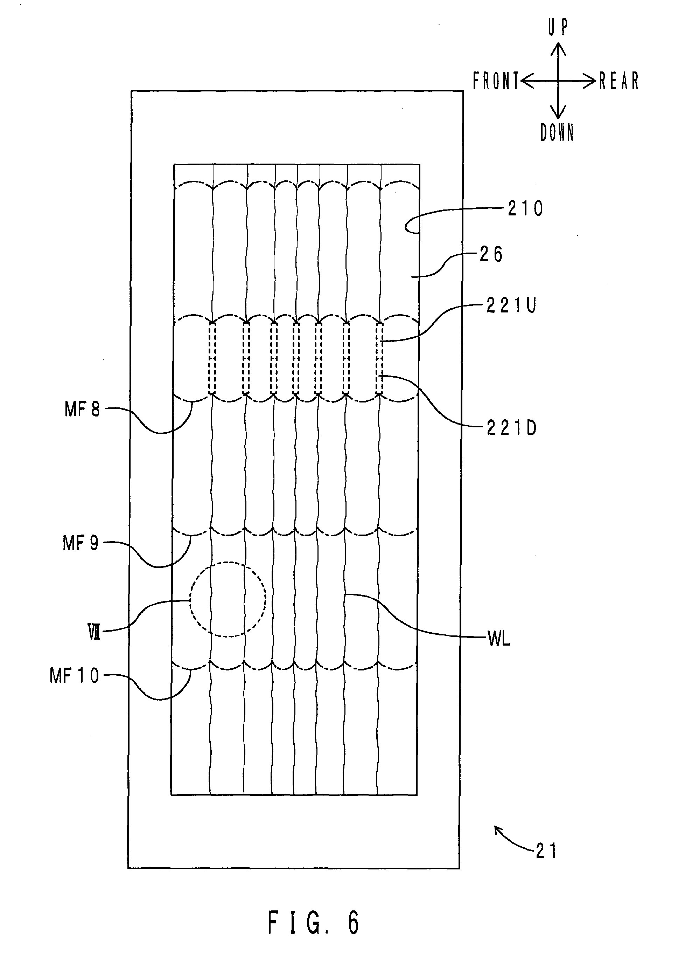

The molten resin that has flowed into the cavity 26 spreads in the direction in which the cavity 26 extends (in the up-down direction). FIG. 6 shows a right view of the movable die of the mold of the present embodiment in the mold clamped state. As shown in FIG. 6, the eight flow fronts MF8 flow in the up-down direction while pressing each other in the front-rear direction.

Here, the eight flow fronts MF8 have substantially the same flow rate. Therefore, the eight flow fronts MF8 flow substantially in parallel with each other in the up-down direction without curving toward the front or the rear, as shown by the transition from the flow fronts MF9 to the flow fronts MF10.

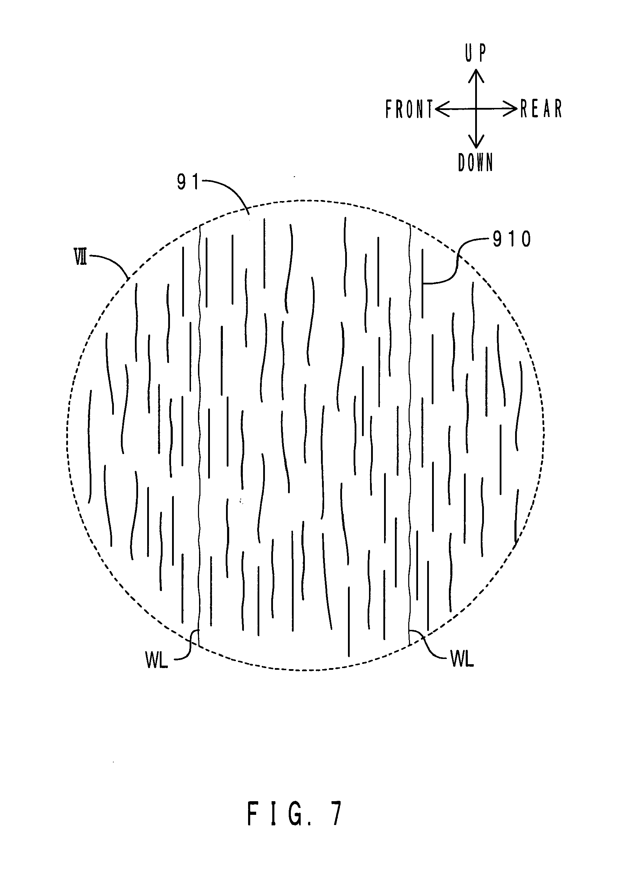

On the boundaries between the branched flow fronts, welds WL are formed. FIG. 7 shows an enlarged view in circle VII of FIG. 6. As schematically shown in FIG. 7, glass fibers 910 of a molten resin 91 are oriented along the direction in which the welds WL extend (in the up-down direction). In this state, the molten resin 91 is cooled and solidified in the cavity 26.

### Mold Opening Process

Next, the mold opening process will be described. In the mold opening process, the mold 1 is switched again from the mold clamped state as shown in FIGS. 2 to 7 to the mold open state as shown in FIG. 1. Specifically, the movable die 21 is separated to the left from the fixed die 20. In addition, the slide core 22U for baffle members and the slide core 22D for baffle members are pulled out upward and downward, respectively, from the recessed portion 201 for slide core of the fixed die 20.

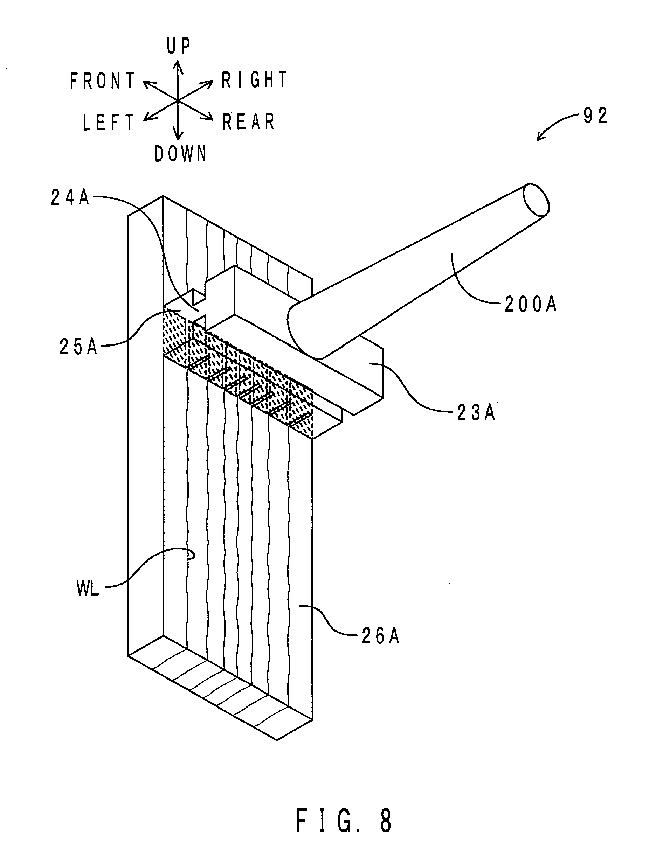

FIG. 8 shows a perspective view of an intermediate molded product formed in the movable die in the mold open state. The intermediate molded product 92 has substantially the same shape as that of the resin flow path 90. In other words, the intermediate molded product 92 has a solidified sprue portion 200A, a solidified runner portion 23A, a solidified neck portion 24A, eight solidified gate portions 25A, and a solidified cavity portion 26A. A gate cut is applied to the eight solidified gate portions 25A, as shown by hatching in FIG. 8. The solidified cavity portion 26A after the gate cut forms a resin molded product.

### Resin Molded Product

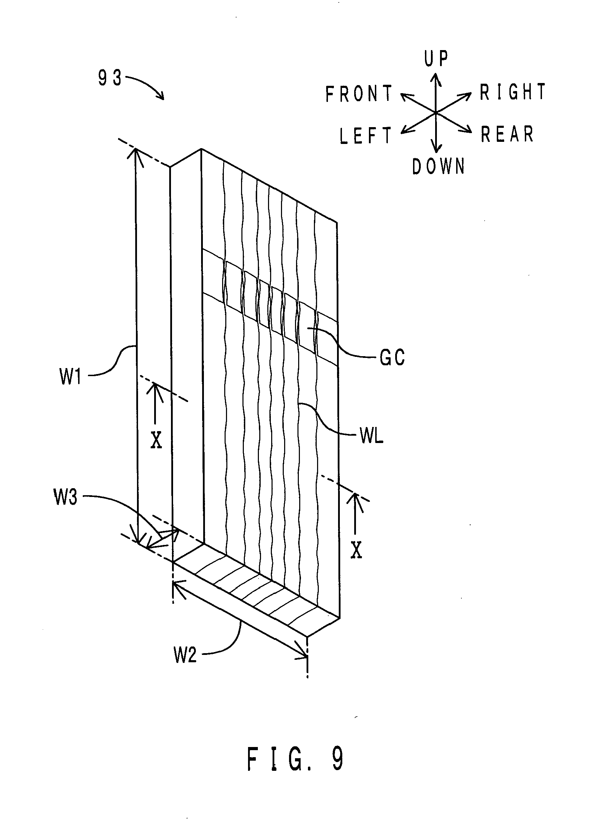

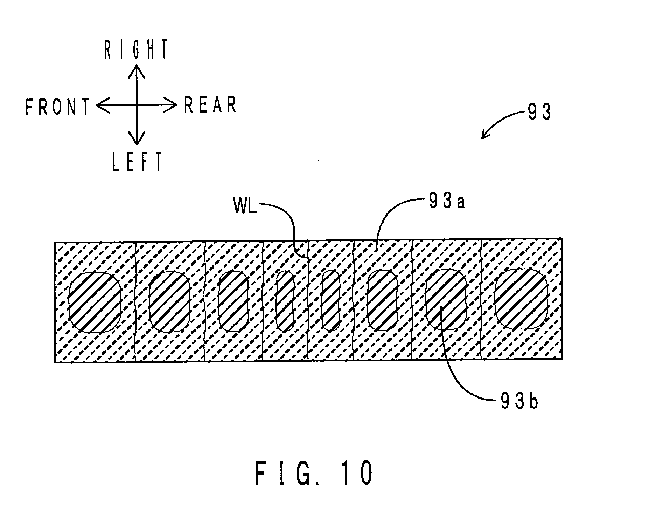

Next, the resin molded product of the present embodiment will be described. FIG. 9 shows a perspective view of the resin molded product of the present embodiment. FIG. 10 shows a cross-sectional view in the direction of arrows X-X of FIG. 9. Note that the resin molded product 93 as described below is only schematic, and depending on the resin molding method and subsequent processing, there may be a case in which the welds WL, gate cut traces GC, and contrasts between high orientation portions 93a and low orientation portions 93b cannot be identified in the resin molded product 93. In addition, the direction or range in which the welds WL extend may be different.

As shown in FIG. 9, the resin molded product 93 of the present embodiment has a long rectangular plate shape in the up-down direction. Specifically, the resin molded product 93 has an up-down length W1 of 130 mm, a front-rear length W2 of 50 mm, and a left-right length W3 of 12 mm.

The seven welds WL and the eight gate cut traces GC are formed on the surface of the resin molded product 93. The eight gate cut traces GC have rectangular shapes. The eight gate cut traces GC are formed at a portion of the right surface of the resin molded product 93 higher than the center in the up-down direction. The eight gate cut traces GC are arranged substantially in a row in the front-rear direction. When the areas of the eight gate cut traces GC are compared with each other, the areas of the two gate cut traces GC located in the center in the front-rear direction are the smallest. Besides, the areas of the two gate cut traces GC located at both ends in the front-rear direction are the largest.

The seven welds WL have line shapes extending in the up-down direction. The seven welds WL separates the eight gate cut traces GC into each division. As a result, the clearances between the seven welds WL are also unequal to each other corresponding to the differences between the areas of the above-described eight gate cut traces GC.

In a cross section (not a cross section obtained by cutting, but a fracture surface obtained by fracture in a bending test, etc.) of the resin molded product 93, the high orientation portions 93a and the low orientation portions 93b are observed, as shown in FIG. 10. The high orientation portion 93a is formed near the surface of the resin molded product 93 (that is, near the mold surface of the cavity 26 in the mold 1 shown in FIG. 2 described above) and near the weld WL. On the other hand, the low orientation portion 93b is formed at a distance from the weld WL inside the resin molded product 93.

In the high orientation portion 93a, the glass fibers are suitably oriented in the up-down direction. As a result, the glass fibers are fluffed on the cross section of the high orientation portion 93a. On the other hand, the orientation of the glass fibers is lower in the low orientation portion 93b than in the high orientation portion 93a. Therefore, the glass fibers are less fluffed on the cross section of the low orientation portion 93b compared with the cross section of the high orientation portion 93a.

As described above, the resin molded product 93 of the present embodiment has at least one of the following aspects. A plurality of the gate cut traces GC are formed. The areas of the plurality of gate cut traces GC are unequal to each other. A plurality of the welds WL are formed. The clearances between pairs of the adjacent welds WL are unequal to each other. The width of the clearance between the welds WL corresponds to the size of the area of the gate cut trace GC. At least the high orientation portion 93a is observed in a cross section (fracture surface) substantially perpendicular to the direction in which the welds WL extend.

### Advantageous Effects

Next, advantageous effects of the resin molding method, the resin molded product 93, and the mold 1 of the present embodiment will be described. According to the resin molding method and the mold 1 of the present embodiment, the baffle members 221U and 221 D are used. The baffle members 221 U and 221 D can correct the variation in the flow rate of the molten resin on the upstream side. In addition, the baffle members 221U and 221D can form the welds WL on the downstream side. As a result, the flow rate differences among the flow fronts MF8 to MF10 are reduced. Therefore, as schematically shown in FIG. 7, the orientation of the glass fibers 910 can be improved in the injection process. Moreover, the resin molded product 93 can be reinforced in the direction of orientation of the glass fibers 910.

In addition, according to the resin molding method of the present embodiment, the welds WL can be formed on the downstream side of the baffle members 221U and 221D. As a result, the orientation of the glass fibers 910 can be made high not only in the vicinity of the mold surface of the cavity 26 but also in the vicinity of the welds WL. Therefore, as schematically shown in FIG. 10, the high orientation portion 93a can be arranged inside the resin molded product 93. Thus, the resin molded product 93 of the present embodiment has the high orientation portion 93a in the inside thereof, and therefore, it has a high tensile strength and a high bending strength in the orientation direction of the glass fibers 910.

Moreover, according to the resin molding method and the mold 1 of the present embodiment, the clearances (gate widths) B1 to B8 are set such that the ones that are nearest to the fastest portion V1 are narrowest and the ones that are nearest to the slowest portion V2 are broadest.

Therefore, when the flow of the molten resin passes through the portion where the baffle members 221U and 221D are arranged (that is, the gates 25) in the resin flow path 90, the fastest portion V1 and the slowest portion V2 receive the largest flow resistance and the smallest flow resistance, respectively, from the baffle members 221U and 221D. Consequently, the flow fronts MF8 to MF10 can be easily aligned on the downstream side of the baffle members 221U and 221D. If the flow fronts MF8 to MF10 can be easily aligned, the orientation of the glass fibers 910 can be further improved. Moreover, the resin molded product 93 can be further reinforced in the orientation direction of the glass fibers 910.

Also, according to the resin molding method and the mold 1 of the present embodiment, in the resin flow path 90, the length in the direction of juxtaposition (in the front-rear direction) of the portion where the baffle members 221U and 221D are arranged, that is, the front-rear length of the gates 25, is set to 50 mm, which is the same as the front-rear length W2 of the resin molded product 93 shown in FIG. 9. Therefore, the flow rate difference between the fastest portion V1 and the slowest portion V2 is comparatively large. Consequently, the baffle members 221U and 221D can sufficiently produce a flow rate difference correction effect.

Further, according to the resin molding method and the mold 1 of the present embodiment, the expanding portion 27 is arranged in the resin flow path 90. In addition, the baffle members 221U and 221D are arranged on the downstream side of the expanding portion 27.

On the downstream side of the expanding portion 27, the molten resin spreads in the front-rear direction. Therefore, the flow rate distribution of the molten resin in the front-rear direction tends to vary. In this regard, according to the resin molding method and the mold 1 of the present embodiment, the baffle members 221U and 221D are arranged on the downstream side of the expanding portion 27. Therefore, the variation in the flow rate of the molten resin generated by the flow passing through the expanding portion 27 can be corrected by the baffle members 221U and 221D.

Also, according to the resin molding method and the mold 1 of the present embodiment, the expanding portion 27 and the baffle members 221U and 221D are arranged on the upstream side of the gates 25. Therefore, compared with the case in which the expanding portion 27 and the baffle members 221U and 221D are arranged in the cavity 26, the shapes of the expanding portion 27 and the baffle members 221U and 221D are difficult to appear on the resin molded product 93 after molding. Consequently, the resin molded product 93 has a high degree of freedom in defining the shape thereof.

Further, according to the resin molding method and the mold 1 of the present embodiment, the orientation of the glass fibers 910 can be improved over the entire cavity 26, in other words, over the entire resin molded product 93. As a result, the entire resin molded product 93 can be reinforced.

In addition, according to the resin molding method and the mold 1 of the present embodiment, the orifice members 220U and 220D are provided between the expanding portion 27 and the baffle members 221U and 221D. Therefore, the variation in the flow rate caused by spread of the flow of the molten resin while passing through the expanding portion 27 can be corrected prior to the baffle members 221U and 221D. Consequently, the flow of the molten resin can be sufficiently spread over all of the baffle members 221U and 221D. In addition, the variation in the flow rate of the molten resin can be continuously corrected by the orifice members 220U and 220D and by the baffle members 221U and 221D. As a result, the amount of correction of the variation in flow rate further increases.

The resin molded product 93 of the present embodiment is also formed with the seven welds WL. At least part of the glass fibers 910 are oriented along the direction in which the welds WL extend (up-down direction), as schematically shown in FIG. 7. Consequently, the resin molded product 93 has a high tensile strength and a high bending strength with respect to the up-down direction.

According to the mold 1 of the present embodiment, the baffle members 221U and the orifice members 220U are integrally arranged with the slide core 22U for baffle members. In addition, the baffle members 221D and the orifice members 220D are integrally arranged with the slide core 22D. Therefore, the number of parts can be reduced compared with the case in which these members are arranged separately. Moreover, the mold clamping process and the mold opening process can be speeded up. Furthermore, there is no possibility that the baffle members 221U, 221D or the orifice members 220U, 220D are undercut during the mold opening process. Therefore, the resin molded product 93 can be easily taken out.

Also, according to the mold 1 of the present embodiment, the seven baffle members 221U are arranged in the single slide core 22U for baffle members. Further, the seven baffle members 221D are arranged in the single slide core 22D for baffle members. Therefore, the mold 1 has a simple structure. In addition, the mold clamping process and the mold opening process can be performed more quickly.

Furthermore, according to the resin molding method and the mold 1 of the present embodiment, the molten resin flowing from the gates 25 into the cavity 26 can be branched into two flows in the up-down direction. Therefore, the gate cut traces GC can be arranged in portions in which stress concentration is not likely to occur in the resin molded product 93.

### Second Embodiment

A resin molding method, a resin molded product, and a mold according to a second embodiment of the present invention are different from the resin molding method, the resin molded product, and the mold of the first embodiment only in shapes and clearances of seven baffle members. Therefore, only the differences will be mainly described here.

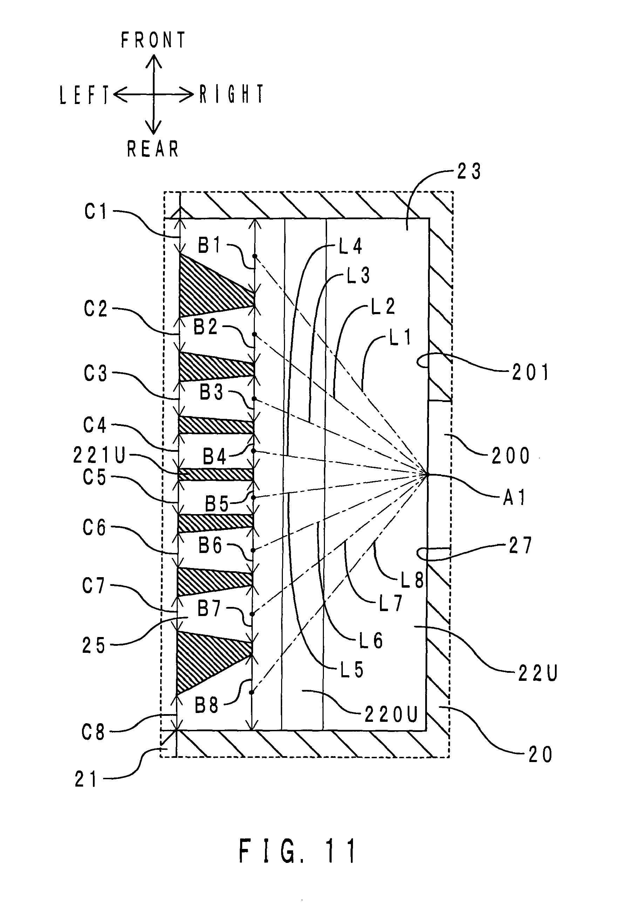

FIG. 11 shows a cross-sectional view taken in the front-rear direction (corresponding to FIG. 5) in the vicinity of baffle members of a mold of the present embodiment in the mold clamped state. Note that portions corresponding to those in FIG. 5 are denoted by the same reference symbols. As shown in FIG. 11, each of the seven baffle members 221U except the one in the center in the front-rear direction has a tapered shape that tapers from left to right. The inclinations of the baffle members 221U are set such that the baffle member that is farther from the center A1 of the expanding portion 27 has larger inclination.

Clearances B1 to B8 between the right ends of pairs of the adjacent baffle members 221U (right end widths of gates 25) are set such that (B1 = B8) > (B2 = B7) > (B3 = B6) > (B4 = B5). On the other hand, clearances C1 to C8 between the left ends of pairs of the adjacent baffle members 221U (left end widths of the gates 25) are set to be all equal to each other.

With respect to portions having common configurations, the resin molding method, the resin molded product, and the mold of the present embodiment have the same advantageous effects as the resin molding method, the resin molded product, and the mold of the first embodiment.

By setting the clearances B1 to B8 between the right ends of pairs of the adjacent baffle members 221U (right end widths of the gates 25) such that (B1 = B8) > (B2 = B7) > (B3 = B6) > (B4 = B5) as in the resin molding method and the mold of the present embodiment, the variation in flow rate of the molten resin can be corrected regardless of whether the clearances C1 to C8 between the left ends of pairs of the adjacent baffle members 221U (left end widths of the gates 25) are wide or narrow.

In other words, by setting clearances B1 to B8 between at least parts of pairs of the adjacent baffle members 221U such that the clearance at a portion nearest to the fastest portion of the flow of the molten resin is smaller than that at a portion nearest to the slowest portion, the variation in flow rate of the molten resin can be corrected even if there are portions where clearances of pairs of the baffle members 221U vary (for example, clearances C1 to C8).

Besides, in the resin molded product of the present embodiment, gate cut traces of unequal areas as shown in FIG. 9 described above are not formed. Gate cut traces of substantially equal areas are formed because the clearances C1 to C8 between the left ends of pairs of the adjacent baffle members 221U are reflected on the gate cut traces. According to the resin molded product of the present embodiment, the orientation of the glass fibers inside the gate cuts is improved though the areas thereof are substantially equal to each other. Consequently, the resin molded product of the present embodiment has a high tensile strength and a high bending strength.

### Third Embodiment

A resin molding method, a resin molded product, and a mold according to a third embodiment of the present invention are different from the resin molding method, the resin molded product, and the mold of the first embodiment in that: baffle members are arranged in a cavity; neither a runner nor orifice members are arranged; and a gate serves also as an expanding portion. Therefore, only the differences will be mainly described here.

### Mold

First, the mold of the present embodiment will be described.

### Configuration of Mold

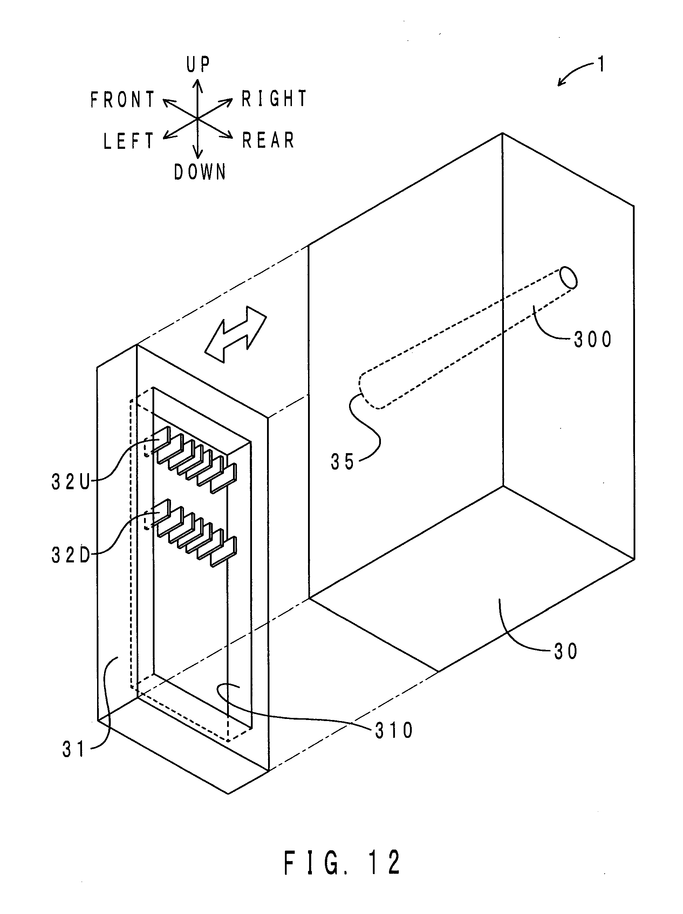

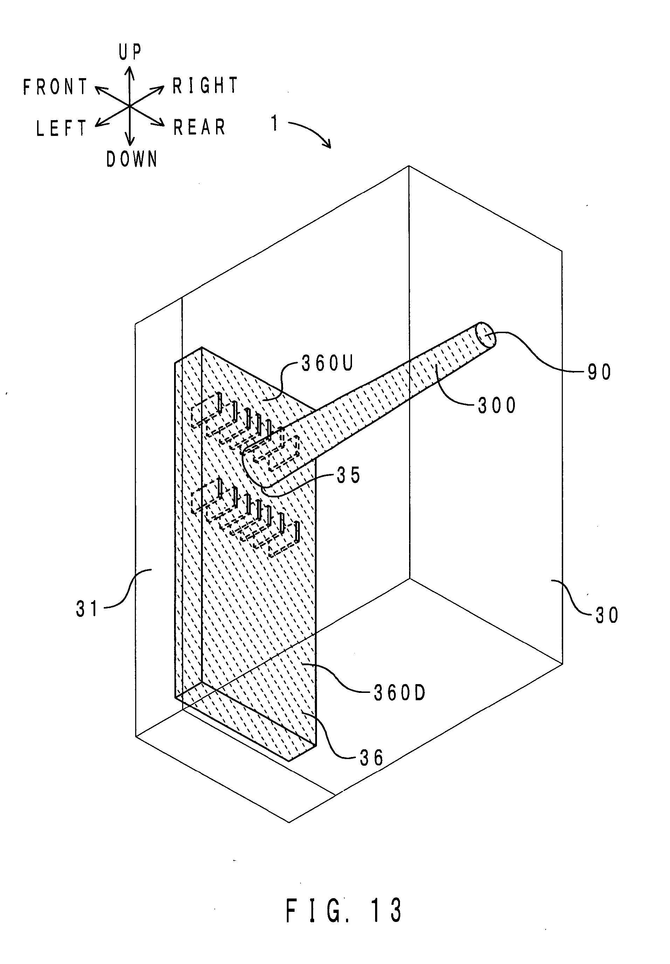

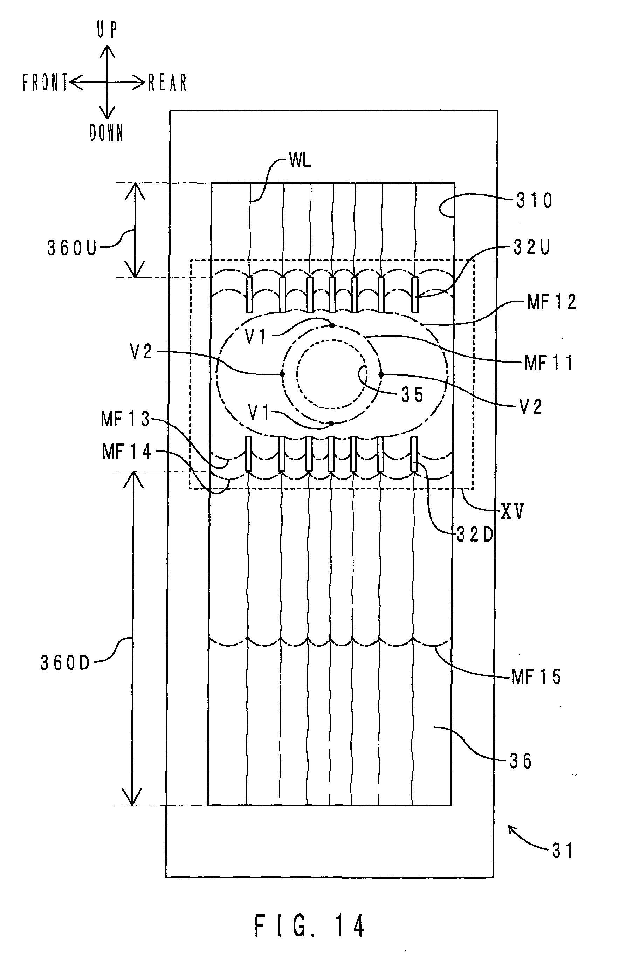

First, a configuration of the mold will be described. FIG. 12 shows a perspective view of the mold of the present embodiment in the mold open state. Note that portions corresponding to those in FIG. 1 are denoted by the same reference symbols. FIG. 13 shows a perspective view of the same mold in the mold clamped state. Note that portions corresponding to those in FIG. 2 are denoted by the same reference symbols. FIG. 14 shows a right view of a movable die of the same mold in the mold clamped state. Note that portions corresponding to those in FIG. 6 are denoted by the same reference symbols.

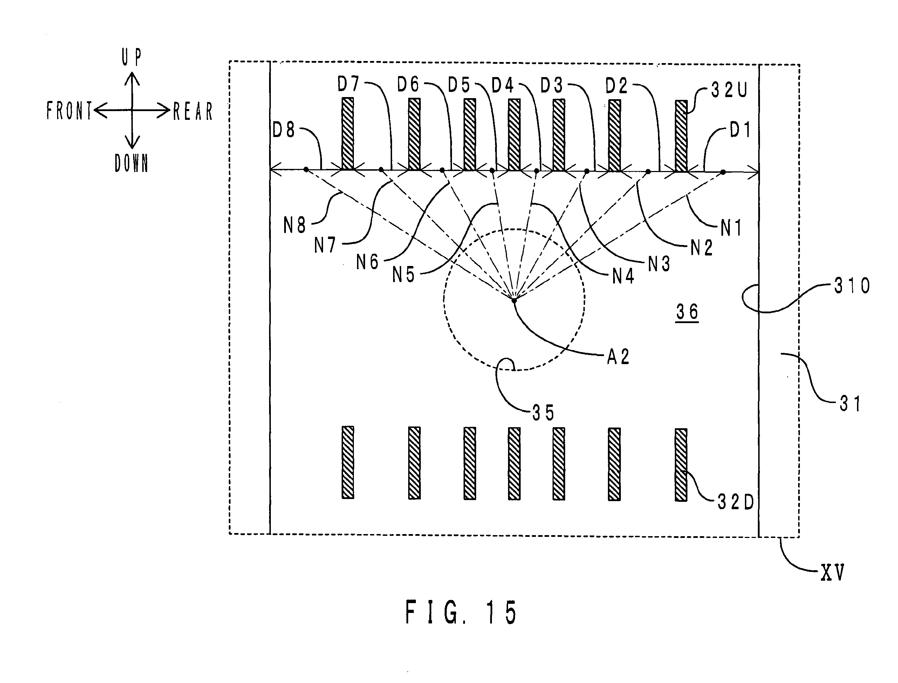

FIG. 15 shows an enlarged view in frame XV of FIG. 14. As shown in FIGS. 12 to 15, the mold 1 has a fixed die 30, a movable die 31, and baffle members 32U and 32D.

The fixed die 30 is made of chromium molybdenum steel, and has a rectangular parallelepiped block shape. The fixed die 30 is formed with a sprue 300 and a gate 35.

The sprue 300 is formed at a portion of the right surface of the fixed die 30, higher than the center thereof. The sprue 300 penetrates the fixed die 30 in the left-right direction. The cross section of the sprue 300 has substantially a perfect circle shape.
The sprue 300 has a tapered hole shape that mildly tapers from left to right. The right end of the sprue 300 is communicated with a nozzle of a molding machine (not shown). On the other hand, the gate 35 is arranged at the left end of the sprue 300. The cross section of the gate 35 has substantially a perfect circle shape. The gate 35 is included in the expanding portion of the present invention.

The movable die 31 is made of chromium molybdenum steel, and has a rectangular plate shape. The movable die 31 is arranged on the left of the fixed die 30. The movable die 31 is capable of contacting or separating from the fixed die 30 in the right-left direction. A recessed portion 310 for cavity is provided on the right surface of the movable die 31. The recessed portion 310 for cavity has a shallow bottom, and has a rectangular shape.

The baffle members 32U are provided so as to protrude rightward from the bottom surface of the recessed portion 310 for cavity in the movable die 31. The baffle members 32U are arranged at the upper left of the gate 35. The baffle members 32U have a rectangular plate shape. The baffle members 32U extend in the up-down direction. A total of seven baffle members 32U are juxtaposed in the front-rear direction.

The baffle members 32D have the same configuration as the above-described baffle members 32U. The baffle members 32D are arranged symmetrically in the up-down direction to the baffle members 32U with respect to the gate 35. That is, the baffle members 32D are arranged at the lower left of the gate 35. The seven baffle members 32D face the above-described seven baffle members 32U in the up-down direction.

In the mold open state, the movable die 31 is spaced apart leftward from the fixed die 30, as shown in FIG. 12. In the mold clamped state, the left surface of the fixed die 30 and the right surface of the movable die 31 are in contact with each other, as shown in FIG. 13. The baffle members 32U and 32D are also in contact with the left surface of the fixed die 30.

### Clearances Between Baffle Members

Next, clearances between the seven baffle members 32U will be described. As shown in FIG. 15, clearances D2 to D7 between pairs of the adjacent baffle members 32U (hatched for convenience of description), a clearance D1 between the rear surface of the recessed portion 310 for cavity and the baffle member 32U, and a clearance D8 between the front surface of the recessed portion 310 for cavity and the baffle member 32U are set so as to be unequal to each other. Specifically, the clearances D1 to D8 are set such that (D1 = D8) > (D2 = D7) > (D3 = D6) > (D4 = D5).

Also, center-to-center distances N1 to N8 from a center A2 of the gate 35 to centers of the clearances D1 to D8 are also unequal to each other. Specifically, the center-to-center distances N1 to N8 are set such that (N1 = N8) > (N2 = N7) > (N3 = N6) > (N4 = N5). More specifically, the clearances D1 to D8 are set such that the clearance whose corresponding center-to-center distance is longer, that is, whose distance from the gate 35 is longer, has a wider width. Note that clearances between the seven baffle members 32D are set in the same way as the clearances between the seven baffle members 32U are.

### Configuration of Resin Flow Path

Next, a configuration of a resin flow path that is formed in the mold 1 will be described. A resin flow path 90 is formed inside the mold 1 in the mold clamped state, as shown by hatching in FIG. 13. The resin flow path 90 has the sprue 300, the gate 35, and a cavity 36.

The cavity 36 is formed by the left surface of the fixed die 30 and the recessed portion 310 for cavity of the movable die 31. The cavity 36 is arranged on the left of the gate 35. In the cavity 36, a molding portion 360U for reinforced portion is arranged above the portion where the baffle members 32U are arranged. Similarly, in the cavity 36, a molding portion 360D for reinforced portion is arranged below the portion where the baffle members 32D are arranged.

Inside the mold 1 in the mold clamped state, there is formed the resin flow path 90 that communicates the sprue 300, the gate 35, and the cavity 36 in this order from the upstream side to the downstream side. The flow path direction of the resin flow path 90 from the sprue 300 to the gate 35 is a right-left direction. The flow path direction of the resin flow path 90 in the cavity 36, that is, a desired orientation of the glass fibers, is the longitudinal direction of the cavity 36, that is, the up-down direction.

### Resin Molding Method

Next, the resin molding method of the present embodiment will be described. The resin molding method of the present embodiment has a mold clamping process, an injection process, and a mold opening process.

### Mold Clamping Process

First, the mold clamping process will be described. In the mold clamping process, the mold 1 is switched from the mold open state as shown in FIG. 12 to the mold clamped state as shown in FIGS. 13 to 15. Specifically, the movable die 31 is brought into contact from left with the fixed die 30.

By mold clamping, defined inside the mold 1 is the resin flow path 90 that communicates the sprue 300, the gate 35, and the cavity 36 in this order, as shown by hatching in FIG. 13.

### Injection Process

Next, the injection process will be described. In the injection process, the molten resin is injected from the nozzle of the molding machine into the resin flow path 90. Flow fronts MF11 to MF15 of the molten resin flow inside the cavity 36, as schematically shown by dashed-dotted lines in FIG. 14. That is, the molten resin flows inside the cavity 36, in the up-down direction from the gate 35 serving as a center. The flow path cross-sectional area sharply expands in the front-rear and up-down directions at the gate 35. Thus, as shown by the flow front MF11, the molten resin flows into the cavity 36 while spreading after passing through the gate 35.

Here, the flow front MF11 has a curved surface shape around the gate 35 serving substantially as a center. For this reason, the flow rate in the flow path direction (up-down direction) of the flow front MF11 includes a variation. That is, arranged on the upper and lower sides of the gate 35 are fastest portions V1 at which the flow rate in the flow path direction is the largest in the flow front MF11. In addition, arranged to the front and rear of the gate 35 are slowest portions V2 at which the flow rate in the flow path direction is the smallest in the flow front MF11.

In the flow front MF11, the fastest portion V1 most quickly, and the slowest portion V2 most slowly, reach the baffle members 32D. Here, the clearances D1 to D8 are set such that (D1 = D8) > (D2 = D7) > (D3 = D6) > (D4 = D5), as shown in FIG. 15. That is, the clearances (flow path widths) D1 to D8 are set such that the clearance that is farther from the center A2 of the gate 35 has a wider width. Therefore, when the molten resin flows into eight flow paths of the clearances D1 to D8, the vicinity of the fastest portion V1 receives larger flow resistance than the vicinity of the slowest portion V2 from the baffle members 32D, as shown by the flow front MF12. Thus, the molten resin that has passed through the eight flow paths has substantially a uniform flow rate, as shown by the transition from the flow fronts MF 13 to the flow fronts MF 14.

The eight flow fronts MF 15 that have passed through the eight flow paths of the clearances D1 to D8 flow downward in the molding portion 360D for reinforced portion while pressing each other in the front-rear direction.

Here, the eight flow fronts MF 15 have substantially the same flow rate. Therefore, the eight flow fronts MF 15 flow downward, substantially in parallel with each other without curving toward the front or the rear. On the boundaries between the branched flow fronts, welds WL are formed. The glass fibers of the molten resin are oriented along the direction in which the welds WL extend (in the up-down direction).

Also on the upper side of the gate 35, similarly to the case on the lower side of the above-described gate 35, the molten resin that has flowed from the gate 35 into the cavity 36 passes through the flow paths divided by the baffle members 32U, and flows upward in the molding portion 360U for reinforced portion. In this state, the molten resin is cooled and solidified in the cavity 36.

### Mold Opening Process

Next, the mold opening process will be described. In the mold opening process, the mold 1 is switched again from the mold clamped state as shown in FIGS. 13 to 15 to the mold open state as shown in FIG. 12. Specifically, the movable die 31 is separated to the left from the fixed die 30. Then, a gate cut is performed, and the resin molded product is obtained.

### Resin Molded Product

Next, the resin molded product of the present embodiment will be described. FIG.
16 shows a perspective view of the resin molded product of the present embodiment. Note that portions corresponding to those in FIG. 9 are denoted by the same reference symbols. The resin molded product 94 as described below is only schematic, and depending on the resin molding method and subsequent processing, there may be a case in which the welds WL and a gate cut trace GC cannot be identified in the resin molded product 94. In addition, the direction or range in which the welds WL extend may be different.

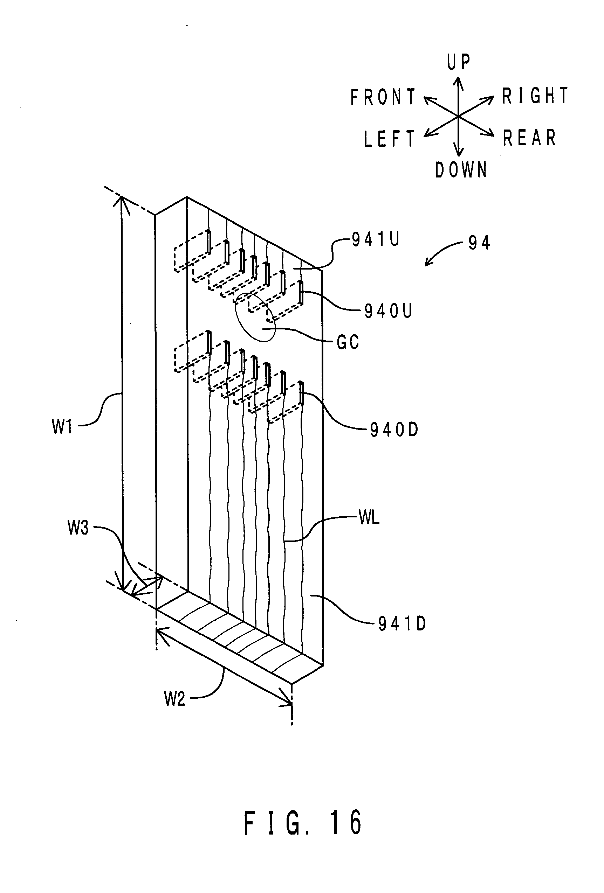

As shown in FIG. 16, the resin molded product 94 of the present embodiment has a rectangular plate shape elongated in the up-down direction. The resin molded product 94 has an up-down length W1 of 130 mm, a front-rear length W2 of 50 mm, and a left-right length W3 of 12 mm.

A gate cut trace GC, baffle member traces 940U and 940D, and the welds WL are formed on the surface of the resin molded product 94. The resin molded product 94 has a pair of upper and lower reinforced portions 941U and 941D. The reinforced portions 941 and 941D correspond to the molding portion 360U for reinforced portion and the molding portion 360D for reinforced portion, respectively. The gate cut trace GC is formed in a portion of the surface of the resin molded product 94 higher than the center thereof. The gate cut trace GC has substantially a perfect circle shape.

The baffle member traces 940U and 940D are formed on both upper and lower sides of the gate cut trace GC. The baffle member traces 940U extend in the up-down direction. The baffle member traces 940U penetrate the resin molded product 94 in the left-right direction. A total of seven of the baffle member traces 940U are juxtaposed in the front-rear direction.

The baffle member traces 940D have the same configuration as the above-described baffle member traces 940U. Besides, the baffle member traces 940D are arranged symmetrically in the up-down direction to the baffle member traces 940U with respect to the gate cut trace GC. The seven baffle member traces 940D face the above-described seven baffle member traces 940U in the up-down direction. The welds WL extend upward and downward substantially from the baffle member traces 940U and 940D. A total of 14 welds WL are formed. The reinforced portions 941U and 941D are arranged at portions where the welds WL are formed.

The clearance between a pair of the adjacent baffle member traces 940U and 940D in the front-rear direction is set so as to gradually be wider from a center toward both ends in the front-rear direction. Similarly, the clearances between a pair of the adjacent welds WL in the front-rear direction is set so as to gradually be wider from a center toward both ends in the front-rear direction. In cross sections (fracture surfaces) of the reinforced portions 941U and 941D in the resin molded product 94, high orientation portions 93 a and low orientation portions 93b are observed as shown in FIG. 10.

As described above, the resin molded product 94 of the present embodiment has at least one of the following aspects. A single piece of the gate cut trace GC is formed.
The baffle member traces 940U and 940D are formed in the vicinity of the gate cut trace GC. The welds WL extend substantially from the baffle member traces 940U and 940D, in directions to separate from the gate cut trace GC. The clearances between pairs of the adjacent baffle member traces 940U and 940D are unequal to each other. The clearances between pairs of the adjacent welds WL are unequal to each other. The widths of the clearances between the baffle member traces 940U and 940D correspond to the widths of the clearances between the welds WL. In the reinforced portions 941U and 941D, at least the high orientation portions are observed in cross sections (fracture surfaces) substantially perpendicular to the direction in which the welds WL extend.

### Advantageous Effects

With respect to portions having common configurations, the resin molding method, the resin molded product 94, and the mold 1 of the present embodiment have the same advantageous effects as the resin molding method, the resin molded product, and the mold of the first embodiment.

In addition, according to the resin molding method and the mold 1 of the present embodiment, the baffle members 32U and 32D are arranged immediately downstream of the gate 35 in the flow path direction. Therefore, the variation in the flow rate of the molten resin generated by the flow passing through the gate 35 can be corrected quickly by the baffle members 32U and 32D.

Moreover, the resin molded product 94 of the present embodiment has the reinforced portions 941U and 941D. In addition, the cavity 36 in the mold 1 of the present embodiment has the molding portions 360U and 360D for reinforced portions. Furthermore, the baffle members 32U and 32D are arranged on the upstream sides of the molding portions 360U and 360D for reinforced portions. Therefore, the orientation of the glass fibers in the molding portions 360U and 360D for reinforced portions can be improved. Thus, the reinforced portions 941U and 941D of the resin molded product 94 can be preferentially reinforced. It is also possible to reinforce only desired portions of the resin molded product 94, as described in the present embodiment.

### Fourth Embodiment

A resin molding method, a resin molded product, and a mold according to a fourth embodiment of the present invention are different from the resin molding method, the resin molded product, and the mold of the third embodiment in that baffle members are not in contact with a movable die in the mold clamped state. Therefore, only the differences will be mainly described here.

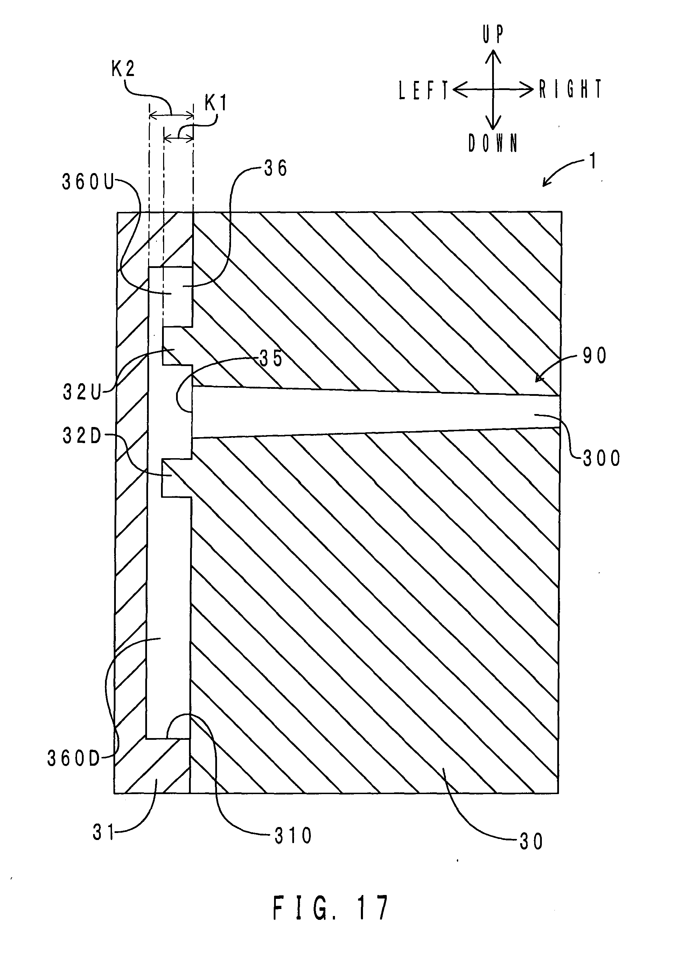

FIG. 17 shows a cross-sectional view (corresponding to FIG. 3) taken in the up-down direction of the mold of the present embodiment in the mold clamped state.
Note that portions corresponding to those in FIGS. 12 and 13 are denoted by the same reference symbols. As shown in FIG. 17, baffle members 32U are provided so as to protrude leftward from the left surface of a fixed die 30. The baffle members 32U are arranged on the upper side of a gate 35. The baffle members 32U have a rectangular plate shape. The baffle members 32U extend in the up-down direction. A total of seven baffle members 32U are juxtaposed in the front-rear direction.

Baffle members 32D have the same configuration as the above-described baffle members 32U. Besides, the baffle members 32D are arranged symmetrically in the up-down direction to the baffle members 32U with respect to the gate 35. That is, the baffle members 32D are arranged on the lower side of the gate 35. The seven baffle members 32D face the above-described seven baffle members 32U in the up-down direction.

Here, the baffle members 32U and 32D have a left-right length K1 of 8 mm. On the other hand, a cavity 36 has a left-right length K2 of 12 mm. Therefore, clearances exist between the left ends of the baffle members 32U, 32D and the bottom surface of a recessed portion 310 for cavity in the movable die 31.

In the injection process of the resin molding method, a part of the flow of the molten resin is divided by the baffle members 32U and 32D into branches that meet each other again. On the other hand, the other part of the flow of the molten resin passes through the left side of the baffle members 32U and 32D, and therefore, does not branch. Thus, the flow of the molten resin partly branches.

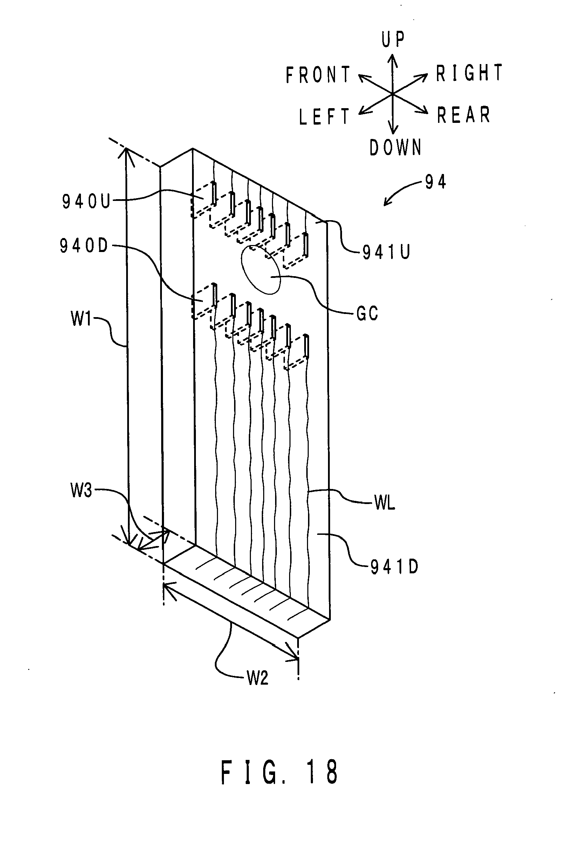

FIG. 18 shows a perspective view of the resin molded product of the present embodiment. Note that portions corresponding to those in FIG. 16 are denoted by the same reference symbols. The resin molded product 94 as described below is only schematic, and depending on the resin molding method and subsequent processing, there may be a case in which the welds WL and a gate cut trace GC cannot be identified in the resin molded product 94. In addition, the direction or range in which the welds WL extend may be different.

As shown in FIG. 18, the resin molded product 94 of the present embodiment has a rectangular plate shape elongated in the up-down direction. The resin molded product 94 has an up-down length W1 of 130 mm, a front-rear length W2 of 50 mm, and a left-right length W3 of 12 mm.

A gate cut trace GC, baffle member traces 940U and 940D, and the welds WL are formed on the surface of the resin molded product 94. The resin molded product 94 has a pair of upper and lower reinforced portions 941 U and 941D. The baffle member traces 940U and 940D do not reach the left surface of the resin molded product 94. The welds WL also do not reach the left surface of the resin molded product 94. Therefore, the left surface of the resin molded product 94 has a clear smooth surface. In cross sections (fracture surfaces) of the reinforced portions 941U and 941D in the resin molded product 94, high orientation portions and low orientation portions are observed.

As described above, the resin molded product 94 of the present embodiment has at least one of the following aspects. A single piece of the gate cut trace GC is formed. In the vicinity of the gate cut trace GC, the baffle member traces 940U and 940D are formed on only one surface (right surface of the right and left surfaces). The welds WL extend substantially from the baffle member traces 940U and 940D, in directions to separate from the gate cut trace GC. The clearances between pairs of the adjacent baffle member traces 940U and 940D are unequal to each other. The clearances between pairs of the adjacent welds WL are unequal to each other. The widths of the clearances between the baffle member traces 940U and 940D correspond to the widths of the clearances between the welds WL. In the reinforced portions 941U and 941D, at least the high orientation portions are observed in cross sections (fracture surfaces) substantially perpendicular to the direction in which the welds WL extend.

With respect to portions having common configurations, the resin molding method, the resin molded product 94, and the mold 1 of the present embodiment have the same advantageous effects as the resin molding method, the resin molded product, and the mold of the third embodiment.

In addition, even if clearances exist between ends of the baffle members 32U, 32D and the mold surface of the cavity 36 as in the case of the resin molding method and the mold 1 of the present embodiment, the welds WL can be formed, and thus the orientation of glass fibers of the resin molded product 94 can be improved.

Moreover, according to the resin molded product 94 of the present embodiment, the baffle member traces 940U and 940D do not penetrate the resin molded product 94 in the left-right direction. Therefore, the portions where the baffle member traces 940U and 940D are formed have a high strength. In addition, the left surface of the resin molded product 94 can be made to be a clear smooth surface. Furthermore, the right sides (welds WL side) of the reinforced portions 941U and 941D can be reinforced compared with the left sides.

### Fifth Embodiment

A resin molding method, a resin molded product, and a mold according to a fifth embodiment of the present invention are different from the resin molding method, the resin molded product, and the mold of the third embodiment in that: seven baffle members are arranged at substantially even clearances; and left-right lengths of the seven baffle members are set to be unequal to each other. Therefore, mainly only the differences will be described here.

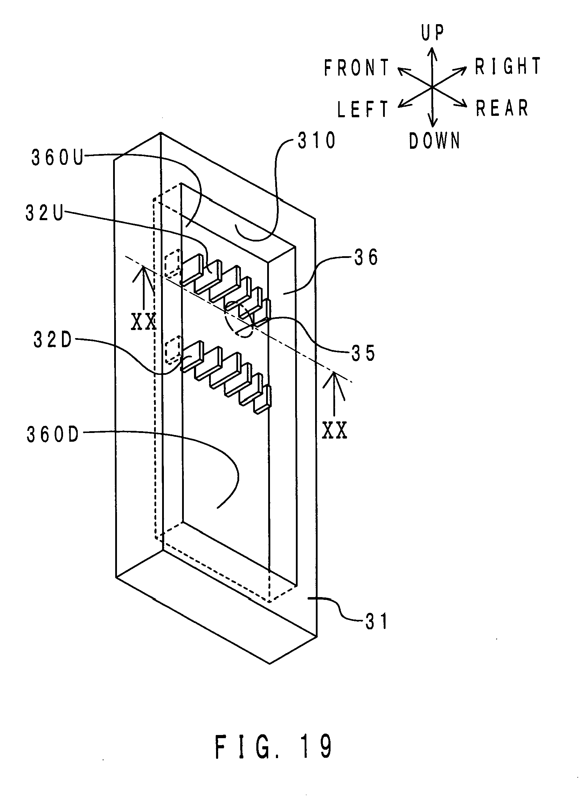

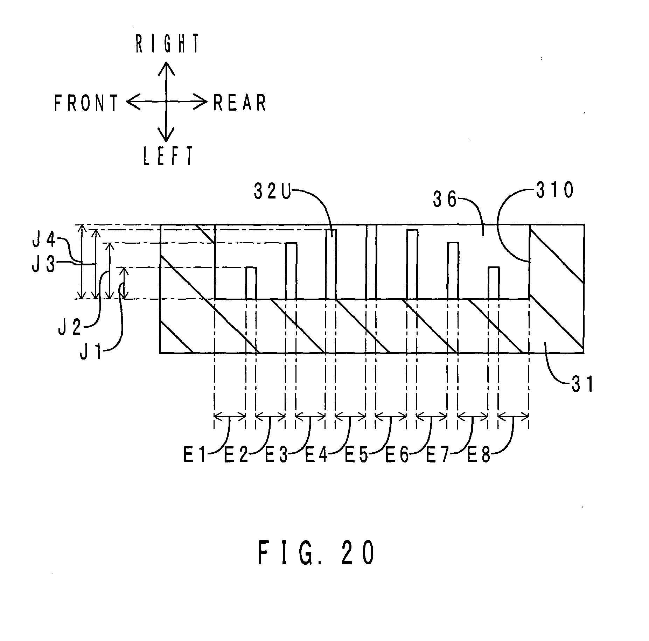

FIG. 19 shows a perspective view of a movable die of the mold of the present embodiment. Note that portions corresponding to those in FIGS. 12 and 13 are denoted by the same reference symbols. FIG. 20 shows a cross-sectional view in the direction of arrows XX-XX of FIG. 19. As shown in FIGS. 19 and 20, clearances E2 to E7 between pairs of the adjacent baffle members 32U, a clearance E1 between the front surface of the recessed portion 310 for cavity and the baffle member 32U, and a clearance E8 between the rear surface of the recessed portion 310 for cavity and the baffle member 32U are set so as to be substantially equal to each other.

On the other hand, left-right lengths J1 to J4 of the baffle members 32U are set such that J4 > J3 > J2 > J1 in the order from the center to both ends in the front-rear direction, that is, such that a convex shape is formed. Note that seven baffle members 32D are set so as to be similar to the seven baffle members 32U.

With respect to portions having common configurations, the resin molding method, the resin molded product, and the mold of the present embodiment have the same advantageous effects as the resin molding method, the resin molded product, and the mold of the third embodiment.

In addition, by arranging the baffle members 32U and 32D into a convex shape as in the resin molding method and the mold of the present embodiment, the substantially center portion in the front-rear direction has a larger flow resistance than both ends in the front-rear direction. On the other hand, a gate 35 is arranged substantially in the center in the front-rear direction on the upper side of the right surface of the cavity 36. A portion that is nearer to the gate 35, in other words, a portion where the flow rate of molten resin is larger, receives larger flow resistance from the baffle members 32U and 32D. Therefore, the variation in the flow rate of the molten resin can be suppressed. In addition, the orientation of glass fibers in the resin molded product is enhanced.

### Sixth Embodiment

A resin molding method, a resin molded product, and a mold according to a sixth embodiment of the present invention are different from the resin molding method, the resin molded product, and the mold of the third embodiment in that: a gate is opened at the upper end of a cavity; and changing portions and flow regulating members are provided in the cavity. Therefore, only the differences will be mainly described here.

### Mold

First, the mold of the present embodiment will be described.

### Configuration of Mold

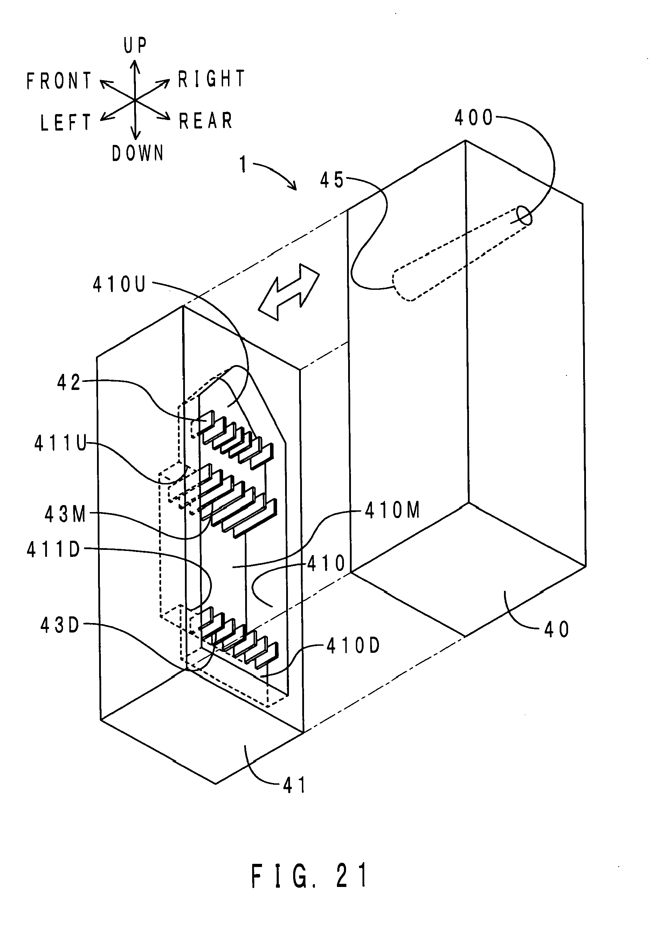

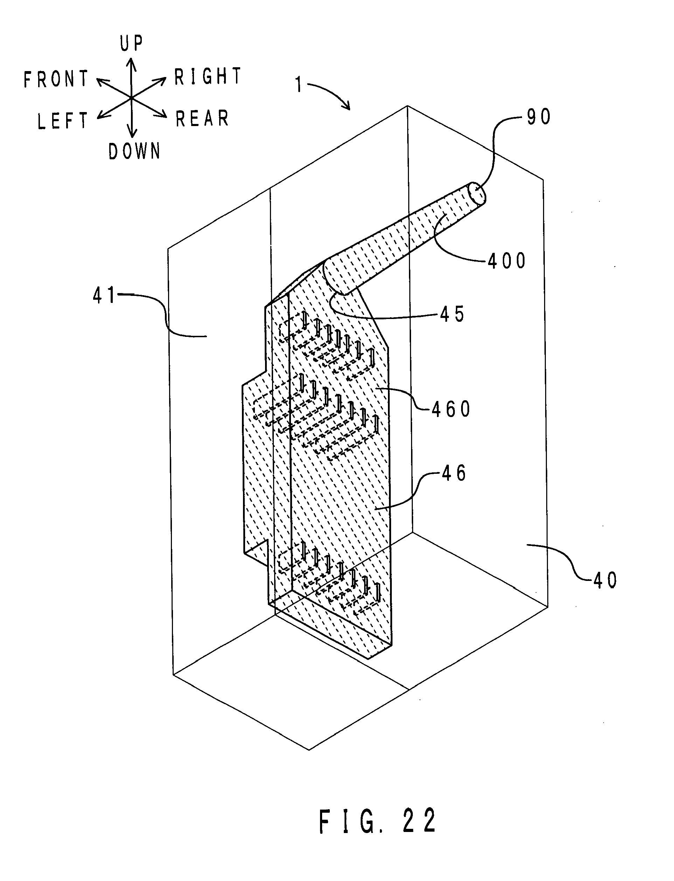

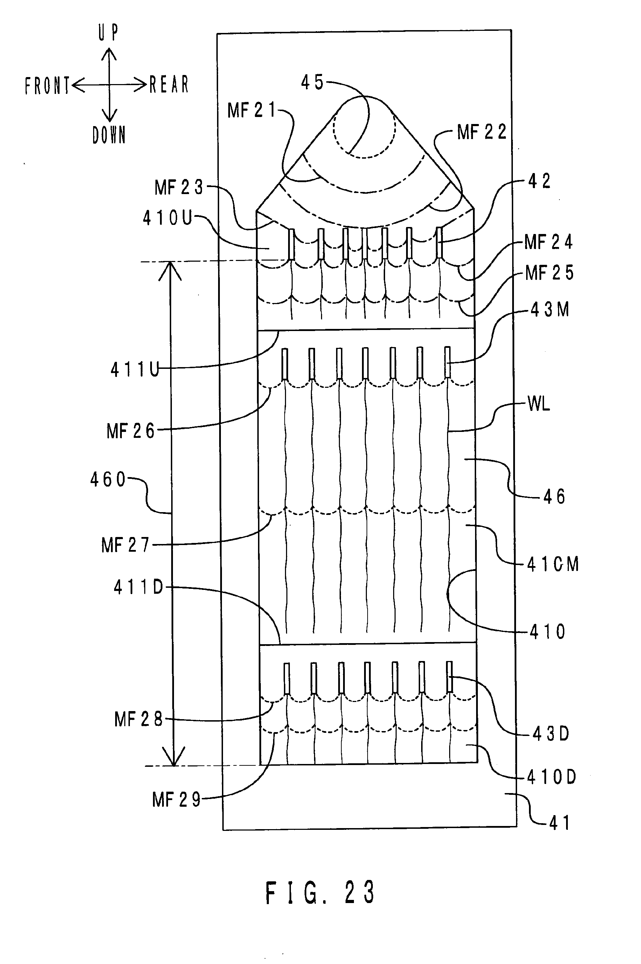

First, a configuration of the mold will be described. FIG. 21 shows a perspective view of the mold of the present embodiment in the mold open state. Note that portions corresponding to those in FIG. 1 are denoted by the same reference symbols. FIG. 22 shows a perspective view of the same mold in the mold clamped state. Note that portions corresponding to those in FIG. 2 are denoted by the same reference symbols. FIG. 23 shows a right view of a movable die of the same mold in the mold clamped state. Note that portions corresponding to those in FIG. 6 are denoted by the same reference symbols. As shown in FIGS. 21 to 23, the mold 1 has a fixed die 40, a movable die 41, baffle members 42, and flow regulating members 43M and 43D.

The fixed die 40 is made of chromium molybdenum steel, and has a rectangular parallelepiped block shape. The fixed die 40 is formed with a sprue 400 and a gate 45. The sprue 400 penetrates the fixed die 40 in the left-right direction. The gate 45 is arranged at the left end of the sprue 400. The gate 45 is included in the expanding portion of the present invention.

The movable die 41 is made of chromium molybdenum steel, and has a rectangular plate shape. The movable die 41 is arranged on the left of the fixed die 40. A recessed portion 410 for cavity is provided on the right surface of the movable die 41. The recessed portion 410 for cavity has shallow bottom portions 410U and 410D, as well as a deep bottom portion 410M. The shallow bottom portion 410U and the shallow bottom portion 410D are arranged in the upper side and the lower side, respectively, of the recessed portion 410 for cavity. The deep bottom portion 410M is provided between the shallow bottom portions 410U and 410D. The deep bottom portion 410M is formed so as to have a deeper bottom than those of the shallow bottom portions 410U and 410D. Changing portions 411U and 411D, are arranged at a boundary between the shallow bottom portion 410U and the deep bottom portion 410M, and at a boundary between the deep bottom portion 410M and the shallow bottom portion 410D, respectively.

The baffle members 42 are provided so as to protrude rightward from the bottom surface of the shallow bottom portion 410U. The baffle members 42 are arranged on the lower left of the gate 45. The baffle members 42 have a rectangular plate shape. The baffle members 42 extend in the up-down direction. A total of seven baffle members 42 are juxtaposed in the front-rear direction.

The flow regulating members 43M are provided so as to protrude rightward from the bottom surface of the deep bottom portion 410M. The flow regulating members 43M are arranged near the upper edge of the deep bottom portion 410M. That is, the flow regulating members 43 M are arranged on the lower side of the changing portion 411U. The flow regulating members 43M have a rectangular plate shape. The flow regulating members 43M extend in the up-down direction. A total of seven flow regulating members 43M are juxtaposed in the front-rear direction.

The flow regulating members 43D are provided so as to protrude rightward from the bottom surface of the shallow bottom portion 410D. The flow regulating members 43D are arranged near the upper edge of the shallow bottom portion 410D. That is, the flow regulating members 43D are arranged on the lower side of the changing portion 411D. The flow regulating members 43D have a rectangular plate shape. The flow regulating members 43D extend in the up-down direction. A total of seven flow regulating members 43D are juxtaposed in the front-rear direction.

In the mold open state, as shown in FIG. 21, the movable die 41 is spaced apart leftward from the fixed die 40. In the mold clamped state, as shown in FIG. 22, the left surface of the fixed die 40 and the right surface of the movable die 41 are in contact with each other. The baffle members 42 and the flow regulating members 43M, 43D are also in contact with the left surface of the fixed die 40.

Clearances Between Baffle Members and Clearances Between Flow Regulating Members
Next, clearances between the seven baffle members 42 will be described. Clearances between upper ends of pairs of the adjacent baffle members 42 are set so as to be unequal to each other, similarly to those shown in FIG. 15. Also, center-to-center distances from the center of the gate 45 to centers of the clearances between the upper ends of pairs of the adjacent baffle members 42 are unequal to each other, similarly to those shown in FIG. 15. That is, the clearances between the upper ends of pairs of the adjacent baffle members 42 are set such that the clearance farther from the gate 45 is wider.

Next, clearances between the flow regulating members 43M and 43D will be described. Clearances between the upper ends of pairs of the adjacent flow regulating members 43M are set so as to be substantially equal to each other. Similarly, clearances between the upper ends of pairs of the adjacent flow regulating members 43D are also set so as to be substantially equal to each other.

### Configuration of Resin Flow Path

Next, a configuration of a resin flow path that is formed in the mold 1 will be described. A resin flow path 90 is formed inside the mold 1 in the mold clamped state, as shown by hatching in FIG. 22. The resin flow path 90 has the sprue 400, the gate 45, and a cavity 46.

The cavity 46 is formed by the left surface of the fixed die 40 and the recessed portion 410 for cavity of the movable die 41. The cavity 46 is arranged on the left of the gate 45. In the cavity 46, a molding portion 460 for reinforced portion is arranged below the portion where the baffle members 42 are arranged.

Inside the mold 1 in the mold clamped state, there is formed the resin flow path 90 that communicates the sprue 400, the gate 45, and the cavity 46 in this order from the upstream side to the downstream side. The flow path direction of the resin flow path 90 from the sprue 400 to the gate 45 is a right-left direction. The flow path direction of the resin flow path 90 in the cavity 46, that is, a desired orientation of the glass fibers, is the longitudinal direction of the cavity 46, that is, the up-down direction.

### Resin Molding Method

Next, the resin molding method of the present embodiment will be described. The resin molding method of the present embodiment has a mold clamping process, an injection process, and a mold opening process.

### Mold Clamping Process

First, the mold clamping process will be described. In the mold clamping process, the mold 1 is switched from the mold open state as shown in FIG. 21 to the mold clamped state as shown in FIGS. 22 and 23. Specifically, the movable die 41 is brought into contact from left with the fixed die 40.

### Injection Process

Next, the injection process will be described. In the injection process, the molten resin is injected from the nozzle of the molding machine into the resin flow path 90.
Flow fronts MF21 to MF29 of the molten resin flow inside the cavity 46, as schematically shown by dashed-dotted lines in FIG. 23. That is, the molten resin flows inside the cavity 46 downward from the gate 45. The flow path cross-sectional area sharply expands at the gate 45. As a result, the molten resin flows into the cavity 46 while spreading after passing through the gate 45, as shown by the flow front MF21.

The flow rate in the flow path direction (up-down direction) of the flow front MF22 of the molten resin includes a variation. However, the clearances between upper ends of pairs of the adjacent baffle members 42 are set so as to be unequal to each other, similarly to those shown in FIG. 15. Therefore, the molten resin that has passed through the portion where the baffle members 42 are arranged has substantially a uniform flow rate, as shown by the transition from the flow fronts MF23 to the flow fronts MF24. The flow fronts MF25 flow downward in the molding portion 460 for reinforced portion while pressing each other in the front-rear direction.

The flow path cross-sectional area sharply expands toward left at the changing portion 411U. Therefore, a disturbance occurs in the flow of the molten resin. However, the flow regulating members 43M are arranged on the downstream side (lower side) of the changing portion 411U. As a result, by passing through the portion where the flow regulating members 43M are arranged, the flow of the molten resin is aligned so as to form substantially a row in the front-rear direction, as shown by the flow fronts MF26. The flow fronts MF27 flow downward in the molding portion 460 for reinforced portion while pressing each other in the front-rear direction.

On the other hand, the flow path cross-sectional area sharply contracts toward right at the changing portion 411D. Therefore, a disturbance occurs in the flow of the molten resin. However, the flow regulating members 43D are arranged on the downstream side (lower side) of the changing portion 411D. As a result, by passing through the portion where the flow regulating members 43D are arranged, the flow of the molten resin is aligned so as to form substantially a row in the front-rear direction, as shown by the flow fronts MF28. The flow fronts MF29 flow downward in the molding portion 460 for reinforced portion while pressing each other in the front-rear direction. In this way, the molten resin spreads all over the cavity 46.

On the boundaries between the flow fronts, welds WL are formed. The glass fibers of the molten resin are oriented along the direction in which the welds WL extend (in the up-down direction). In this state, the molten resin is cooled and solidified in the cavity 46.

### Mold Opening Process

Next, the mold opening process will be described. In the mold opening process, the mold 1 is switched again from the mold clamped state as shown in FIGS. 22 and 23 to the mold open state as shown in FIG. 21. Specifically, the movable die 41 is separated to the left from the fixed die 40. Then, a gate cut (specifically, cutting the upper side of the baffle members 42) is performed and the resin molded product is obtained.

### Resin Molded Product

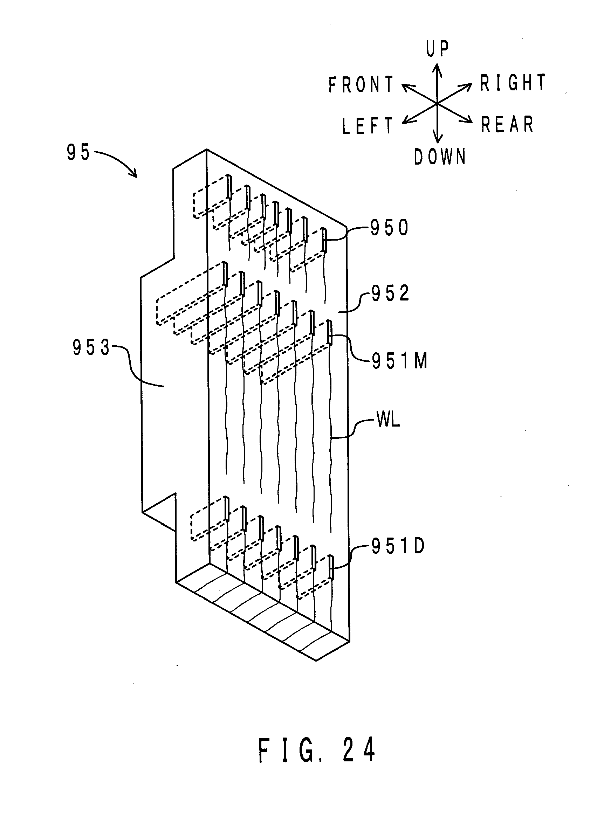

Next, the resin molded product of the present embodiment will be described. FIG. 24 shows a perspective view of the resin molded product of the present embodiment. Note that portions corresponding to those in FIG. 9 are denoted by the same reference symbols. The resin molded product 95 as described below is only schematic, and depending on the resin molding method and subsequent processing, there may be a case in which the welds WL cannot be identified in the resin molded product 95. In addition, the direction or range in which the welds WL extend may be different.

As shown in FIG. 24, the resin molded product 95 of the present embodiment has a rectangular plate shape elongated in the up-down direction. A protruding portion 953 protruding to the left is formed substantially in the center of the resin molded product 95 in the up-down direction. In addition, baffle member traces 950, flow regulating member traces 951M and 951D, and the welds WL are formed on the surface of the resin molded product 95. The resin molded product 95 also has a reinforced portion 952 that corresponds to the molding portion 460 for reinforced portion.

The baffle member traces 950 are formed as a hole at the upper end of the resin molded product 95. The flow regulating member traces 951M are formed as a hole at the upper end of the protruding portion 953. The flow regulating member traces 951D are formed as a hole at a portion below the lower end of the protruding portion 953. The welds WL extend downward substantially from the baffle member traces 950 and the flow regulating member traces 951M and 951D. The reinforced portion 952 is arranged at the portion where the welds WL are formed.

The clearance between a pair of the adjacent baffle member traces 940U and 940D in the front-rear direction is set so as to gradually be wider from a center toward both ends in the front-rear direction. The clearances between pairs of the adjacent flow regulating member traces 951M and 951D in the front-rear direction are set so as to be substantially equal to each other. The clearances between the welds WL extending from the baffle member traces 950 and the flow regulating member traces 951M and 951D are similar to the above-described clearances between the baffle member traces 950, between the flow regulating member traces 951M, and between the flow regulating member traces 951D.
In a cross section (fracture surface) of the reinforced portion 952 in the resin molded product 95, high orientation portions and low orientation portions are observed corresponding to the arrangement of the welds WL.

As described above, the resin molded product 95 of the present embodiment has at least one of the following aspects. The baffle member traces 950 are formed. The clearances between pairs of the adjacent baffle member traces 950 are unequal to each other. The welds WL extend substantially from the baffle member traces 950. The widths of the clearances between the baffle member traces 950 correspond to the widths of the clearances between the welds WL extending substantially from the baffle member traces 950. The flow regulating member traces 951 M and 951 D are formed in the vicinities of the portions where wall thickness changes (borders of the protruding portion 953). The welds WL extend substantially from the flow regulating member traces 951M and 951D. In the reinforced portion 952, at least the high orientation portions are observed in a cross section (fracture surface) substantially perpendicular to the direction in which the welds WL extend.

### Advantageous Effects

With respect to portions having common configurations, the resin molding method, the resin molded product 95, and the mold 1 of the present embodiment have the same advantageous effects as the resin molding method, the resin molded product, and the mold of the third embodiment.

In addition, according to the resin molding method and the mold 1 of the present embodiment, the flow regulating members 43M and the flow regulating members 43D are arranged on downstream sides of the changing portions 411U and 411D, respectively. Therefore, the flow of the molten resin that has been disturbed by passing through the changing portions 411U and 411D can be corrected quickly. Consequently, the orientation of the glass fibers on the downstream side of the flow regulating members 43M and 43D can be improved. In addition, by arranging the flow regulating members 43M and 43D at the downstream side of the changing portions 411U and 411D, the orientation of the glass fibers can be improved regardless of the shape of the resin flow path 90. As a result, the resin molded product 95 can be reinforced regardless of the shape thereof.

### Seventh Embodiment

A resin molding method, a resin molded product, and a mold according to a seventh embodiment of the present invention are different from the resin molding method, the resin molded product, and the mold of the sixth embodiment in that: the front-rear length of a cavity changes at changing portions instead of the left-right length; and three rows of flow regulating members are arranged instead of two rows. Therefore, only the differences will be mainly described here.

### Mold

First, the mold of the present embodiment will be described.

### Configuration of Mold

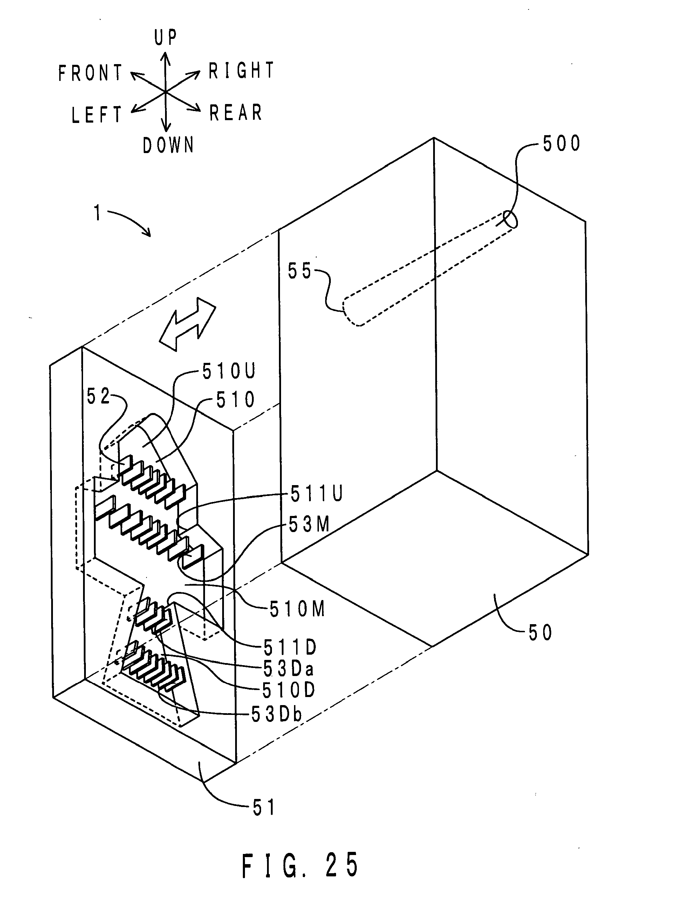

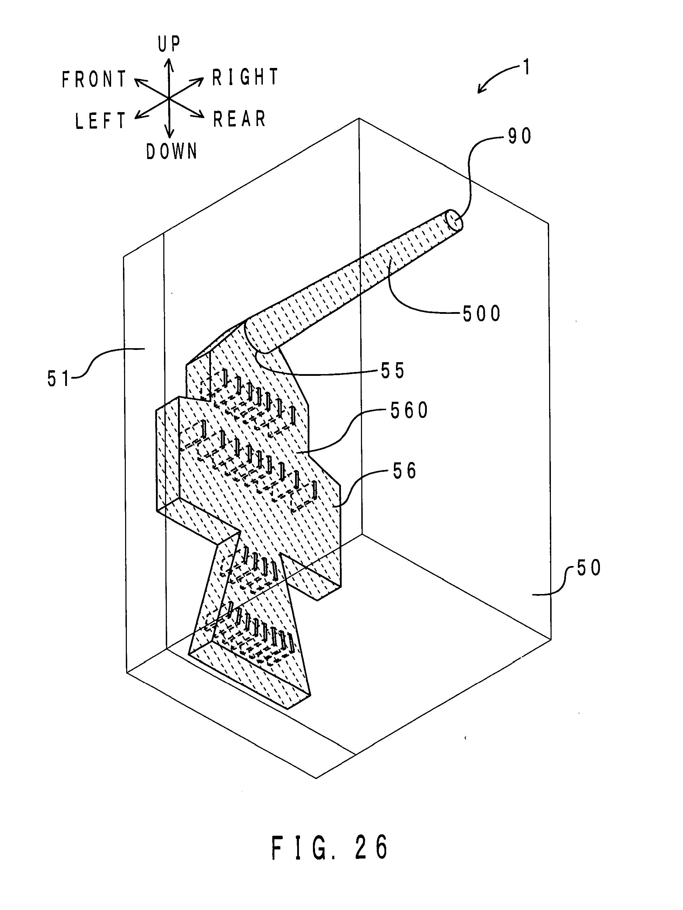

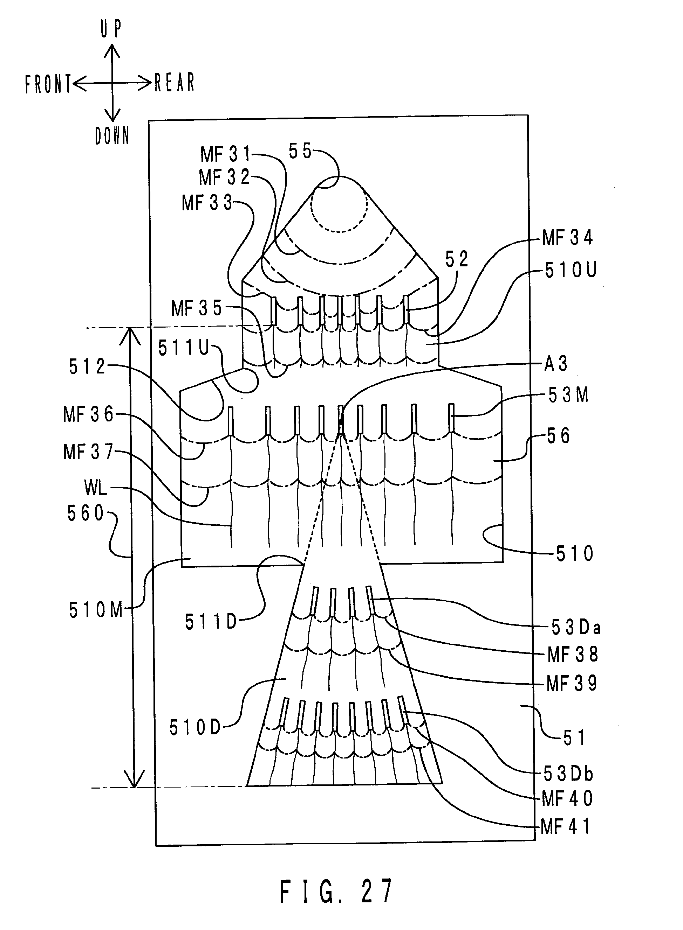

First, a configuration of the mold will be described. FIG. 25 shows a perspective view of the mold of the present embodiment in the mold open state. Note that portions corresponding to those in FIG. 21 are denoted by the same reference symbols. FIG. 26 shows a perspective view of the same mold in the mold clamped state. Note that portions corresponding to those in FIG. 22 are denoted by the same reference symbols. FIG. 27 shows a right view of a movable die of the same mold in the mold clamped state. Note that portions corresponding to those in FIG. 23 are denoted by the same reference symbols. As shown in FIGS. 25 to 27, the mold 1 has a fixed die 50, a movable die 51, baffle members 52, and flow regulating members 53M, 53Da, and 53Db.

The fixed die 50 is made of chromium molybdenum steel, and has a rectangular parallelepiped block shape. The fixed die 50 is formed with a sprue 500 and a gate 55. The sprue 500 penetrates the fixed die 50 in the left-right direction. The gate 55 is arranged at the left end of the sprue 500. The gate 55 is included in the expanding portion of the present invention.

The movable die 51 is made of chromium molybdenum steel, and has a rectangular plate shape. The movable die 51 is arranged on the left of the fixed die 50. A recessed portion 510 for cavity is provided on the right surface of the movable die 51. The recessed portion 510 for cavity has a small width portion 510U, a large width portion 510M, and a fan-shaped portion 510D. The small width portion 510U is arranged at the upper portion of the recessed portion 510 for cavity. The large width portion 510M is arranged below the small width portion 510U. The large width portion 510M has a larger front-rear length than that of the small width portion 510U. The fan-shaped portion 510D is arranged below the large width portion 510M. The front-rear length of the fan-shaped portion 510D is set so as to gradually be larger toward the lower side. A changing portion 511U is arranged at a boundary between the small width portion 510U and the large width portion 510M, whereas a changing portion 511D is arranged at a boundary between the large width portion 510M and the fan-shaped portion 510D. At the upper end of the large width portion 510M (at portions that continue to the changing portion 511U), a pair of front and rear tapered surfaces 512 (refer to FIG. 27) are arranged.

The baffle members 52 are provided so as to protrude rightward from the bottom surface of the small width portion 510U. The baffle members 52 are arranged on the lower left of the gate 55. The baffle members 52 have a rectangular plate shape. The baffle members 52 extend in the up-down direction. A total of seven baffle members 52 are juxtaposed in the front-rear direction.

The flow regulating members 53M are provided so as to provide rightward from the bottom surface of the large width portion 510M. The flow regulating members 53M are arranged below the changing portion 511U. The flow regulating members 53M have a rectangular plate shape. The flow regulating members 53M extend in the up-down direction. A total of seven flow regulating members 53M are juxtaposed in the front-rear direction.

The flow regulating members 53Da are provided so as to protrude rightward from the bottom surface of the fan-shaped portion 510D. The flow regulating members 53Da are arranged below the changing portion 511D. The flow regulating members 53Da have a rectangular plate shape. The flow regulating members 53Da extend in the up-down direction (in detail, in radial directions with respect to a fan shape center A3 of the fan-shaped portion 510D). A total of four flow regulating members 53Da are juxtaposed in the front-rear direction (in detail, in the direction of a circular arc around the fan shape center A3).

The flow regulating members 53Db are provided so as to protrude from the bottom surface of the fan-shaped portion 510D. The flow regulating members 53Db are arranged below the flow regulating members 53Da. The flow regulating members 53Db have a rectangular plate shape. The flow regulating members 53Db extend in the up-down direction (in detail, in radial directions centered on the fan shape center A3). A total of eight flow regulating members 53Db are juxtaposed in the front-rear direction (in detail, in the direction of a circular arc around the fan shape center A3).

In the mold open state, as shown in FIG. 25, the movable die 51 is spaced apart leftward from the fixed die 50. In the mold clamped state, as shown in FIG. 26, the left surface of the fixed die 50 and the right surface of the movable die 51 are in contact with each other. The baffle members 52 and the flow regulating members 53M, 53Da, and 53Db are also in contact with the left surface of the fixed die 50.

Clearances Between Baffle Members and Clearances Between Flow Regulating Members Next, clearances between the seven baffle members 52 will be described. Clearances between upper ends of pairs of the adjacent baffle members 52 are similar to those of the baffle members 42 (refer to FIG. 23) of the sixth embodiment. Therefore, description thereof will be omitted here

Next, clearances between the seven flow regulating members 53M will be described. Clearances between pairs of the adjacent flow regulating members 53M are similar to those of the baffle members 42 (refer to FIG. 23) of the sixth embodiment.
That is, the clearances between pairs of the adjacent flow regulating members 53M are set so as to be unequal to each other. Specifically, the clearances between upper ends of pairs of the adjacent flow regulating members 53M are set such that the clearance farther from the gate 55 has a wider width.

Next, clearances between the flow regulating members 53Da and 53Db will be described. Clearances between upper ends of pairs of the adjacent flow regulating members 53Da are set so as to be substantially equal to each other. Similarly, clearances between upper ends of pairs of the adjacent flow regulating members 53Db are also set so as to be substantially equal to each other.

### Configuration of Resin Flow Path

Next, a configuration of a resin flow path that is formed in the mold 1 will be described. A resin flow path 90 is formed inside the mold 1 in the mold clamped state, as shown by hatching in FIG. 26. The resin flow path 90 has the sprue 500, the gate 55, and a cavity 56.

The cavity 56 is formed by the left surface of the fixed die 50 and the recessed portion 510 for cavity of the movable die 51. The cavity 56 is arranged on the left of the gate 55. In the cavity 56, a molding portion 560 for reinforced portion is arranged below the portion where the baffle members 52 are arranged.

Inside the mold 1 in the mold clamped state, there is formed the resin flow path 90 that communicates the sprue 500, the gate 55, and the cavity 56 in this order from the upstream side to the downstream side. The flow path direction of the resin flow path 90 from the sprue 500 to the gate 55 is a right-left direction. The flow path direction of the resin flow path 90 in the cavity 56, that is, a desired orientation of the glass fibers, is the longitudinal direction of the cavity 56, that is, the up-down direction.

### Resin Molding Method

Next, the resin molding method of the present embodiment will be described. The resin molding method of the present embodiment has a mold clamping process, an injection process, and a mold opening process. The mold clamping process and the mold opening process are similar to those of the sixth embodiment. Therefore, description thereof will be omitted, and only the injection process will be described here.

In the injection process, the molten resin is injected from the nozzle of the molding machine into the resin flow path 90. Flow fronts MF31 to MF41 of the molten resin flow inside the cavity 56, as schematically shown by dashed-dotted lines in FIG. 27. That is, the molten resin flows inside the cavity 56 downward from the gate 55. The flow path cross-sectional area sharply expands at the gate 55. As a result, the molten resin flows into the cavity 56 while spreading after passing through the gate 55, as shown by the flow front MF31.

The flow rate in the flow path direction (up-down direction) of the flow front MF32 of the molten resin includes a variation. However, the clearances between upper ends of pairs of the adjacent baffle members 52 are set so as to be unequal to each other, similarly to those shown in FIG. 15. Therefore, the molten resin that has passed through the portion where the baffle members 52 are arranged has substantially a uniform flow rate, as shown by the transition from the flow fronts MF33 to the flow fronts MF34. The flow fronts MF35 flow downward in the molding portion 560 for reinforced portion while pressing each other in the front-rear direction.

The flow path cross-sectional area sharply expands in the front-rear direction at the changing portion 511U. Therefore, a disturbance occurs in the flow of the molten resin. However, the flow regulating members 53M are arranged on the downstream side (lower side) of the changing portion 511U. As a result, by passing through the portion where the flow regulating members 53M are arranged, the flow of the molten resin is aligned so as to form substantially a row in the front-rear direction, as shown by the flow fronts MF36.
The flow fronts MF37 flow downward in the molding portion 560 for reinforced portion while pressing each other in the front-rear direction.

On the other hand, the flow path cross-sectional area sharply contracts in the front-rear direction at the changing portion 511D. Therefore, a disturbance occurs in the flow of the molten resin. However, the flow regulating members 53Da are arranged on the downstream side (lower side) of the changing portion 511D. As a result, by passing through the portion where the flow regulating members 53Da are arranged, the flow of the molten resin is aligned so as to form substantially a row in the front-rear direction, as shown by the flow fronts MF38. The flow fronts MF39 flow downward in the molding portion 560 for reinforced portion while pressing each other in the front-rear direction.

The fan-shaped portion 510D spreads out downward in a fan shape (in an isosceles triangular shape) starting from the fan shape center A3. Therefore, the flow path cross-sectional area gradually becomes larger toward the lower side. Here, the flow regulating members 53Db forming another row of the flow regulating members are arranged on the downstream side (lower side) of the flow regulating members 53Da. Because the flow of the molten resin passes through the portion where the flow regulating members 53Db are arranged, welds WL increase, and thus the glass fibers are further oriented. The flow fronts MF41 flow downward in the molding portion 560 for reinforced portion while pressing each other in the front-rear direction. In this way, the molten resin spreads all over the cavity 56.

On the boundaries between the flow fronts, the welds WL are formed. The glass fibers of the molten resin are oriented along the direction in which the welds WL extend. In this state, the molten resin is cooled and solidified in the cavity 56.

### Resin Molded Product

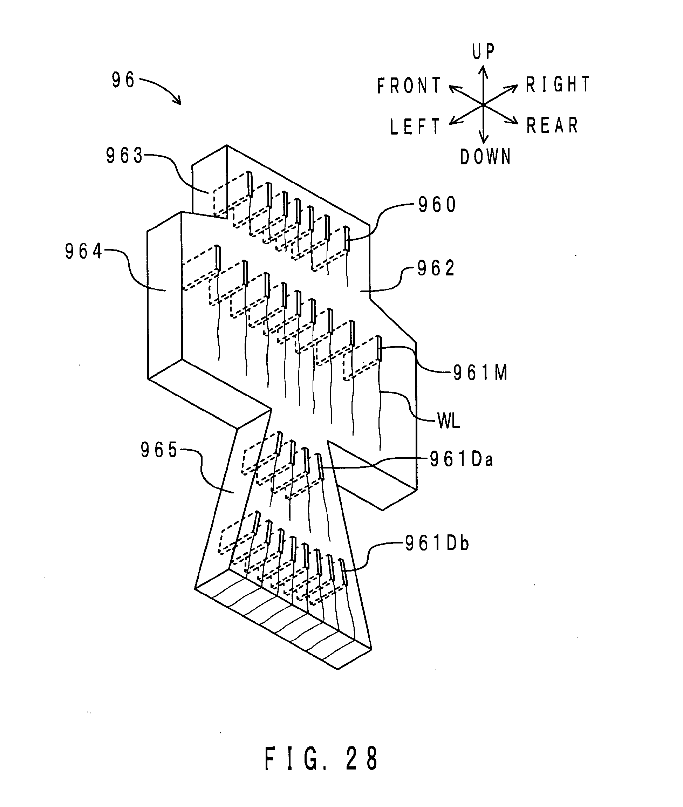

Next, the resin molded product of the present embodiment will be described. FIG. 28 shows a perspective view of the resin molded product of the present embodiment. Note that portions corresponding to those in FIG. 24 are denoted by the same reference symbols. The resin molded product 96 as described below is only schematic, and depending on the resin molding method and subsequent processing, there may be a case in which the welds WL cannot be identified in the resin molded product 96. In addition, the direction or range in which the welds WL extend may be different.

As shown in FIG. 28, the resin molded product 96 of the present embodiment has a small width portion 963 (corresponding to the small width portion 510U), a large width portion 964 (corresponding to the large width portion 510M), and a fan-shaped portion 965 (corresponding to the fan-shaped portion 510D). In addition, baffle member traces 960, flow regulating member traces 96 1 M, 961 Da, and 96 1 Db, and the welds WL are formed on the surface of the resin molded product 96. The resin molded product 96 also has a reinforced portion 962 that corresponds to the molding portion 560 for reinforced portion.

The baffle member traces 960 are formed as a hole at the upper end of the small width portion 963. The flow regulating member traces 961M are formed as a hole at the upper end of the large width portion 964. The flow regulating member traces 961 Da are formed as a hole at the upper end of the fan-shaped portion 965. The flow regulating member traces 961Db are formed as a hole at a portion below the flow regulating member traces 961Da. The welds WL extend downward substantially from the baffle member traces 960 and the flow regulating member traces 961M, 961 Da, and 961Db. The reinforced portion 962 is arranged at the portion where the welds WL are formed.

The clearance between a pair of the adjacent baffle member traces 960 in the front-rear direction and the clearance between a pair of the adjacent flow regulating member traces 96 1 M in the front-rear direction are set so as to gradually be wider from a center toward both ends in the front-rear direction. The clearances between pairs of the adjacent flow regulating member traces 961Da in the front-rear direction and also the clearances between pairs of the adjacent flow regulating member traces 961 Db in the front-rear direction are set so as to be substantially equal to each other. The clearances between the welds WL extending from the baffle member traces 960 and from the flow regulating member traces 961M, 961Da, and 961Db reflect the above-described clearances between the baffle member traces 960, between the flow regulating member traces 961 M, between the flow regulating member traces 961 Da, and between the flow regulating member traces 961Db. In a cross section (fracture surface) of the reinforced portion 962 in the resin molded product 96, high orientation portions and low orientation portions are observed corresponding to the arrangement of the welds WL.

As described above, the resin molded product 96 of the present embodiment has at least one of the following aspects. The baffle member traces 960 are formed. The clearances between pairs of the adjacent baffle member traces 960 are unequal to each other. The welds WL extend substantially from the baffle member traces 960. The widths of the clearances between the baffle member traces 960 correspond to the widths of the clearances between the welds WL extending substantially from the baffle member traces 960. The flow regulating member traces 961M and 961Da are formed in the vicinities of the portions where the width changes. The welds WL extend substantially from the flow regulating member traces 961M, 961 Da, and 961Db. In the reinforced portion 962, at least the high orientation portions are observed in a cross section (fracture surface) substantially perpendicular to the direction in which the welds WL extend.

### Advantageous Effects

With respect to portions having common configurations, the resin molding method, the resin molded product 96, and the mold 1 of the present embodiment have the same advantageous effects as the resin molding method, the resin molded product, and the mold of the sixth embodiment.

In addition, the clearances between pairs of the adjacent flow regulating members 53M may be unequal to each other corresponding to the variation in the flow rate of the molten resin, as in the case of the resin molding method and the mold 1 of the present embodiment. By such arrangement, the orientation of the glass fibers is further improved.

Moreover, the flow regulating members 53M and 53Da may be arranged on the downstream side of the portions (changing portions 511 U and 511 D) where the front-rear length of the cavity 56 changes instead of the left-right length, as in the case of the resin molding method and the mold 1 of the present embodiment. Furthermore, the flow regulating members 53Db may be consecutively provided on the downstream side of the flow regulating members 53Da.

Moreover, according to the resin molding method and the mold 1 of the present embodiment, the pair of front and rear tapered surfaces 512 are arranged at the upper end of the large width portion 510M (at the portions that continue to the changing portion 511U), as shown in FIG. 27. Therefore, the flow of the molten resin easily spreads in the front-rear direction. Consequently, the flow of the molten resin can be flowed around the two flow regulating members 53M on the front and rear ends.

By appropriately arranging the flow regulating members 53M, 53Da, and 53Db, the orientation of the glass fibers can be improved regardless of the shape of the resin flow path 90. Therefore, the resin molded product 96 can be reinforced regardless of the shape thereof.

### Eighth Embodiment

A resin molding method, a resin molded product, and a mold according to an eighth embodiment of the present invention are different from the resin molding method, the resin molded product, and the mold of the third embodiment in that: baffle members are arranged upright in the front-rear direction instead of upright in the left-right direction; and clearances between pairs of the adjacent baffle members are set so as to be substantially equal to each other. Therefore, only the differences will be mainly described here.

### Mold

First, the mold of the present embodiment will be described.

### Configuration of Mold

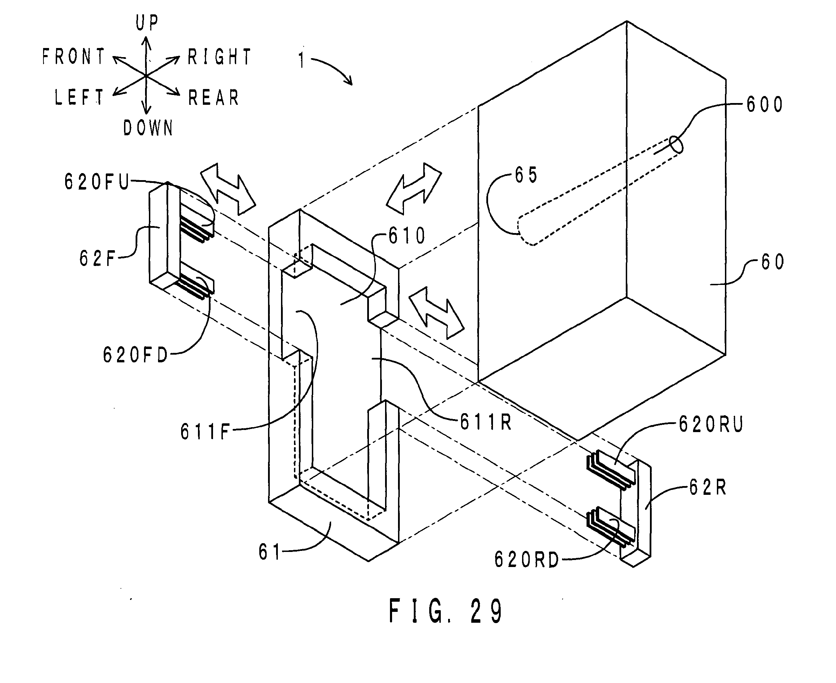

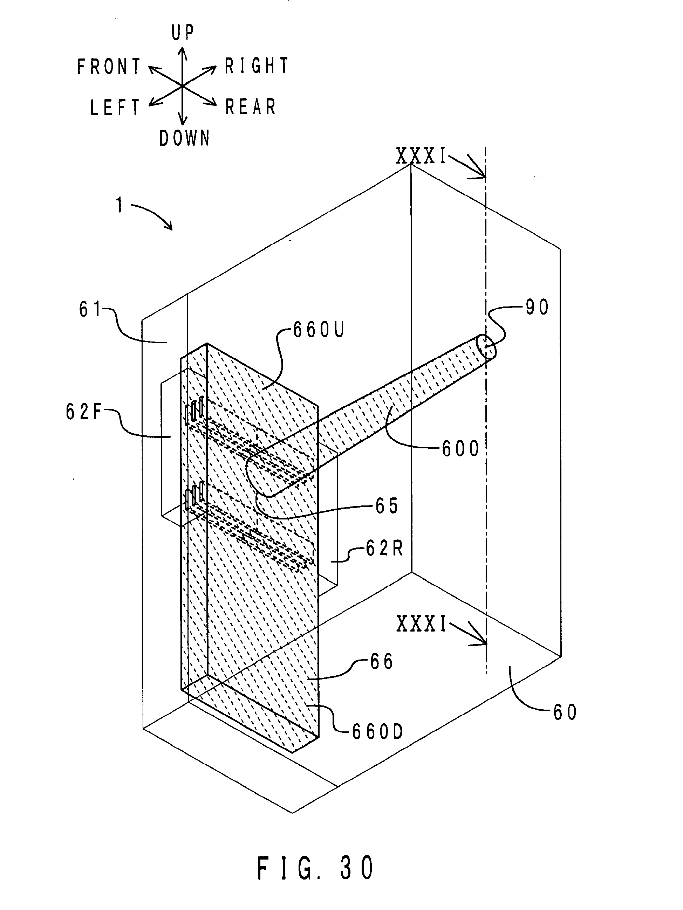

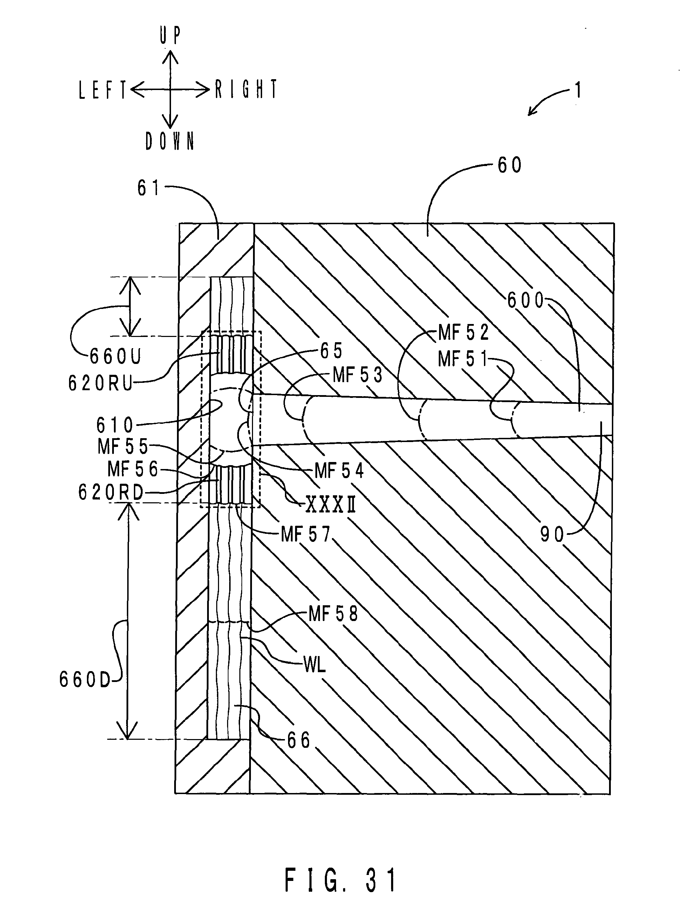

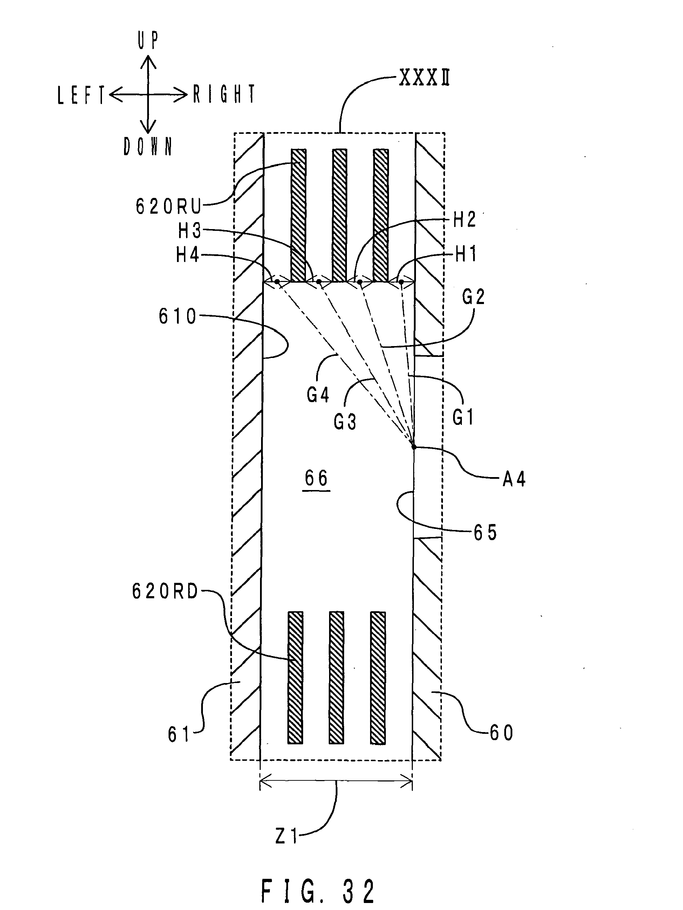

First, a configuration of the mold will be described. FIG. 29 shows a perspective view of the mold of the present embodiment in the mold open state. Note that portions corresponding to those in FIG. 1 are denoted by the same reference symbols. FIG. 30 shows a perspective view of the same mold in the mold clamped state. Note that portions corresponding to those in FIG. 2 are denoted by the same reference symbols. FIG. 31 shows a cross-sectional view in the direction of arrows XXXI-XXXI of FIG. 30. FIG. 32 shows an enlarged view in frame XXXII of FIG. 31. As shown in FIGS. 29 to 32, the mold 1 has a fixed die 60, a movable die 61, and slide cores 62F and 62R for baffle members.

The fixed die 60 is made of chromium molybdenum steel, and has a rectangular parallelepiped block shape. The fixed die 60 is formed with a sprue 600 and a gate 65. The sprue 600 is provided in a portion of the right surface of the fixed die 60, higher than the center thereof. The sprue 600 penetrates the fixed die 60 in the left-right direction. The gate 65 is arranged at the left end of the sprue 600. The gate 65 is included in the expanding portion of the present invention.

The movable die 61 is made of chromium molybdenum steel, and has a rectangular plate shape. The movable die 61 is arranged on the left of the fixed die 60. The movable die 61 is capable of contacting or separating from the fixed die 60 in the left-right direction. A recessed portion 610 for cavity is provided on the right surface of the movable die 61. The recessed portion 610 for cavity has a shallow bottom, and has a rectangular shape.

The front wall of the movable die 61 is formed with a rectangular recessed portion 611F for slide core. The recessed portion 611F for slide core extends in the front-rear direction. The recessed portion 611F for slide core is communicated with the recessed portion 610 for cavity.

On the other hand, the rear wall of the movable die 61 is formed with a rectangular recessed portion 611R for slide core. The recessed portion 611R for slide core extends in the front-rear direction. The recessed portion 611R for slide core is communicated with the recessed portion 610 for cavity. In addition, the recessed portion 611R for slide core faces the recessed portion 611F for slide core in the front-rear direction.

The slide core 62F for baffle members is made of chromium molybdenum steel, and has a rectangular parallelepiped block shape. The slide core 62F for baffle members is capable of approaching from or recede to the front, relative to the recessed portion 611F for slide core of the movable die 61. The rear surface of the slide core 62F for baffle members is integrally formed with baffle members 620FU and 620FD.

The baffle members 620FU are arranged at the upper portion of the rear surface of the slide core 62F for baffle members. The baffle members 620FU have a rectangular plate shape. The baffle members 620FU extend in the front-rear direction. A total of three baffle members 620FU are juxtaposed in the left-right direction.

The baffle members 620FD are arranged at the lower portion of the rear surface of the slide core 62F for baffle members. The baffle members 620FD have a rectangular plate shape. The baffle members 620FD extend in the front-rear direction. A total of three baffle members 620FD are juxtaposed in the left-right direction. The three baffle members 620FD and the three baffle members 620FU face each other in the up-down direction.

The slide core 62R for baffle members is made of the same material and has the same configuration as the above-described slide core 62F for baffle members. Besides, the slide core 62R for baffle members is arranged symmetrically in the front-rear direction to the slide core 62F for baffle members with respect to the sprue 600. In other words, the slide core 62R for baffle members is capable of approaching from and receding to the rear, relative to the recessed portion 611R for slide core of the movable die 61. The front surface of the slide core 62R for baffle members is integrally formed with three baffle members 620RU and three baffle members 620RD. The three baffle members 620RU face the three baffle members 620FU in the front-rear direction, and the three baffle members 620RD face the three baffle members 620FD in the front-rear direction.

In the mold open state, as shown in FIG. 29, the movable die 61 is spaced apart leftward from the fixed die 60. In addition, the slide core 62F for baffle members and the slide core 62R for baffle members are spaced forward and rearward, respectively, apart from the movable die 61.

In the mold clamped state, as shown in FIG. 30, the slide core 62F for baffle members enters from the front into the recessed portion 611F for slide core of the movable die 61, whereas the slide core 62R for baffle members enters from the rear into the recessed portion 611R for slide core. In addition, the left surface of the fixed die 60 and the right surface of the movable die 61 are in contact with each other. The rear end surface of each of the three baffle members 620FU and the front end surface of each of the three baffle members 620RU are in contact with each other. The rear end surface of each of the three baffle members 620FD and the front end surface of each of the three baffle members 620RD are also in contact with each other.

### Clearances Between Baffle Members

Next, clearances between the three baffle members 620RU will be described. As shown in FIG. 32, clearances H2 and H3 between pairs of the adjacent baffle members 620RU (hatched for convenience of description), a clearance H1 between the left surface of the fixed die 60 and the baffle member 620RU, and a clearance H4 between the bottom surface of the recessed portion 610 for cavity and the baffle member 620RU are set so as to be substantially equal to each other.

On the other hand, center-to-center distances G1 to G4 from a center A4 of the gate 65 to centers of the clearances H1 to H4 are unequal to each other. Specifically, the center-to-center distances G1 to G4 are set such that G1 < G2 < G3 < G4. More specifically, the clearances H1 to H4 are set so as to be substantially equal to each other, regardless of whether the center-to-center distances G1 to G4 are long or short. Note that other clearances between the baffle members 620RD, 620FU, and 620FD are set in the same way as the clearances between the baffle members 620RU.

### Configuration of Resin Flow Path

Next, a configuration of a resin flow path that is formed in the mold 1 will be described. A resin flow path 90 is formed inside the mold 1 in the mold clamped state, as shown by hatching in FIG. 30. The resin flow path 90 has the sprue 600, the gate 65, and a cavity 66.

The cavity 66 is formed by the left surface of the fixed die 60, the recessed portion 610 for cavity of the movable die 61, the rear surface of the slide core 62F for baffle members, and the front surface of the slide core 62R for baffle members. The cavity 66 is arranged on the left of the gate 65. In the cavity 66, a molding portion 660U for reinforced portion is arranged above the portion where the baffle members 620FU and 620RU are arranged. Similarly, in the cavity 66, a molding portion 660D for reinforced portion is arranged below the portion where the baffle members 620FD and 620RD are arranged.

Inside the mold 1 in the mold clamped state, there is formed the resin flow path 90 that communicates the sprue 600, the gate 65, and the cavity 66 in this order from the upstream side to the downstream side. The flow path direction of the resin flow path 90 from the sprue 600 to the gate 65 is a right-left direction. The flow path direction of the resin flow path 90 in the cavity 66, that is, a desired orientation of the glass fibers, is the longitudinal direction of the cavity 66, that is, the up-down direction.

### Resin Molding Method

Next, the resin molding method of the present embodiment will be described. The resin molding method of the present embodiment has a mold clamping process, an injection process, and a mold opening process.

### Mold Clamping Process

First, the mold clamping process will be described. In the mold clamping process, the mold 1 is switched from the mold open state as shown in FIG. 29 to the mold clamped state as shown in FIGS. 30 to 32. Specifically, the slide core 62F for baffle members are entered from the front into the recessed portion 611F for slide core of the movable die 61. In addition, the slide core 62R for baffle members are entered from the rear into the recessed portion 611R for slide core of the movable die 61. Subsequently, the movable die 61 to which the slide cores 62F and 62R for baffle members are mounted is brought into contact from left with the fixed die 60.

### Injection Process

Next, the injection process will be described. In the injection process, the molten resin is injected from the nozzle of the molding machine into the resin flow path 90.

Flow fronts MF51 to MF58 of the molten resin flow inside the resin flow path 90, as schematically shown by dashed-dotted lines in FIG. 31. That is, the molten resin flows inside the sprue 600 from right to left, as shown by the transition from the flow front MF51 to the flow front MF52 and then to the flow front MF53. The flow path cross-sectional area of the resin flow path 90 sharply expands at the gate 65. As a result, the molten resin flows into the cavity 66 while spreading after passing through the gate 65, as shown by the transition from the flow front MF54 to the flow front MF55.

As shown in FIG. 32, although the center-to-center distances G1 to G4 are related so that G1 < G2 < G3 < G4, the clearances H1 to H4 are set so as to be substantially equal to each other. However, a length Z1 of the portion where the baffle members 620FU, 620FD, 620RU, and 620RD are arranged in the cavity 66 is set to 12 mm in the direction of juxtaposition (in the left-right direction) of the baffle members 620FU, 620FD, 620RU, and 620RD. Therefore, as shown by the flow front MF56, the variation in the flow rate of the molten resin is small at the upstream end of the baffle members 620RD.

The molten resin that has passed through the portion where the baffle members 620RD are arranged flows downward in the molding portion 660D for reinforced portion, as shown by the transition from the flow front MF57 to the flow front MF58. Then, the molten resin reaches the lower end of the cavity 66. Similarly, the molten resin that has passed through the portion where the baffle members 620RU are arranged flows upward in the molding portion 660U for reinforced portion. Then, the molten resin reaches the upper end of the cavity 66. On the boundaries between the branched flow fronts, welds WL are formed. In this state, the molten resin is cooled and solidified in the cavity 66.

### Mold Opening Process

Next, the mold opening process will be described. In the mold opening process, the mold 1 is switched again from the mold clamped state as shown in FIGS. 30 to 32 to the mold open state as shown in FIG. 29. Specifically, the movable die 61 is separated to the left from the fixed die 60. Then, the slide core 62F for baffle members is pulled out forward from the recessed portion 611F for slide core of the movable die 61. In addition, the slide core 62R for baffle members is pulled out rearward from the recessed portion 611R for slide core of the movable die 61. Then, a gate cut is performed, and the resin molded product is obtained.

### Resin Molded Product

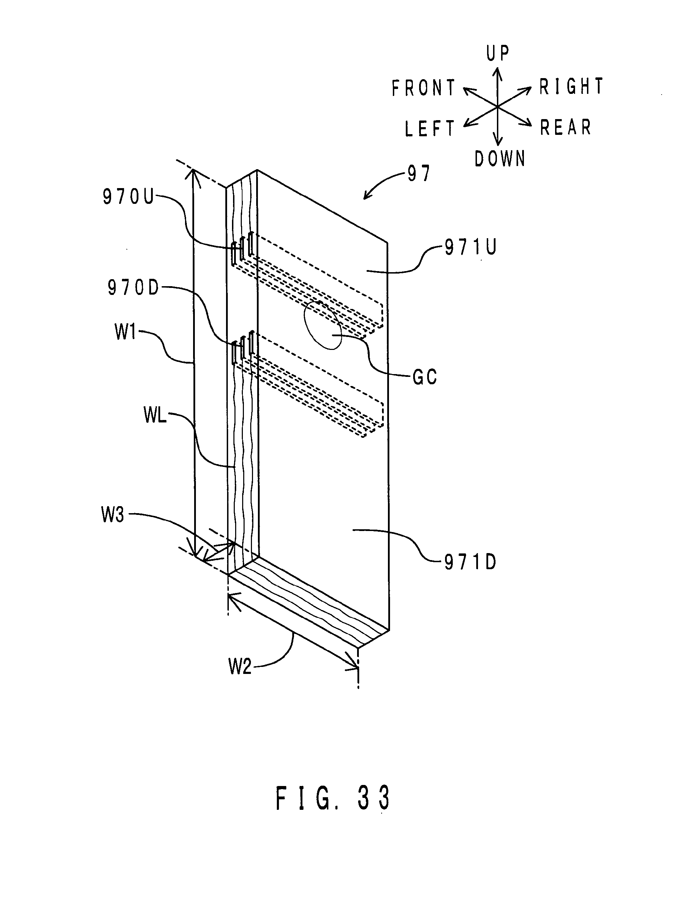

Next, the resin molded product of the present embodiment will be described. FIG. 33 shows a perspective view of the resin molded product of the present embodiment. Note that portions corresponding to those in FIG. 9 are denoted by the same reference symbols. The resin molded product 97 as described below is only schematic, and depending on the resin molding method and subsequent processing, there may be a case in which the welds WL and a gate cut trace GC cannot be identified in the resin molded product 97. In addition, the direction or range in which the welds WL extend may be different.

As shown in FIG. 33, the resin molded product 97 of the present embodiment has a long rectangular plate shape in the up-down direction. Specifically, the resin molded product 97 has an up-down length W1 of 130 mm, a front-rear length W2 of 50 mm, and a left-right length W3 of 12 mm. Note that the left-right length W3 corresponds to the left-right length Z1 (= 12 mm) of the cavity 66 shown in FIG. 32.

A gate cut trace GC, baffle member traces 970U and 970D, and the welds WL are formed on the surface of the resin molded product 97. The resin molded product 97 has a pair of upper and lower reinforced portions 971 U and 971 D. The reinforced portions 971U and 971D correspond to the molding portion 660U for reinforced portion and the molding portion 660D for reinforced portion, respectively. The gate cut trace GC is formed at a portion of the surface of the resin molded product 97, higher than the center thereof. The gate cut trace GC has substantially a perfect circle shape.

The baffle member traces 970U and 970D penetrate the resin molded product 97 in the front-rear direction. A total of three baffle member traces 970U are juxtaposed in the left-right direction. Similarly, a total of three of the baffle member traces 970D are juxtaposed in the left-right direction. The welds WL extend upward and downward substantially from the baffle member traces 970U and 970D. The reinforced portions 971U and 971D are arranged in the portion where the welds WL are formed.

Clearances between pairs of the adjacent baffle member traces 970U and 970D in the left-right direction are substantially equal to each other. Similarly, clearances between pairs of the adjacent welds WL in the left-right direction are substantially equal to each other. In cross sections (fracture surfaces) of the reinforced portions 971 and 97 1 D in the resin molded product 97, high orientation portions and low orientation portions are observed corresponding to the arrangement of the welds WL.

As described above, the resin molded product 97 of the present embodiment has at least one of the following aspects. A single piece of the gate cut trace GC is formed. In the vicinity of the gate cut trace GC, the baffle member traces 970U and 970D are formed that extend substantially in parallel with the surface on which the gate cut trace GC is formed. The welds WL extend substantially from the baffle member traces 970U and 970D, in directions to separate from the gate cut trace GC. The clearances between pairs of the adjacent baffle member traces 970U and 970D are substantially equal to each other. The clearances between pairs of the adjacent welds WL are substantially equal to each other. In the reinforced portions 971U and 971D, at least the high orientation portions are observed in cross sections (fracture surfaces) substantially perpendicular to the direction in which the welds WL extend.

### Advantageous Effects

With respect to portions having common configurations, the resin molding method, the resin molded product 97, and the mold 1 of the present embodiment have the same advantageous effects as the resin molding method, the resin molded product, and the mold of the third embodiment.

In addition, according to the resin molding method and the mold 1 of the present embodiment, although the center-to-center distances G1 to G4 are set such that G1 < G2 < G3 < G4, the clearances H1 to H4 are set so as to be substantially equal to each other, as shown in FIG. 32. If the left-right length of the cavity 66 is short (specifically, less than 20 mm), the variation in the flow rate of the molten resin on the upstream side of the baffle members 620FU, 620FD, 620RU, and 620RD is small. Therefore, the orientation of the glass fibers can be improved even if the clearances H1 to H4 are set so as to be substantially equal to each other.

### Ninth Embodiment

A resin molding method, a resin molded product, and a mold according to a ninth embodiment of the present invention are different from the resin molding method, the resin molded product, and the mold of the first embodiment in that the resin molded product is an engine mount. Therefore, only the differences will be mainly described here.

### Mold

First, the mold of the present embodiment will be described.

### Configuration of Mold

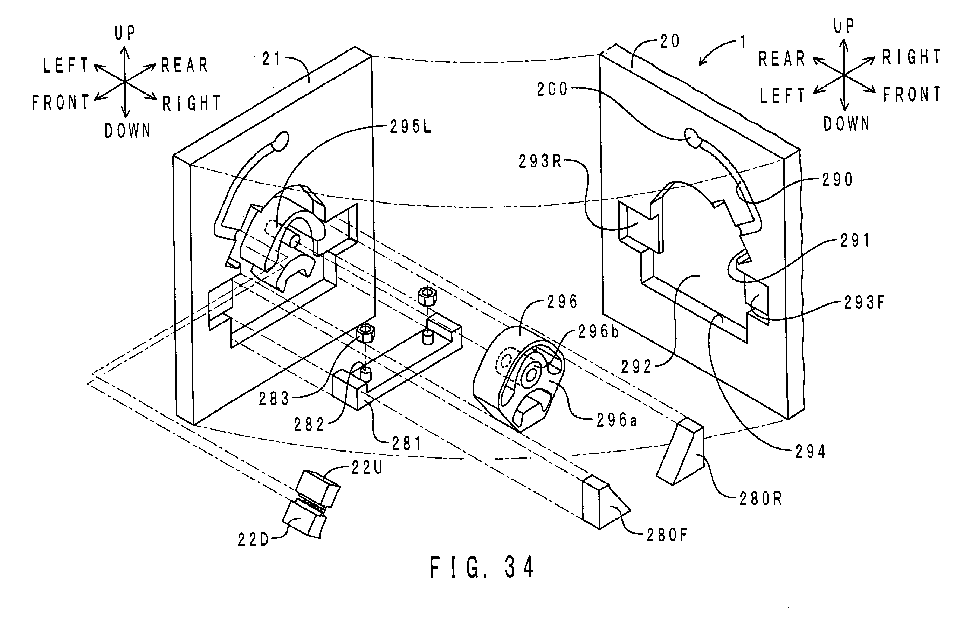

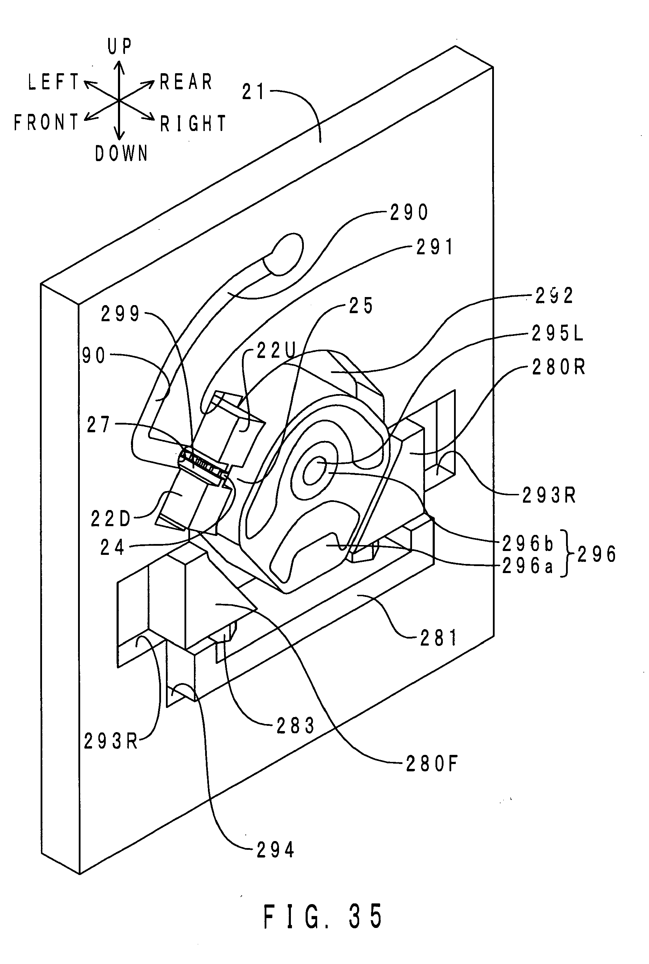

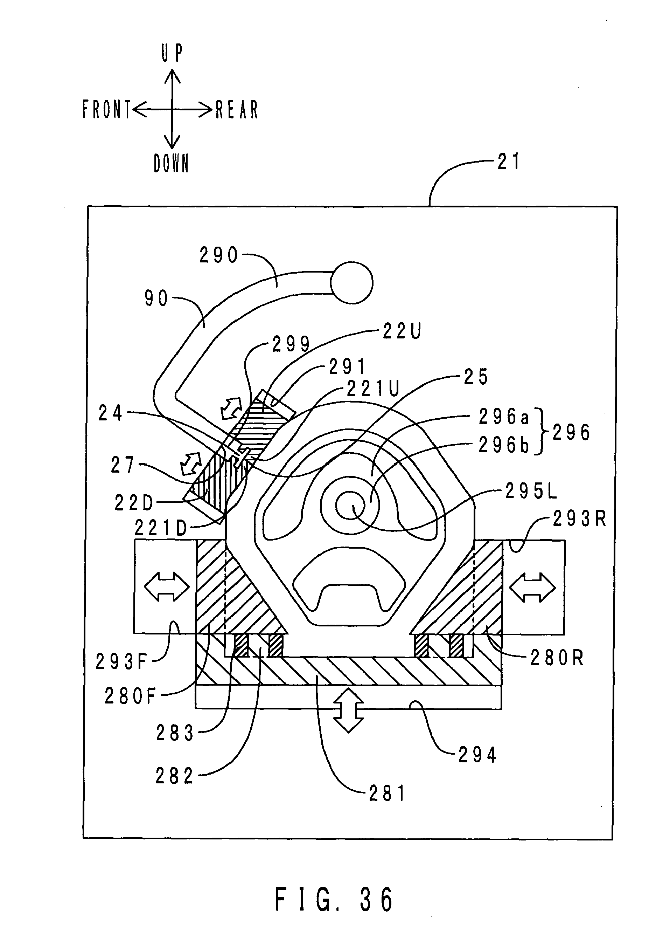

First, a configuration of the mold will be described. FIG. 34 shows a perspective view of the mold of the present embodiment in the mold open state. Note that portions corresponding to those in FIG. 1 are denoted by the same reference symbols. Only the vicinity of the left surface of a fixed die 20 is shown. FIG. 35 shows a perspective view of a movable die of the same mold in the mold clamped state. Note that portions corresponding to those in FIG. 2 are denoted by the same reference symbols. FIG. 36 shows a right view of the same movable die in the mold clamped state. Note that portions corresponding to those in FIG. 6 are denoted by the same reference symbols.

As shown in FIGS. 34 to 36, the mold 1 has the fixed die 20, the movable die 21, slide cores 22U and 22D for baffle members, slide cores 280F and 280R for recessed portion, and a slide core 281 for nut fixing.

The fixed die 20 and the movable die 21 are made of chromium molybdenum steel, and both have a rectangular parallelepiped block shape. By bringing the left surface of the fixed die 20 into contact with the right surface of the movable die 21, there are formed a first runner 290, a recessed portion 291 for slide core, a cavity 292, a front recessed portion 293F, a rear recessed portion 293R, and a lower recessed portion 294, between the fixed die 20 and the movable die 21.

The cavity 292 is arranged substantially in the center between the left surface of the fixed die 20 and the right surface of the movable die 21. A projection 295L is provided on the right surface of the movable die 21. The projection 295L is arranged in the cavity 292. In the mold clamped state, an end of the projection 295L is in contact with the left surface of the fixed die 20. An elastic member 296 is mounted on the projection 295L. That is, the elastic member 296 is arranged in the cavity 292. Specifically, the elastic member 296 is integrally provided with a main body 296a made of rubber and a cylindrical portion 296b made of metal. The projection 295L is inserted in the cylindrical portion 296b.

The front recessed portion 293F and the rear recessed portion 293R are connected to the front and the rear, respectively, of the cavity 292. The slide core 280F for recessed portion and the slide core 280R for recessed portion are housed in the front recessed portion 293F and the rear recessed portion 293R, respectively, so as to be movable in the front-rear direction.

The lower recessed portion 294 is connected to the lower side of the cavity 292. The slide core 281 for nut fixing is housed in the lower recessed portion 294 so as to be movable in the up-down direction. A pair of projections 282 in the front-rear direction are arranged on the upper surface of the slide core 281 for nut fixing. Nuts 283 are fit around the projections 282.

The recessed portion 291 for slide core is arranged on the upper front side of the cavity 292. In the recessed portion 291 for slide core, the slide cores 22U and 22D for baffle members are housed in a movable manner from the upper rear to the lower front.

Here, the recessed portion 291 for slide core and the slide cores 22U, 22D for baffle members have the same shapes and configurations as the recessed portion 201 for slide core and the slide cores 22U, 22D for baffle members of the first embodiment shown in FIGS. 1 to 5 described above. Therefore, description thereof will be omitted here.

A sprue 200 extending in the left-right direction is provided in the fixed die 20. That is, the left end of the sprue 200 is open on the left surface of the fixed die 20. The first runner 290 connects the left end of the sprue 200 with substantially the center of the recessed portion 291 for slide core in the longitudinal direction.

### Configuration of Resin Flow Path

Next, a configuration of a resin flow path that is formed in the mold 1 will be described. A resin flow path 90 is formed inside the mold 1 in the mold clamped state. The resin flow path 90 has the sprue 200, the first runner 290, a second runner 299, a neck portion 24, eight gates 25, and the cavity 292.

The second runner 299 is connected to the lower end of the first runner 290. At the expanding portion 27 forming a boundary between the first runner 290 and the second runner 299, the flow path cross-sectional area of the resin flow path 90 (cross-sectional area in the direction substantially perpendicular to the flow path direction because molten resin flows from the upper front to the lower rear in this portion) sharply increases.

The neck portion 24 and the eight gates 25 are arranged between the slide cores 22U and 22D for baffle members. Here, the neck portion 24 and the eight gates 25 have the same shapes and configurations as the neck portion 24 and the eight gates 25 of the first embodiment shown in FIGS. 1 to 5 described above. Therefore, description thereof will be omitted here.

As described above, inside the mold 1 in the mold clamped state, there is formed the resin flow path 90 that communicates the sprue 200, the first runner 290, the second runner 299, the neck portion 24, the eight gates 25, and the cavity 292 in this order from the upstream side to the downstream side. The flow path direction of the resin flow path 90 in the cavity 292, that is, a desired filler orientation, is the direction in which the cavity 292 extends, that is, the circumferential direction centered on the elastic member 296.

### Resin Molding Method

Next, the resin molding method of the present embodiment will be described. The resin molding method of the present embodiment has a mold clamping process, an injection process, and a mold opening process.

### Mold Clamping Process

First, the mold clamping process will be described. In the mold clamping process, the mold 1 is switched from the mold open state as shown in FIG. 34 to the mold clamped state as shown in FIGS. 35 and 36. Specifically, first, the elastic member 296 is mounted to the projection 295L. Next, the movable die 21 is brought into contact from left with the fixed die 20. Then, the slide cores 22U and 22D for baffle members are brought into contact with each other in the recessed portion 291 for slide core. In addition, the slide core 280F for recessed portion is moved rearward in the front recessed portion 293F. The slide core 280R for recessed portion is moved forward in the rear recessed portion 293R. The slide core 281 for nut fixing that is already fitted with the nuts 283 is moved upward in the lower recessed portion 294.

### Injection Process

Next, the injection process will be described. In the injection process, the molten resin is injected from the nozzle of the molding machine into the resin flow path 90. The molten resin contains Nylon 66 and glass fibers. Nylon 66 is contained in a base material according to the present invention. The glass fibers are contained in a filler according to the present invention. The glass fibers are dispersed in Nylon 66 in the molten state.
The cylinder temperature of the molding machine is approximately 290 C. The temperature of the mold 1 is approximately 80 C.

The molten resin flows inside the resin flow path 90. The flow path cross-sectional area of the resin flow path 90 sharply expands at the expanding portion 27. As a result, the molten resin flows into the second runner 299 while spreading after passing through the expanding portion 27. The flow rate of the molten resin that has flowed into the second runner 299 includes a variation. However, the variation in the flow rate of the molten resin is corrected because the flow passes through the neck portion 24. The variation in the flow rate of the molten resin is also corrected because the flow passes through the eight gates 25 that are separated by the seven baffle members 221U and the seven baffle members 221D.

The molten resin that has branched into eight flows by passing through the eight gates 25 flows into the cavity 292. The molten resin that has flowed into the cavity 292 collides against the elastic member 296 to further branch into two flows in the upper rear and lower front directions. Then, the molten resin spreads all over the cavity 292. The molten resin is cooled and solidified in the cavity 292.

### Mold Opening Process

Next, the mold opening process will be described. In the mold opening process, the mold 1 is switched again from the mold clamped state as shown in FIGS. 35 and 36 to the mold open state as shown in FIG. 34. Specifically, the slide cores 22U and 22D for baffle members are separated from each other in the recessed portion 291 for slide core.
In addition, the slide core 280F for recessed portion is moved forward in the front recessed portion 293F. The slide core 280R for recessed portion is moved rearward in the rear recessed portion 293R. The slide core 281 for nut fixing is moved downward in the lower recessed portion 294. Subsequently, the movable die 21 is separated to the left from the fixed die 20. Then, a gate cut is performed, and the engine mount is completed.

### Resin Molded Product

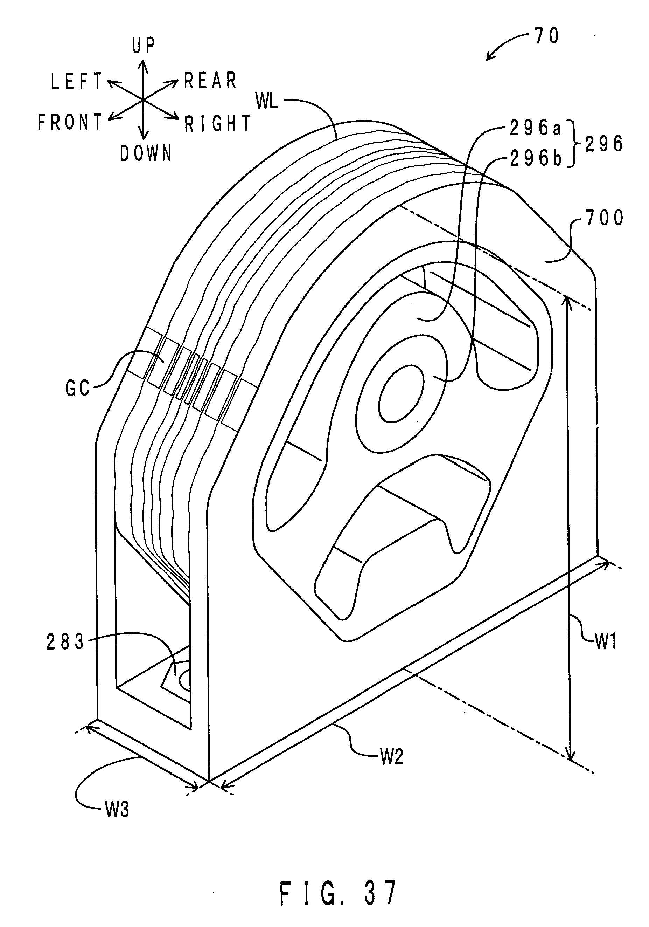

Next, the engine mount of the present embodiment will be described. FIG. 37 shows a perspective view of the engine mount of the present embodiment. Note that portions corresponding to those in FIG. 9 are denoted by the same reference symbols.
The engine mount 70 as described below is only schematic, and depending on the resin molding method and subsequent processing, there may be a case in which the welds WL, gate cut traces GC, and contrasts between high orientation portions and low orientation portions cannot be identified in the engine mount 70. In addition, the direction or range in which the welds WL extend may be different.

As shown in FIG. 37, the engine mount 70 of the present embodiment is integrally provided with a bracket 700 and the elastic member 296. The engine mount 70 has an up-down length W1 of 110 mm, a front-rear length W2 of 100 mm, and a left-right length W3 of 50 mm. The engine mount 70 is used for fixing a vehicle engine to a vehicle body. By the engine mount 70, vibration of the engine is suppressed to be transmitted to the vehicle body.

Seven welds WL and eight gate cut traces GC are formed on the surface of the bracket 700. The eight gate cut traces GC are aligned substantially in a row in the left-right direction. When the areas of the eight gate cut traces GC are compared with each other, the areas of the two gate cut traces GC located in the center in the left-right direction are the smallest. Besides, the areas of the two gate cut traces GC located at both ends in the left-right direction are the largest.

The seven welds WL circumferentially extend, centered on the elastic member 296. The seven welds WL partition the eight gate cut traces GC into each division. As a result, the clearances between the seven welds WL are also unequal to each other corresponding to the differences between the areas of the above-described eight gate cut traces GC.

In a cross section (not a cross section obtained by cutting, but a fracture surface obtained by fracture in a tensile test, etc.) of the engine mount 70, the high orientation portions and the low orientation portions are observed (refer to FIG. 10). The high orientation portion is formed near the surface of the bracket 700 (that is, near the mold surface of the cavity 292 in the mold 1) and near the weld WL. On the other hand, the low orientation portion is formed at a distance from the weld WL inside the engine mount 70.

In the high orientation portion, the glass fibers are suitably oriented. As a result, the glass fibers are fluffed on the cross section of the high orientation portion. On the other hand, the orientation of the glass fibers is lower in the low orientation portion than in the high orientation portion. Therefore, the glass fibers are less fluffed on the cross section of the low orientation portion compared with the cross section of the high orientation portion.

As described above, the engine mount 70 of the present embodiment has at least one of the following aspects. A plurality of the gate cut traces GC are formed. The areas of the plurality of gate cut traces GC are unequal to each other. A plurality of the welds WL are formed. The clearances between pairs of the adjacent welds WL are unequal to each other. The width of the clearance between the welds WL corresponds to the size of the area of the gate cut trace GC. At least the high orientation portion is observed in a cross section (fracture surface) substantially perpendicular to the direction in which the welds WL extend.

### Advantageous Effects

With respect to portions having common configurations, the resin molding method, the engine mount 70, and the mold 1 of the present embodiment have the same advantageous effects as the resin molding method, the resin molded product, and the mold of the first embodiment. In addition, according to the engine mount 70 of the present embodiment, the strength of the bracket 700, and thus, the strength of the engine mount 70 can be increased.

### Tenth Embodiment

A resin molding method, a resin molded product, and a mold according to a tenth embodiment of the present invention are different from the resin molding method, the resin molded product, and the mold of the first embodiment in that the seven baffle members are juxtaposed at substantially even clearances. Therefore, only the differences will be mainly described here.

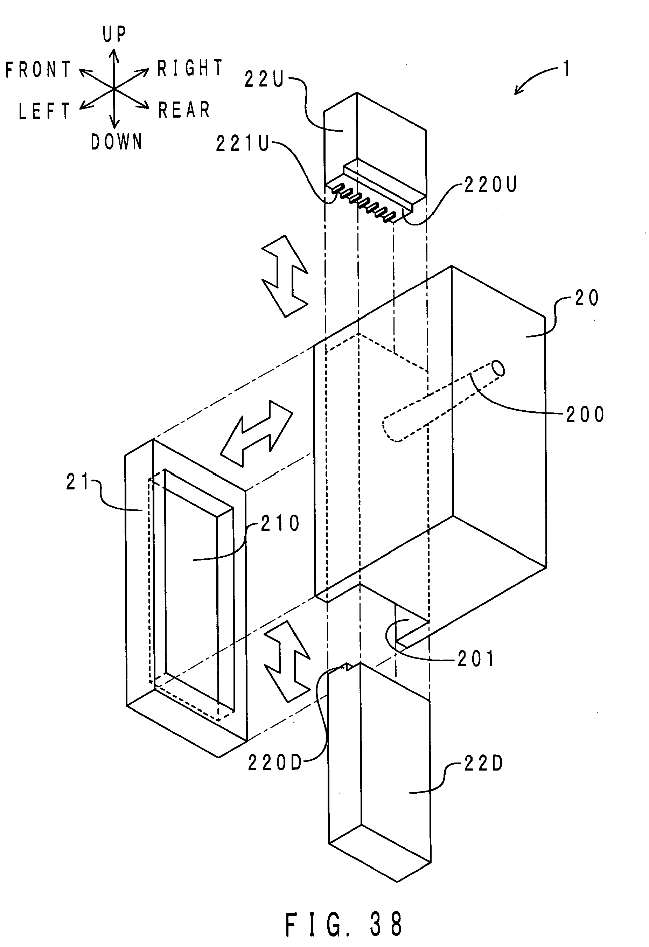

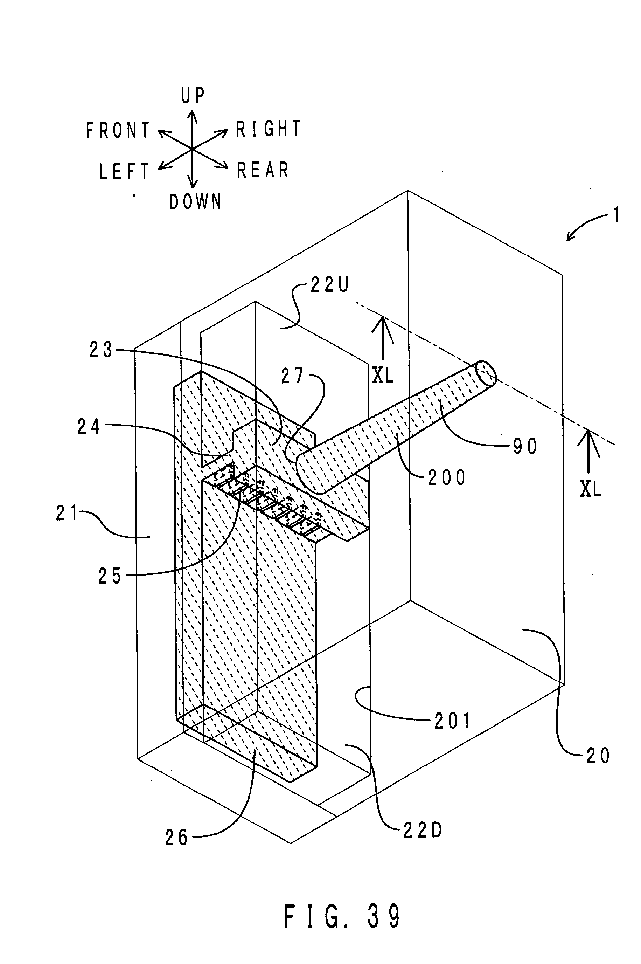

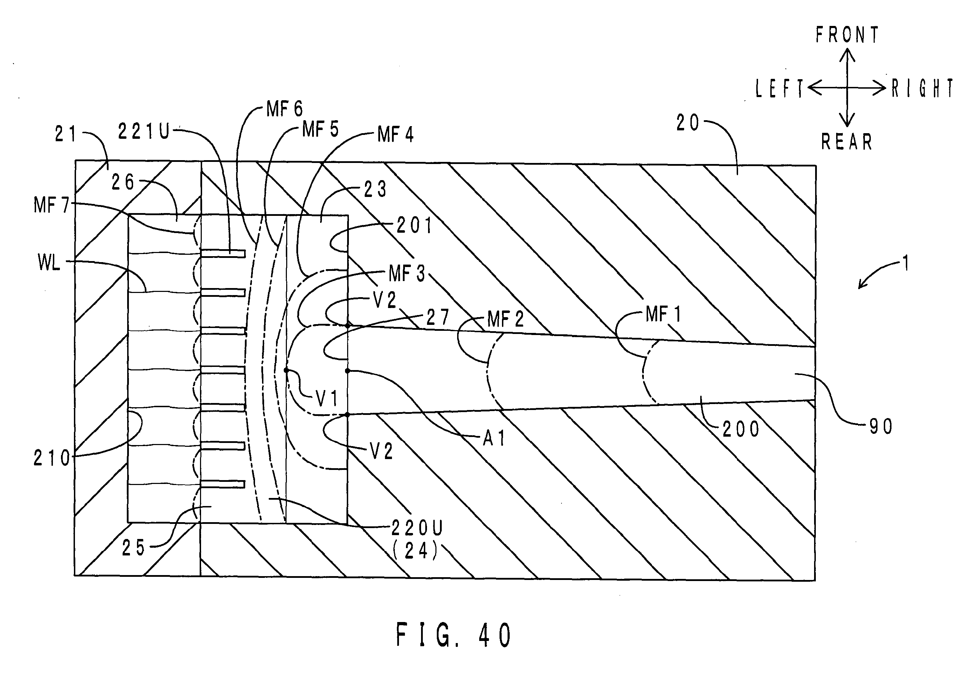

FIG. 38 shows a perspective view of the mold of the present embodiment in the mold open state. Note that portions corresponding to those in FIG. 1 are denoted by the same reference symbols. FIG. 39 shows a perspective view of the same mold in the mold clamped state. Note that portions corresponding to those in FIG. 2 are denoted by the same reference symbols. FIG. 40 shows a cross-sectional view in the direction of arrows XL-XL of FIG. 39.

As shown in FIGS. 38 to 40, the seven baffle members 221U are arranged at substantially even clearances in the front-rear direction. The seven baffle members 221U are arranged on the downstream side (left side) of the upstream end (right end) of a neck portion 24, that is, orifice members 220U. The eight gates 25 are partitioned by the seven baffle members 221U. The gate widths (front-rear lengths) of the eight gates 25 are substantially equal to each other.

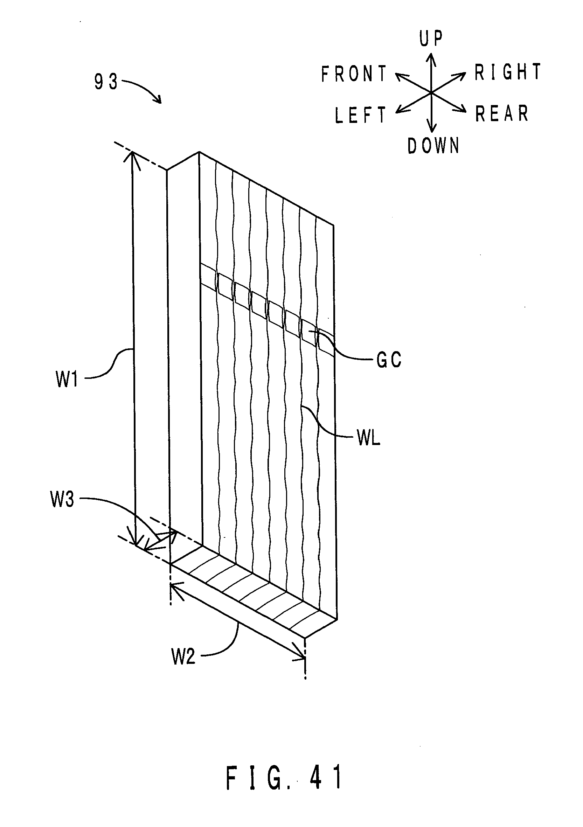

FIG. 41 shows a perspective view of the resin molded product of the present embodiment. Note that portions corresponding to those in FIG. 9 are denoted by the same reference symbols. Note also that the resin molded product 93 shown in FIG. 41 is only schematic, and depending on the resin molding method and subsequent processing, there may be a case in which the welds WL, gate cut traces GC, and contrasts between high orientation portions and low orientation portions (refer to FIG. 10) cannot be identified in the resin molded product 93. In addition, the direction or range in which the welds WL extend may be different.

As shown in FIG. 41, the resin molded product 93 of the present embodiment has a rectangular plate shape elongated in the up-down direction. Specifically, the resin molded product 93 has an up-down length W1 of 130 mm, a front-rear length W2 of 50 mm, and a left-right length W3 of 12 mm.

The seven welds WL and the eight gate cut traces GC are formed on the surface of the resin molded product 93. The eight gate cut traces GC have rectangular shapes. The eight gate cut traces GC are formed in a portion of the right surface of the resin molded product 93, higher than the center thereof in the up-down direction. The eight gate cut traces GC are arranged substantially in a row in the front-rear direction. The eight gate cut traces GC have substantially the same area as each other.

The seven welds WL have line shapes extending in the up-down direction. The seven welds WL partition the eight gate cut traces GC into each division. The clearances between the seven welds WL are substantially equal to each other.

In a cross section (not a cross section obtained by cutting, but a fracture surface obtained by fracture in a bending test, etc.) of the resin molded product 93, the high orientation portions and the low orientation portions are observed, as shown in FIG. 10. The high orientation portion is formed near the surface of the resin molded product 93 (that is, near the mold surface of the cavity 26 in the mold 1 shown in FIG. 39) and near the weld WL. On the other hand, the low orientation portion is formed at a distance from the weld WL inside the resin molded product 93.

In the high orientation portion, the glass fibers are favorably oriented in the up-down direction. As a result, the glass fibers are fluffed on the cross section of the high orientation portion. On the other hand, the orientation of the glass fibers is lower in the low orientation portion than in the high orientation portion. Therefore, the glass fibers are less fluffed on the cross section of the low orientation portion compared with the cross section of the high orientation portion.

As described above, the resin molded product 93 of the present embodiment has at least one of the following aspects. A plurality of the gate cut traces GC are formed. The areas of the plurality of gate cut traces GC are substantially equal to each other. A plurality of the welds WL are formed. The clearances between pairs of the adjacent welds WL are substantially equal to each other. At least the high orientation portion is observed in a cross section (fracture surface) substantially perpendicular to the direction in which the welds WL extend.

With respect to portions having common configurations, the resin molding method, the resin molded product 93, and the mold 1 of the present embodiment have the same advantageous effects as the resin molding method, the resin molded product, and the mold of the first embodiment.

In addition, according to the resin molding method and the mold 1 of the present embodiment, the variation in the flow rate of the molten resin can be corrected in two stages, that is, at the upstream end of the orifice members 220U and 220D and at the baffle members 221U in this order from the upstream side to the downstream side. Therefore, the variation in the flow rate of the molten resin can be reduced even if the clearances between pairs of the adjacent baffle members 221U in the front-rear direction are substantially equal to each other. Consequently, the orientation of the glass fibers in the injection process can be improved. Moreover, the resin molded product 93 can be reinforced in the direction of orientation of the glass fibers.

### Other Embodiments

The embodiments of the resin molding method, the resin molded product, and the mold of the present invention have been described above. However, embodiments are not particularly limited to those described above. The invention can be put into practice in various modified or improved modes that can be carried out by those skilled in the art.

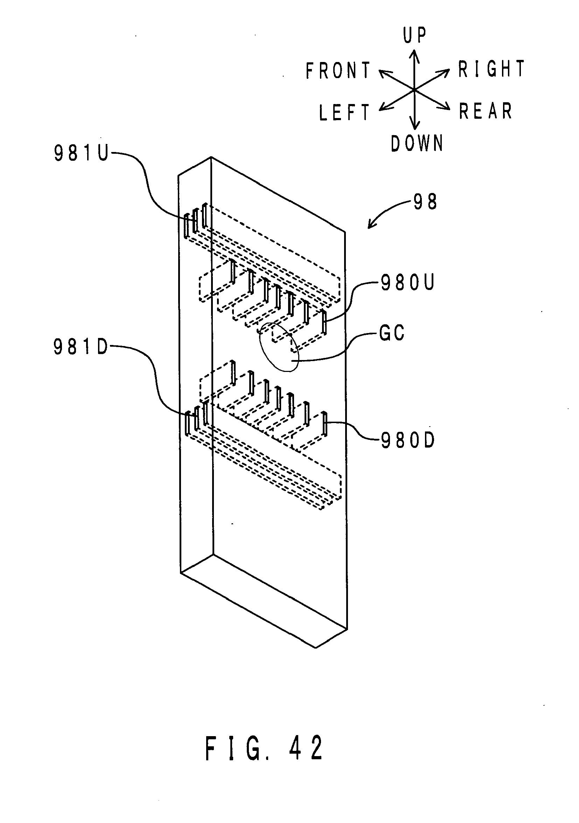

For example, the resin molding method and the mold 1 of the third embodiment (refer to FIGS. 12 to 16) and the resin molding method and the mold 1 of the eighth embodiment (refer to FIGS. 29 to 33) may be combined. FIG. 42 shows a perspective view of a resin molded product in the case in which the third embodiment and the eighth embodiment are combined.

As shown in FIG. 42, baffle member traces 980U, 980D, 981U, and 981D are formed in a resin molded product 98. Note that welds are omitted from illustration. The baffle member traces 980U and 980D penetrate the resin molded product 98 in the left-right direction. The baffle member traces 980U and 980D are juxtaposed in the front-rear direction. The baffle member traces 981 U and 981D penetrate the resin molded product 98 in the front-rear direction. The baffle member traces 981U and 981D are juxtaposed in the left-right direction. In a cross section (fracture surface) of the resin molded product 98 of the present embodiment, a high orientation portion is observed substantially in a grid shape (refer to FIG. 10).

The type of base material of the molten resin is not particularly limited. For example, polyethylene, polypropylene, polystyrene, acrylonitrile-butadiene-styrene resin, polyacetal, polyamide, polycarbonate, modified polyphenylene ether, polybutylene terephthalate, polyethylene terephthalate, or polyphenylene sulfide can be used.

The type of filler of the molten resin is not also particularly limited. For example, carbon fiber, aramid fiber, boron fiber, alumina fiber, metallic fiber, silicon carbide fiber, wollastonite, whisker, kaolinite, talc, mica, montmorillonite, clay, or carbon nanotube can be used.

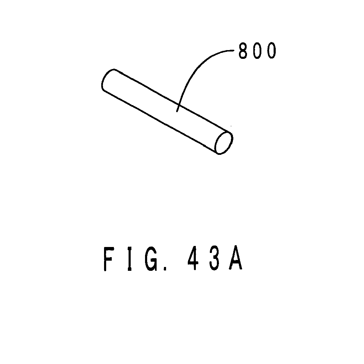

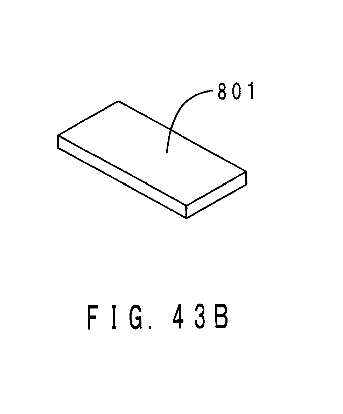

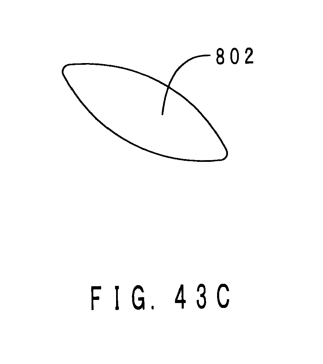

The shape of the filler is not also particularly limited. A fiber type filler 800 may be used as shown in FIG. 43A. A thin-plate type filler 801 may also be used as shown in FIG. 43B. An ellipsoid type filler 802 may also be used as shown in FIG. 43C. That is, the filler needs only to have an anisotropic shape.

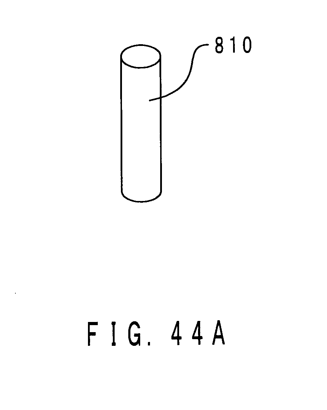

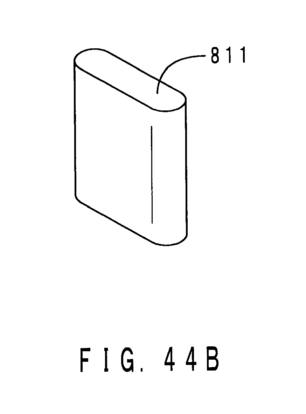

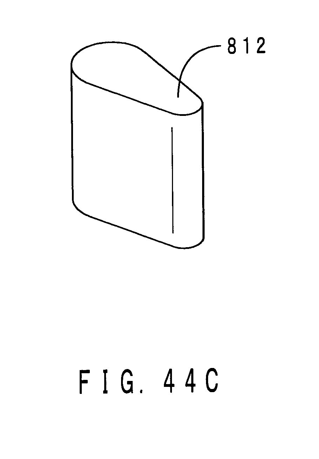

The shape of a baffle member is also not particularly limited. A baffle member 810 with a substantially perfect circle cross section may be used as shown in FIG. 44A.
A baffle member 811 with a long circular cross section may also be used as shown in FIG. 44B. A baffle member 812 with a waterdrop-shaped cross section may also be used as shown in FIG. 44C. In addition, these baffle members 810 to 812 may be used as flow regulating members. It is preferable to have the longitudinal directions of the baffle members and the flow regulating members substantially coincide with the flow path direction. By this, problems are less likely to occur to the baffle members and the flow regulating members that are caused by injection pressure of the molten resin during the injection process. Moreover, the number of the baffle members and the flow regulating members arranged and the number of divisions of the mold when it is open are not also particularly limited. The material of the mold is not also particularly limited. The positions, shapes, and number of the gates arranged in the mold are not also particularly limited.

Furthermore, the molding conditions in the resin molding method of the present embodiment are not also particularly limited. For example, the cylinder temperature and the mold temperature of the molding machine may be appropriately set depending on the characteristics of the molten resin used and on the specifications of the resin molded product. In addition, if the baffle members are arranged in the cavity, the baffle members may remain in the resin molded product after molding. By this, the mold has a simple structure.

Although the baffle members 221 U are arranged along the left edge (downstream end) of the orifice members 220U and 220D in the tenth embodiment, the baffle members 221 U may be independently arranged on the downstream side of the orifice members 220U and 220D as shown in FIG. 1.

### Examples

### Test 1

First, a bending strength measurement test conducted on the resin molded products of the present invention will be described.

### Samples

A sample of example 1 represents the resin molded product 93 of the first embodiment (refer to FIG. 9). The size of the sample is also the same as that of the resin molded product 93. That is, the sample has an up-down length W1 of 130 mm, a front-rear length W2 of 50 mm, and a left-right length W3 of 12 mm.

A sample of example 2 represents the resin molded product 94 of the third embodiment (refer to FIG. 16). The size of the sample is the same as that of the sample of the example 1.

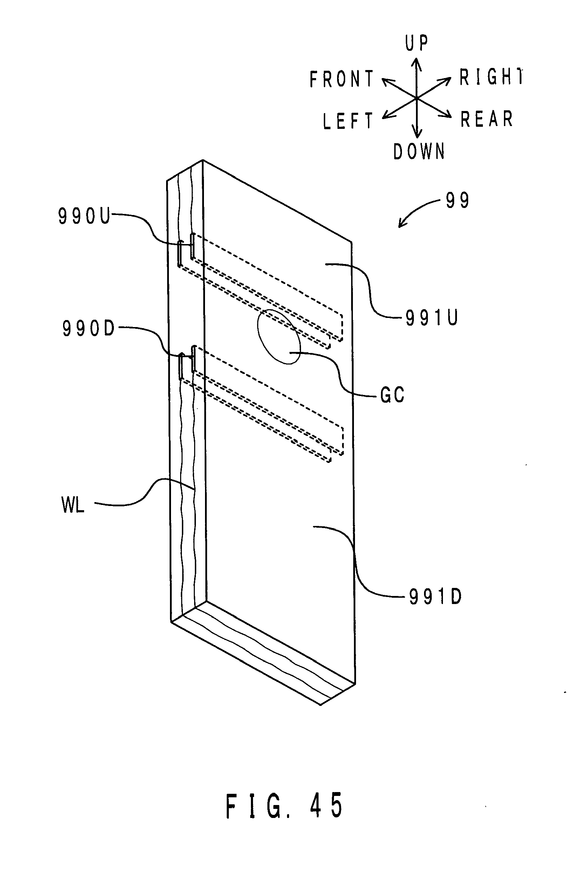

A sample of example 3 is a resin molded product molded according to the resin molding method of the eighth embodiment. FIG. 45 shows a perspective view of the sample of the example 3. Note that portions corresponding to those in FIG. 33 are denoted by the same reference symbols. As shown in FIG. 45, baffle member traces 990U and 990D are formed in a resin molded product 99. Two of the baffle member traces 990U are juxtaposed in the left-right direction. Similarly, two of the baffle member traces 990D are juxtaposed in the left-right direction. The size of the sample of the example 3 is the same as that of the sample of the example 1.

A sample of example 4 represents the resin molded product 94 of the fourth embodiment (refer to FIG. 18). The size of the sample is the same as that of the sample of the example 1.

A sample of example 5 represents the resin molded product 93 of the tenth embodiment (refer to FIG. 41). The size of the sample is the same as that of the sample of the example 1.

A sample of comparative example 1 is a resin molded product molded by a related art resin molding method, that is, a resin molded product that is molded without using a baffle member. Therefore, welds or baffle member traces are not formed in the sample of the comparative example. The size of the comparative sample 1 is the same as that of the sample of the example 1.

### Test Method

A three-point bending test was used to measure the bending strength. A supporting table and indenter according to JIS K 7171 were used. The distance between supporting points was set to 80 mm. The test speed was 2 mm per minute. Note that each sample of the examples and the comparative example was set on the supporting table such that the right surface shown in each figure faces upward. The gate cut traces GC were placed with a deviation from the indenter. In addition, the portion in which the welds WL are formed was placed so as to correspond to the indenter.

### Test Results

Test results are shown in Table 1.

**TABLE. 1**

| SAMPLES | EXAMPLE 1 | EXAMPLE 2 | EXAMPLE 3 | EXAMPLE 4 | EXAMPLE 5 | COMPARATIVE EXAMPLE 1 |
|---|---|---|---|---|---|---|
| BENDING STRENGTH (%) | 119 | 116 | 114 | 111 | 124 | 100 |

As shown in Table 1, assuming the bending strength for the comparative example 1 as 100%, the bending strength for the example 1 was 119%. The bending strength for the example 2 was 116%. The bending strength for the example 3 was 114%. The bending strength for the example 4 was 111 %. The bending strength for the example 5 was 124%.

From the test results, it has been found that any of the examples 1 to 5 shows a higher bending strength than that of the comparative example 1 by 10% or more. It has also been found that the sample of the example 5 (refer to FIG. 41), that is, the sample in which the welds WL are juxtaposed in the front-rear direction at substantially even clearances and in which no baffle member traces are formed has the highest bending strength. It has also been found that the sample of the example 1 (refer to FIG. 9), that is, the sample in which the welds WL are juxtaposed in the front-rear direction at uneven clearances and in which no baffle member traces are formed has the second highest bending strength. It has also been found that the sample of the example 2 (refer to FIG. 16), that is, the sample in which the welds WL are juxtaposed in the front-rear direction at uneven clearances and in which the baffle member traces penetrate in the left-right direction has the third highest bending strength. It has also been found that the sample of the example 3 (refer to FIG. 45), that is, the sample in which the welds WL and the baffle member traces 990U and 990D are juxtaposed in the left-right direction (in the direction of thickness) at substantially even clearances has the fourth highest bending strength. It has also been found that the sample of the example 4 (refer to FIG. 18), that is, the sample in which the welds WL are juxtaposed in the front-rear direction at uneven clearances and in which the baffle member traces do not penetrate in the left-right direction has the fifth highest bending strength.

### Test 2

Next, a breaking strength measurement test conducted on the resin molded products of the present invention will be described.

### Samples

A sample of example 6 represents the engine mount 70 of the ninth embodiment (refer to FIG. 37). The size of the sample is also the same as that of the engine mount 70. That is, the sample has an up-down length W1 of 110 mm, a front-rear length W2 of 100 mm, and a left-right length W3 of 50 mm.

A sample of comparative example 2 is an engine mount molded by a related art resin molding method, that is, an engine mount that is molded using an ordinary single-point gate without using the slide cores 22U and 22D for baffle members.
Therefore, welds are not formed in the sample of the comparative example 2. Also, a single gate cut trace is formed in the sample of the comparative example 2. The dimensions of the comparative sample 2 are the same as those of the sample of the example 6.

### Test Method and Test Results

The measurement of the breaking strength was performed in accordance with the following procedure. First, the engine mount 70 was fixed to a jig. Next, a metal round bar was inserted into the cylindrical portion 296b. Then, the round bar was pulled upward in FIG. 37. The rising speed of the round bar was 20 mm per minute. The stress when the engine mount 70 broke was determined as a breaking strength. Assuming the breaking strength for the comparative example 2 as 100%, the breaking strength for the example 6 was 117%. From the test results, it has been found that the example 6 shows a higher breaking strength than that of the comparative example 2.

## Claims

1. A resin molding method for molding a resin molded product (93) from a molten resin (91) containing a base material and an anisotropic filler (910) dispersed in the base material, **characterized in that** the resin molding method comprises:
a mold clamping process that clamps a mold (1) so as to form a resin flow path (90) having a gate (25) arranged on a downstream side of a nozzle of a molding machine and having a cavity (26) arranged on the downstream side of the gate (25) and to arrange a baffle member (221U, 221D) in the resin flow path (90);
an injection process that injects the molten resin (91) from the nozzle into the resin flow path (90), and to correct a variation in flow rate of the molten resin (91) on an upstream side of the baffle member (221U, 221D) and to form a weld (WL) on a downstream side of the baffle member (221U, 221D) by using the baffle member (221U, 221D) obstructing a flow of the molten resin (91) so that orientation of the filler (910) in the direction in which the weld (WL) extends is improved; and
a mold opening process that opens the mold (1) so as to take out the resin molded product (93) formed by solidifying the molten resin (91).

2. The resin molding method according to claim 1, wherein:
a plurality of the baffle members (221U, 221D) are juxtaposed in a direction intersecting with a flow path direction of the resin flow path (90);
on the upstream side of the baffle members (221U, 221D), the flow of the molten resin (91) includes a fastest portion (V1) in which the flow rate in the flow path direction is the largest and a slowest portion (V2) in which the flow rate in the flow path direction is the smallest; and
clearances (B2-B7) between at least parts of pairs of the adjacent baffle members (221U, 221D) are set such that a clearance (B4, B5) at a portion nearest to the fastest portion (V1) is smaller than that at portion nearest to the slowest portion (V2).

3. The resin molding method according to claim 2, wherein the portion of the resin flow path (90) in which the plurality of baffle members (221U, 221D) are arranged has a length of 20 mm or more in the direction of juxtaposition of the plurality of baffle members (221U, 221D).

4. The resin molding method according to claim 1, wherein:
a plurality of the baffle members (221U, 221D) are juxtaposed in a direction intersecting with a flow path direction of the resin flow path (90) and clearances between at least parts of pairs of the adjacent baffle members (221U, 221D) are set so as to be substantially equal to each other; and
on the upstream side of the plurality of baffle members (221U, 221D) in the resin flow path (90), at least an upstream end of an orifice member (220U, 220D) that extends in the direction of juxtaposition of the plurality of baffle members (221U, 221D) and that corrects the variation in flow rate of the molten resin (91) prior to the baffle members (221U, 221D) is arranged.

5. The resin molding method according to claim 1, wherein:
a plurality of the baffle members (620FU, 620RU, 620FD, 620RD) are juxtaposed in a direction intersecting with a flow path direction of the resin flow path (90) and clearances (H2, H3) between at least parts of pairs of the adjacent baffle members (620FU, 620RU, 620FD, 620RD) are set so as to be substantially equal to each other; and
the portion of the resin flow path (90) in which the plurality of baffle members (620FU, 620RU, 620FD, 620RD) are arranged has a length of less than 20 mm in the direction of juxtaposition of the plurality of baffle members (620FU, 620RU, 620FD, 620RD).

6. The resin molding method according to any one of claims 1 to 5, wherein:
the resin flow path (90) has an expanding portion (27) with a flow path cross-sectional area that increases from an upstream side to a downstream side; and
the baffle member (221U, 221D) is arranged on a downstream side of the expanding portion (27).

7. The resin molding method according to claim 6, wherein the expanding portion (27) and the baffle member (221U, 221D) are arranged on an upstream side of the gate (25).

8. The resin molding method according to claim 7, wherein an orifice member (220U, 220D) is arranged between the expanding portion (27) and the baffle members (221U, 221D), the orifice member (220U, 220D) extending in the direction of juxtaposition of the plurality of baffle members (221U, 221D) and correcting, prior to the baffle members (221U, 221D), the variation in flow rate caused by spread of the flow of the molten resin (91) while passing through the expanding portion (27).

9. The resin molding method according to claim 7 or 8, wherein:
the gate (25) is connected to the cavity (26) in a direction intersecting with a direction in which a communicating portion of the gate (25) extends in the cavity (26); and
the flow of the molten resin (91) branches into a plurality of flows when the molten resin (91) flows from the gate (25) into the cavity (26).

10. The resin molding method according to any one of claims 1 to 6, wherein:
the resin molded product (94) includes a reinforced portion (941U, 941D) having a desired strength;
the cavity (36) includes a molding portion (360U, 360D) for reinforced portion that molds the reinforced portion (941U, 941D); and
the baffle member (32U, 32D) is arranged on an upstream side of the molding portion (360U, 360D) for reinforced portion provided in the cavity (36).

11. The resin molding method according to any one of claims 1 to 10, wherein:
the resin flow path (90) has, on the downstream side of the baffle member (42), a changing portion (411U, 411D) in which a flow path cross-sectional area changes; and
a flow regulating member (43M, 43D) that corrects a disturbance in the flow of the molten resin (91) caused by passing through the changing portion (411U, 411D) is arranged on a downstream side of the changing portion.

12. A resin molded product (93) molded by the resin molding method according to any one of claims 1 to 11, the resin molded product (93) comprising a plurality of the welds (WL).

13. A mold (1) used for the resin molding method according to any one of claims 1 to 11, the mold (1) comprising the resin flow path (90) and the baffle member (221U, 221D).

14. The mold (1) according to claim 13, further comprising a slide core (22U, 22D) for baffle member that has the baffle member (221U, 221D).
